(19)

Europäisches
Patentamt
European
Patent Office
Office européen
des brevets

(11)     **EP 3 258 430 A1**

(12)     **EUROPEAN PATENT APPLICATION**
published in accordance with Art. 153(4) EPC

(43) Date of publication:
**20.12.2017 Bulletin 2017/51**

(21) Application number: **16748719.8**

(22) Date of filing: **04.02.2016**

(51) Int Cl.:
**G06Q 10/06** [(2012.01)]

(86) International application number:
**PCT/CN2016/073559**

(87) International publication number:
**WO 2016/127918 (18.08.2016 Gazette 2016/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 13.02.2015 CN 201510079087
26.02.2015 CN 201510088837
04.03.2015 CN 201510097280
05.06.2015 CN 201510303334
20.07.2015 CN 201510428931
20.08.2015 CN 201510516164
02.11.2015 CN 201510737743
24.12.2015 CN 201510990222
21.01.2016 CN 201610046769

(71) Applicant: **Beijing Didi Infinity Technology and Development Co., Ltd.**
**Beijing 100193 (CN)**

(72) Inventors:
• **LI, Shengwei**
**Beijing 100193 (CN)**
• **WEN, Yigang**
**Beijing 100193 (CN)**
• **ZHUO, Chengxiang**
**Beijing 100193 (CN)**
• **HU, Tao**
**Beijing 100193 (CN)**
• **MENG, Yang**
**Beijing 100193 (CN)**
• **ZHANG, Lingyu**
**Beijing 100193 (CN)**
• **LU, Haiyang**
**Beijing 100193 (CN)**
• **LI, You**
**Beijing 100193 (CN)**
• **LI, Yulong**
**Beijing 100193 (CN)**

(74) Representative: **Gosnall, Toby**
**Barker Brettell LLP**
**100 Hagley Road**
**Edgbaston**
**Birmingham**
**B16 8QQ (GB)**

(54)     **TRANSPORT CAPACITY SCHEDULING METHOD AND SYSTEM**

(57)     A method of scheduling services is disclosed. The method may include: acquiring scheduling related information; determining a scheduling strategy according to the scheduling related information; and sending the scheduling strategy to at least one of an order initiator or an order recipient, wherein the scheduling related information includes but is not limited to historical order information, real-time order information, historical weather information, real-time weather information, future weather information, traffic information, historical information of a service provider, real-time information of a service provider, and vehicle information collected by a vehicle-mounted diagnosis system. The scheduling strategy may include, but is not limit to a supply and demand density push strategy, a hotspot characteristic push strategy, a statistical characteristic push strategy, an order push strategy, an order adjustment strategy, or a prompt information push strategy.

**EP 3 258 430 A1**

**100**

FIG. 1

**Description**

**CROSS-REFERENCE TO RELATED DISCLOSURE**

This application claims priority to Chinese Patent Application No. 201510079087.0, filed on February 13, 2015, Chinese Patent Application No. 201510097280.7, filed on March 4, 2015, Chinese Patent Application No. 201510303334.0, filed on June. 5, 2015, Chinese Patent Application No. 201510516164.4, filed on August 20, 2015, Chinese Patent Application No. 201510088837.0, filed on February 26, 2015, Chinese Patent Application No. 201510428931.6, filed on July 20, 2015, Chinese Patent Application No. 201510737743.1, filed on November 2, 2015, Chinese Patent Application No. 201510990222.7, filed on December 24, 2015, and Chinese Patent Application No. 201610046769.6, filed on January 21, 2016, the entire contents of which are hereby incorporated by reference.

**TECHNICAL FIELD**

This disclosure generally relates to a transport capacity scheduling method and system, and more particularly, to a method and system for transport capacity scheduling using mobile network technologies and data processing technologies.

**BACKGROUND**

Currently, an application of on-demand service is increasingly popular. Taking traffic service as an example, a transport capacity scheduling may be performed by a system of on-demand service in order to meet passenger's travel demand and driver's demand for receiving an order. In order to improve efficiency of a transport capacity system, it is necessary to make a flexible and practical mechanism of transport capacity scheduling. A scientifically scheduled transport capacity can balance transport supply and demand, meet common needs of both supplier and demander, and further improve user experience of traffic service.

**SUMMARY**

In one aspect of the present disclosure, a system for scheduling services is provided. The system may include a tangible computer readable storage medium and a processor. The computer readable storage medium may store executable modules. The processor may execute the executable modules stored in the computer readable storage medium. The executable modules may include an order information extraction module, a user information extraction module, an environmental information, a calculation module, and a scheduling module. The order information extraction module, the user information extraction module and the environmental information may be configured to acquire scheduling related information. The calculation module may be configured to determine a scheduling strategy according to the scheduling related information. The scheduling module may be configured to send the scheduling strategy. The executable modules may also include one or more other modules, e.g., an order assignment module, etc.

In another aspect of the present disclosure, a method of scheduling services is provided. The method of transport capacity scheduling may include acquiring scheduling related information; determining a scheduling strategy according to the scheduling related information; and sending the scheduling strategy to at least one of an order initiator or an order recipient.

In another aspect of the present disclosure, a method for providing services based on location information may be provided. The method may include sending the location information to a system for scheduling services by the terminal; receiving, by the terminal, a scheduling strategy generated by the system based on the location information. According to some embodiments of the present disclosure, the terminal may include a passenger terminal and a driver terminal. According to some embodiments of the present disclosure, a form of displaying the scheduling strategy may include voice, text, images, and video. According to some embodiments of the present disclosure, the displaying of the scheduling strategy using images may include displaying at least one of different supply and demand densities, densities of orders, number of orders and number of users based on a map of the terminal.

In another aspect of the present disclosure, a tangible and non-transitory computer readable storage medium is provided. And information can be stored in the medium. When the information is accessed by a computer, the computer can perform a method of scheduling services. The method of scheduling services may include acquiring scheduling related information; determining a scheduling strategy according to the scheduling related information; and sending the scheduling strategy to at least one of an order initiator or an order recipient.

According to some embodiments of the present disclosure, the scheduling related information may include historical order information, real-time order information, historical weather information, real-time weather information, future weather information, traffic information, historical information of a service provider, real-time information of a service provider, or vehicle information collected by a vehicle-mounted diagnosis system.

According to some embodiments of the present disclosure, the determination of a scheduling strategy may include determining an actual scheduling amount according to the scheduling related information; and determining a scheduling strategy according to the actual scheduling amount.

According to some embodiments of the present disclosure, the determination of the actual scheduling amount according to the scheduling related information may include determining a region distribution of one or more order recipients; calculating a potential scheduling amount of a region based on the region distribution; calculating a potential transaction volume of the region based on the potential scheduling amount of the region; calculating a maximum sum of increments of potential transaction volumes based on the potential transaction volume of the region; and determining the actual scheduling amount of the region based on the maximum sum of increments of potential transaction volumes.

According to some embodiments of the present disclosure, the determination of the actual scheduling amount according to the scheduling related information may include performing a region division based on geographic information; calculating a current demand amount of service providers related to the region division; calculating an expected demand amount of the service provides related to the region division; and determining the actual scheduling amount based on the current demand amount and the expected demand amount.

According to some embodiments of the present disclosure, the scheduling strategy may include a supply and demand density push strategy, a hotspot characteristic push strategy, a statistical characteristic push strategy, an order push strategy, an order adjustment strategy and/or a prompt information push strategy.

According to some embodiments of the present disclosure, the determination of the supply and demand density push strategy may include acquiring a number of predictive orders at a specific time and in a specific region; determining a number of service providers that are likely to receive an order at the specific time and in the specific region; and determining the supply and demand density of the specific region based on the number of predictive orders and the number of service providers.

According to some embodiments of the present disclosure, the determination of the statistical characteristic push strategy may include extracting location information of a service provider according to the scheduling related information; extracting information of a plurality of orders that are associated with locations near a location of the service provider based on the location information of the service provider; determining, for each of the plurality of orders, at least one iconic location; classifying the plurality of orders into a plurality of groups based on the iconic locations and time information of the orders; and calculating statistical characteristics of the orders in each of the plurality of groups.

According to some embodiments of the present disclosure, the method and system of transport capacity scheduling may further include selecting a group of real-time orders corresponding to an iconic location based on the iconic location.

According to some embodiments of the present disclosure, the determination of the order push strategy may include determining a first region associated with a first ratio of order demand to service ability of a service provider and a second region associated with a second ratio of order demand to service ability of the service provider, wherein the first ratio is less than a first threshold, and wherein the second ratio is greater than a second threshold; for each order in the first region, selecting at least a first user for presentation of the order; and for each user in the second region, selecting at least one order to be presented to at least a second use.

According to some embodiments of the present disclosure, the determination of the order adjustment strategy may include: extracting weather information during a first preset time period in a target region according to the scheduling related information; extracting order information during a second preset time period in the target region and information of service providers at a current time according to the scheduling related information; and determining the order adjustment strategy according to the weather information, the order information in the second preset time period, and the information of the service providers.

## BRIEF DESCRIPTION OF THE DRAWINGS

The present disclosure is further described in terms of exemplary embodiments. These exemplary embodiments are described in detail with reference to the drawings. The drawings are not to scale. These embodiments are non-limiting schematic embodiments, in which like reference numerals represent similar structures throughout the several views of the drawings, and wherein:

> FIG. 1 is a schematic diagram illustrating a network environmental system 100 according to some embodiments of the present disclosure.
>
> FIG. 2 is a schematic block diagram illustrating an example of a transport capacity scheduling system 110 according to some embodiments of the present disclosure.
>
> FIG. 3 is a flowchart illustrating am example of a transport capacity scheduling process according to some embodiments of the present disclosure.

FIGS. 4-A and 4-B are flowcharts illustrating examples of a method of transport capacity scheduling implemented in a user terminal according to some embodiments of the present disclosure.

FIG. 5 is a schematic block diagram illustrating a processing module 210 of a transport capacity scheduling system according to some embodiments of the present disclosure.

FIG. 6 is a schematic block diagram illustrating a processing module 210 according to some embodiments of the present disclosure.

FIGS. 7-A, 7-B, and 7-C are schematic diagrams illustrating a region division according to some embodiments of the present disclosure.

FIG. 8 is a flowchart illustrating an example method for transport capacity scheduling based on predictions of transport capacity according to some embodiments of the present disclosure.

FIG. 9 is a block diagram illustrating a processing module 210 according to some embodiments of the present disclosure.

FIG. 10 is a flowchart illustrating an example process for transport capacity scheduling based on environmental information according to some embodiments of the present disclosure.

FIG. 11 is a flowchart illustrating an example method for initiating implementation of a scheduling strategy according to some embodiments of the present disclosure.

FIG. 12 is a schematic block diagram illustrating a processing module 210 according to some embodiments of the present disclosure.

FIG. 13 is a flowchart illustrating an example process for transport capacity scheduling based on environmental information according to some embodiments of the present disclosure.

FIG. 14 is a schematic block diagram illustrating a processing module 210 according to some embodiments of the present disclosure.

FIG. 15 is a flowchart illustrating an example method of transport capacity scheduling based on transaction volume information according to some embodiments of the present disclosure.

FIG. 16 is a schematic block diagram illustrating a processing module 210 according to some embodiments of the present disclosure.

FIG. 17 is a schematic block diagram illustrating a network environment of a transport capacity scheduling system according to some embodiments of the present disclosure.

FIG. 18 is a flowchart illustrating an example method of transport capacity scheduling based on a vehicle-mount diagnosis system according to some embodiments of the present disclosure.

FIG. 19 is a flowchart illustrating an example of a matching process in a method of transport capacity scheduling based on a vehicle-mounted diagnosis system according to some embodiments of the present disclosure.

FIG. 20 is a schematic block diagram illustrating a processing module 210 according to some embodiments of the present disclosure.

FIG. 21 is a flowchart illustrating an example of a transport capacity scheduling system based on statistical information according to some embodiments of the present disclosure.

FIG. 22 is a flowchart illustrating an example of a transport capacity system based on statistical information according to some embodiments of the present disclosure.

FIG. 23 is a schematic block diagram illustrating a processing module 210 according to some embodiments of the present disclosure.

FIG. 24 is a flowchart illustrating an example of a transport capacity scheduling system based on supply and demand density information according to some embodiments of the present disclosure.

FIG. 25 is a schematic block diagram illustrating a processing module 210 according to some embodiments of the present disclosure.

FIG. 26 is a flowchart illustrating an example method of transport capacity scheduling based on order interactive information and order distribution information according to some embodiments of the present disclosure

FIG. 27 is a schematic block diagram illustrating a processing module 210 according to some embodiments of the present disclosure.

FIG. 28 is a flowchart illustrating an example of a transport capacity scheduling system based on supply and demand characteristic according to some embodiments of the present disclosure.

FIG. 29 illustrates a structure of a mobile device that is configured to implement a specific system disclosed in the present disclosure; and

FIG. 30 illustrates a structure of a computing device that is configured to implement a specific system disclosed in the present disclosure.

## DETAILED DESCRIPTION

In order to illustrate the technical solutions related to the embodiments of the present disclosure, brief introduction of the drawings referred to in the description of the embodiments is provided below. Obviously, drawings described below are only some examples or embodiments of the present disclosure. Those having ordinary skills in the art, without further creative efforts, may apply the present disclosure to other similar scenarios according to these drawings. Unless stated otherwise or obvious from the context, the same reference numeral in the drawings refers to the same structure and operation.

As used in the disclosure and the appended claims, the singular forms "a," "an," and "the" include plural referents unless the content clearly dictates otherwise. It will be further understood that the terms "comprises," "comprising," "includes," and/or "including" when used in the disclosure, specify the presence of stated steps and elements, but do not preclude the presence or addition of one or more other steps and elements.

Some modules of the system may be referred to in various ways according to some embodiments of the present disclosure; however, any amount of different modules may be used and operated in a client terminal and/or a server. These modules are intended to be illustrative, not intended to limit the scope of the present disclosure. Different modules may be used in different aspects of the system and method.

According to some embodiments of the present disclosure, flow charts are used to illustrate the operations performed by the system. It is to be expressly understood that the operations above or below may or may not be implemented in order. Conversely, the operations may be performed in inverted order, or simultaneously. Besides, one or more other operations may be added to the flowcharts, or one or more operations may be omitted from the flowchart.

Embodiments of the present disclosure may be applied to different transportation systems including but not limited to land transportation, sea transportation, air transportation, space transportation, the like, or any combination thereof. A vehicle of the transportation systems may include rickshaw, travel tool, taxi, chauffeured car service, hitch, bus, rail transportation (e.g., a train, a bullet train, highspeed rail, and subway), ship, airplane, spaceship, hot-air balloon, driverless vehicle, the like, or any combination thereof. The transportation system may also include any transportation system that applies management and/or distribution, for example, a system for sending and/or receiving an express. The application scenarios of different embodiments of the present disclosure may include but is not limited to one or more webpages, browser plugins and/or extensions, client terminals, custom systems, intracompany analysis systems, artificial intelligence robots, the like, or any combination thereof. It should be understood that application scenarios of the system and method disclosed herein are only some examples or embodiments. Those having ordinary skills in the art, without further creative efforts, may apply these drawings to other application scenarios. For example, other similar user order receiving system.

The term "user," "passenger," "requester," "service requester", and "customer" in the present disclosure are used interchangeably to refer to an individual, an entity or a tool that may request or order a service. The party may be an individual or device. Also, the term "driver," "provider," "service provider," and "supplier" in the present disclosure are used interchangeably to refer to an individual, an entity, or a device that may provide a service or facilitate the providing of the service. An initiator of "order" described in the present disclosure may be a party that may require or order a service or a party that may provide a service or assist in provision of a service. Similarly, an order may be formed by the party that may require or order a service as an order initiator or by the party who may provide a service or assist in providing a service. "Order" may be an order accepted by both consumer and service provider, or by a consumer or a service provider. "Order" may be a chargeable or a free order.

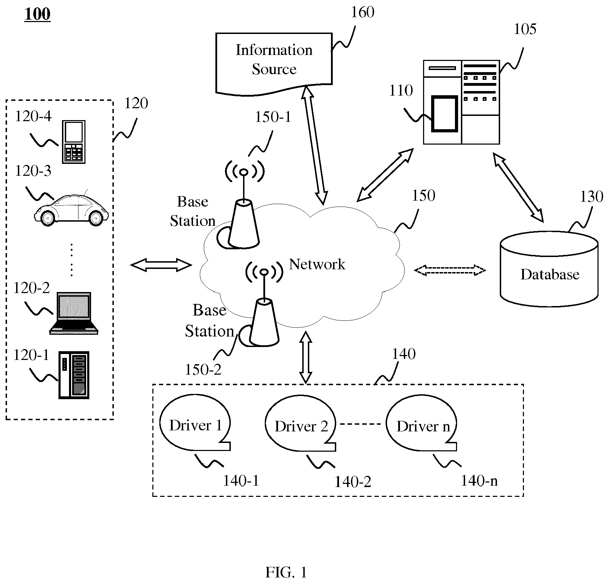

FIG. 1 is a schematic diagram illustrating a network environmental system 100 according to some embodiments of the present disclosure. The network environmental system 100 may include an on-demand service system 105, one or more passenger terminal devices 120, databases 130, driver terminal devices 140, networks 150, and information sources 160. The on-demand service system 105 may include a scheduling engine 110 (also referred to herein as a "scheduling system"). A system described in this disclosure may refer to the on-demand service system 105, the scheduling engine 110, or the scheduling system. In some embodiments, the scheduling engine 110 may be a system configured to analyze the collected information to generate an analytical result. The scheduling engine 110 may be a server or a server group connected via a wired or a wireless network. The server group may be centralized (e.g., a data center) or distributed (e.g., a distributed system). The scheduling engine 110 may be local or remote. In some embodiments, the scheduling engine 110 may access, via the network 150, data stored in the passenger terminal device 120 and/or the driver terminal device 140, the information source 160 and the database 130. The scheduling engine 110 may access data stored in the information source 160 and the database 130 directly.

Passenger and driver may be referred to as user. The user may be an individual, a tool or any other entities relating to a service order directly, e.g., a requester of the service order and a service provider of the service order. The passenger may be a service demander. In the present disclosure, "passenger", "passenger terminal" and "passenger terminal device" may be used interchangeably. The passenger may also include a user of the passenger terminal device 120. In some embodiments, the user of the passenger terminal device 120 is not the passenger himself. For example, a user A of the passenger terminal device 120 may request an on-demand service, accept an on-demand service, or receive other information or instructions sent by the on-demand service system 105 for a passenger B by using the passenger terminal device 120. The user of the passenger terminal device 120 may also be referred to as a passenger in the present disclosure. A driver may be a service provider. In the present disclosure, "driver", "driver terminal" and "driver terminal device" may be used interchangeably. The driver may also include a user of the driver terminal device 140. In some embodiments, the user of the driver terminal device 140 may not be the driver himself. For example, a user C of the driver terminal device 140 may accept an on-demand service or receive other information or instructions sent by the on-demand service system 105 for a driver D by using the driver terminal device 140. The user of the driver terminal device 140 may also be referred to as a driver in the present disclosure.

In some embodiments, the passenger terminal 120 may include but is not limited to a desktop computer 120-1, a laptop computer 120-2, a vehicle built-in device 120-3, a mobile device 120-4, the like, or any combination thereof. The vehicle built-in device 120-3 may be a carputer, etc. In some embodiments, the users may be some other smart terminals. Exemplary smart terminals may include but are not limited to a smart home device, a wearable device, a smart mobile device or any other smart devices. Exemplary smart home devices may include but are not limited to a smart lighting device, a smart electrical control device, a smart monitoring device, a smart television, a smart camera, a smart phone, a walkie-talkie, the like, or any combination thereof. Exemplary wearable devices may include but are not limited to a smart bracelet, a smart footgear, a smart glass, a smart helmet, a smart watch, a smart clothing, a smart backpack, a smart accessory, the like, or any combination thereof. Exemplary smart mobile devices may include but are not limited to a smart watch, a laptop computer 120-2, a tablet computer, a built-in device of a vehicle (e.g., a carputer, a vehicle television, etc.), a gaming device, a GPS (global positioning system) device, a point of sale (POS) device, the like, or any combination thereof. The driver terminal device 140 may include one or more similar devices.

In some embodiments, the database 130 may generally refer to a device that is capable of storing data. The database 130 may be used to store data collected from the passenger terminal device 120 and/or the driver terminal device 140, and various data utilized, generated and output by the scheduling engine 110 during its operations. The database 130 may be local or remote. The database 130 may include but is not limited to a hierarchical database, a network database, a relational database, the like, or any combination thereof. The database 130 may digitize information, and then store the digitized information in an electrical, magnetic, or optical storage device. The database 130 may be configured to store various information, such as programs and data, etc. The database 130 may be a device configured to store information in the form of electric energy, e.g., multiple memories, RAM (random access memory), a ROM (read only memory), etc. The RAM may include but is not limited to a dekatron, a selectron, a delay line memory, a Williams tube, a DRAM (dynamic random access memory), a SRAM (static random access memory), a T-RAM (thyristor random access memory), a Z-RAM (zero-capacitor random access memory) the like, or any combination thereof. The ROM may include but is not limited to a magnetic bubble memory, a magnetic button line memory , a thin film memory, a magnetic plated wire memory, a magnetic-core memory, a magnetic drum memory, a CD-ROM, a hard disk, a tape, a NVRAM (nonvolatile memory), a phase change memory, a magnetic resistance RAM, a ferroelectric RAM, a nonvolatile SRAM, a flash memory, an electronic erasable rewritable ROM, an erasable programmable ROM, a programmable ROM, a mask ROM, a floating gate connected RAM, a Nano-RAM, a race-track memory, a variable resistive RAM and a programmable metallization memory, the like, or any combination thereof. The database 130 may be a device configured to store information utilizing magnetic energy, e.g., a hard disk, a soft disk, a tape, a magnetic core memory, a magnetic bubble memory, a USB flash disk, a flash disk, etc. The database 130 may be a device configured to store information by optical method, e.g., a compact disc (CD), a digital video disc (DVD), etc. The database 130 may be a device configured to store information by magneto-optical method, e.g., a magneto-optical disk, etc. The method of accessing the database 130 may include random access, serial access, read-only access, the like, or any combination thereof. The database 130 may be an impermanent memory or a permanent memory. It should be noted that the above description of storage devices is provided for the purpose of illustration, and not intended to limit the scope of the present disclosure.

The database 130 may be configured to directly connect with the network 150, a part or all of the on-demand service system 105 (e.g., the scheduling engine 110), or a combination of both. In some embodiments, the database 130 may be configured in the background of the on-demand service system 105. In some embodiments, the database 130 may be a stand-alone device and may directly connect with the network 150. When the database 130 is connected with the network 150, the passenger terminal device 120 and/or the driver terminal device 140 may access the information of the database 130 via the network 150. In some embodiments, the database 130 may include any device that is capable of storing data. The database 130 may be used to store data that are collected from the passenger terminal device 120 and/or the driver terminal device 140 and/or the information source 160, and the various data generated by the scheduling engine 110 during its operations. The database 130 or any other storage devices in the system may refer to any media with a read/write function. The database 130 or the other devices in the system may be an internal device of the system 105 or an external device connected to the system 105. The connection between the database 130 and other storage devices in the system may be wired or wireless. The connection between the database 130 and other modules in the system may be wired or wireless. The network 150 may provide a channel for information exchange.

Apart or all of the on-demand service system 105 (e.g., the scheduling engine 110) and/or the user terminal 120/140, and the database 130 may be connected in different ways. The access permissions of each device to the database 130 may be limited. For example, a part or all of the on-demand service system 105 (e.g., the scheduling engine 110) may have the highest level of access permission for the database 130, e.g., permission to read or modify public or personal information in the database 130. The passenger terminal device 120 or the driver terminal device 140 may be permitted to read some of the public information or the personal information relating to the users when certain conditions are satisfied. For example, the on-demand service system 105 may update or modify the public information or the user related information in the database 130, based on one or more experiences of a user (a passenger or a driver) using the on-demand service system 105. As another example, when receiving a service order from a passenger 120, a driver 140 may view some of the information of the passenger 120 in the database 130. However, the driver 140 may not modify the information of the passenger 120 in the database 130 on his/her own, but may only report the modification to the on-demand service system 105 so that the system 105 may determine whether or not to modify the information of the passenger 120 in the database 130 accordingly. As another example, when receiving a request of providing service from a driver 140, a passenger 120 may view some of the information (e.g., user rating information, driving experiences, etc.) of the driver 140 in the database 130. However, the passenger 120 may not modify the information of the driver 140 in the database 130 on his/her own, but may only report the modification to the on-demand service system 105 so that the system 105 may determine whether or not to modify the information of the driver 140 in the database 130 accordingly.

The network 150 may be a single network, or a combination of networks. For example, the network 150 may include but is not limited to a LAN (local area network), a WAN (wide area network), a public network, a private network, a WLAN (wireless local area network), a virtual network, a MAN (metropolitan area network), a PSTN (public telephone switched network), the like, or any combination thereof. The network 150 may include multiple network access points, such as a wired or wireless access point, including a base station 150-1, a base station 150-2, a network switched point, etc. Through these access points, any data source may be connected to the network 150 and transmit information via the network 150.

The information source 160 may be a source configured to provide other information to the system 105. For example, the information source 160 may provide the system with service information, such as weather conditions, traffic information, information of laws and regulations, news events, life information, life guide information, etc. The information source 160 may be implemented using a single central server, multiple servers connected via a network, multiple personal devices, etc. When the information source is implemented using multiple personal devices, the personal devices can generate content (e.g., as referred to as the "user-generated content"), for example, by uploading text, voice, images and video to a cloud server. An information source may thus be generated by the multiple personal devices and the cloud server. The information source 160 may directly connect with the network 150, a part or all of the on-demand service system 105 (e.g., the scheduling engine 110), or a combination of both. When the information source 160 is connected with the network 150, the passenger terminal device 120 and/or the driver terminal device 140 may access information stored in the information source 160 via the network 150. The connection between the information source 160 and other modules of the system may be wired or wireless.

Taking transportation service as an example, the information source 160 may include a municipal service system containing map information and city service information, a real-time traffic broadcasting system, a weather broadcasting system, a news network, a social network, etc. The information source 160 may be a physical device, such as a common speed measuring device, a sensor, or an IOT (Internet of things) device, including a vehicle speedometer, a radar speedometer, a temperature and humidity sensor, a vehicle-mounted diagnosis system, etc. The information source 160 may be a source configured to obtain news, messages, real-time road information. The network information source may include but is not limited to an Internet news group based on Usenet, a server over the Internet, a weather information server, a road condition information server, a social network server, the like, or any combination thereof. More particularly, for example, taking food delivery service as an example, the information source 160 may be a system storing information of multiple food providers in a specific region, a municipal service system, a traffic condition system, a weather broadcasting system, a news system, a rule system storing laws and regulations of the district, the like, or any combination thereof. The examples described herein are not intended to limit the scope of the information source 160 or the type of services provided by the information source. The present disclosure may be suitable for other types of services. Any device or network that can provide information of the services may be designated as the information source 160 in the present disclosure.

In some embodiments, information exchange between different parts of a location-based system may be implemented via an order. In some embodiments, the product may be a tangible product or an intangible product. The tangible product may be any object with a shape or a size, including food, medicine, commodities, chemical products, electrical appliances, clothing, vehicles, house estates, luxuries, the like, or any combination thereof. The intangible product may include but are not limited to service products, financial products, intellectual products, Internet products, the like, or any combination thereof. The Internet products may include any product that satisfies the user's requirements on information, entertainment, communication, or business. There are many methods of classifying the Internet products. Taking classification method based on host platform as an example, the Internet products may include but are not limited to personal host products, Web products, mobile Internet products, commercial host platform products, built-in products, the like, or any combination thereof. The mobile Internet product may be a software, a program or a system used in mobile terminals. The mobile terminal may include but is not limited to a laptop computer 120-1, a tablet computer, a mobile phone, a PDA (personal digital assistant) PDA, an electronic watch, a POS machine, a carputer, a television, the like, or any combination thereof. The mobile Internet product may include various software or applications of social communication, shopping, travel, entertainment, learning, or investment used in the computer or the mobile phone. The travel software or application may be a trip software or application, a vehicle booking software or application, a map software or application, etc. The vehicle booking software or application may be used to book horses, carriages, rickshaws (e.g., two-wheeled bicycles, three-wheeled bicycles, etc.), vehicles (e.g., taxis, buses, private cars, etc.), trains, subways, ships, aircrafts (e.g., planes, helicopters, space shuttles, rockets, hot air balloons, etc.), the like, or any combination thereof.

It should be noted that the above description of the service system based on a location is provided for the purpose of illustration, and not intended to limit the scope of the present disclosure. For persons having ordinary skills in the art, modules may be combined in various ways, or connected with other modules as sub-systems. Various variations and modifications may be conducted under the teaching of the present disclosure. However, those variations and modifications may not depart the spirit and scope of this disclosure. For example, the database 130 may be a cloud-computing platform with data storing function that includes but is not limited to a public cloud, a private cloud, a community cloud, a hybrid cloud, etc. All such modifications are within the protection scope of the present disclosure.

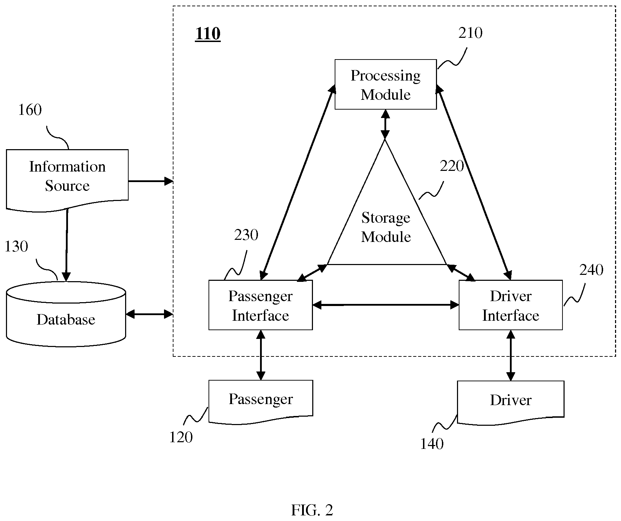

FIG. 2 is a schematic block diagram illustrating an example of a transport capacity scheduling system 110 according to some embodiments of the present disclosure. For brevity, the on-demand service system 105 is not shown in the figure and the scheduling engine 110 is illustrated as an example. The scheduling engine 110 may include one or more processing modules 210, storage modules 220, interfaces 230 and driver interfaces 240. The modules of the scheduling engine 110 may be centralized or distributed. One or more modules of the scheduling engine 110 may be local or remote. In some embodiments, the scheduling engine 110 may be a webpage server, a file server, a database server, an FTP server, an application server, a proxy server, a mail server, the like, or any combination thereof.

In some embodiments, the scheduling engine 110 may receive information from and/or send processed information to the passenger terminal device 120 via the passenger interface 230. In some embodiments, the scheduling engine 110 may receive information from and/or send processed information to the driver terminal device 140 via the driver interface 240. The scheduling engine 110 may acquire information from the database 130 and/or the information source 160. The scheduling engine 110 may also send processed information to the passenger terminal device 120 via the passenger interface 230 or the driver terminal device 140 via the driver interface 240.

In some embodiments, the passenger interface 230 and the driver interface 240 may receive information sent by the passenger terminal device 120 and the driver terminal device 140, respectively. In some embodiments, the passenger interface 230 and the driver interface 240 may access information from the database 130 and/or the information source 160, respectively. The information disclosed herein may include but is not limited to service request information, service receiving information, information of user habit/preference, current positioning information, the like, or any combination thereof. The request information of a service may be order request information (e.g., a car-hailing request by a passenger, an order acceptance request by a driver, etc.), any other request information of the user (e.g., a request sent by a driver to acquire an order density in a specific region), etc. The service receiving information may be information indicating that a user accepts an order, information indicating that the user cancels an order, information indicating that the user accepts an order successfully, information indicating that the user fails to accept an order, etc. The information of user habit/preference may be a passenger's preference for a driver, a wait time that a user can tolerate, a passenger's preference for other passengers for car sharing and/or carpool, a passenger's preference for vehicle types, a driver's preference for departure locations, destinations, departure times, etc. Forms of the information may include but are not limited to text, audio, video, images, the like, or any combination thereof. Input methods of the information may include but are not limited to handwriting input, gesture input, image input, voice input, video input, electromagnetic wave input or other data input methods, the like, or any combination thereof. The received information may be stored in the database 130 or the storage module 220, or calculated and processed by the processing module 210.

In some embodiments, the passenger interface 210 and the driver interface 230 may output information analyzed and processed by the processing module 210. The information may be optimized positioning information, direct information of an order, processing information of an order, historical information of an order and real-time information of an order, direct information of a user, processing information of a user, historical information of a user and real-time information of a user, environmental information, etc. Forms of the information may include but are not limited to text, audio, video, images, the like, or any combination thereof. The output information may or may not be sent to the passenger terminal device 120 and/or the passenger terminal device 140. The output information that is not sent may be stored in the database 130, the storage module 220, or the processing module 210.

In some embodiments, the processing module 210 may be configured to process information related to transport capacity scheduling. The processing module 210 may acquire information from the passenger interface 230, the driver interface 240, the database 130, the information source 160, the storage module 220, etc. The processing module 210 may send the processed information to the passenger interface 230 and/or the driver interface 240. The processing module 210 may also store the processed information in the database 130, other backup databases or storage devices, or the processing module 210. The information processing method may include but is not limited to storing, classifying, filtering, transforming, calculating, retrieving, predicting, training, the like, or any combination thereof. In some embodiments, the processing module 210 may include but is not limited to a CPU (central processing unit), an ASIC (application specific integrated circuit), an ASIP (application specific instruction set processor), a PPU (physics processing unit), a DSP (digital processing processor), a FPGA (field-programmable gate array), a PLD (programmable logic device), a processor, a microprocessor, a controller, a microcontroller, the like, or any combination thereof.

It should be noted that the processing module 210 may be included in the system, or implement corresponding function via a cloud computing platform. Exemplary cloud computing platforms may include but are not limited to a storage-based cloud platform mainly used for data storing, a calculation-based cloud platform mainly used for data processing, a hybrid cloud computing platform used for both data storing and processing, etc. The cloud platforms used by a part or all of the on-demand service system 105 (e.g., a scheduling engine 110) may be a public cloud, a private cloud, a community cloud, a hybrid cloud, etc. For example, some order information and/or non-order information received by the on-demand service system 105 may be calculated and/or stored by the cloud platforms according to actual requirements. Other order information and/or non-order information may be calculated and/or stored by a local processing module and/or a system database.

It should be understood that the scheduling engine 110 illustrated in FIG. 2 may be implemented by a variety of methods. For example, in some embodiments, the scheduling engine 110 may be implemented by a hardware, a software, or a combination of both. The hardware may be implemented by a dedicated logic. The software may be stored in the memory, and may be implemented by an appropriate instruction execution system (e.g., a microprocessor, a dedicated design hardware, etc.). It will be appreciated by those skilled in the art that the above methods and systems may be implemented by computer-executable instructions and/or embedding in control codes of a processor. For example, the control codes may be provided by a medium such as a disk, a CD or a DVD-ROM, a programmable memory device such as read-only memory (e.g., firmware), or a data carrier such as an optical or electric signal carrier. Apart or all of the on-demand service system 105 (e.g., the scheduling engine 110) and modules described in the present disclosure may not only be implemented by large scale integrated circuits or gate arrays, semiconductor devices (e.g., logic chips, transistors, hardware circuits of programmable hardware devices such as field programmable gate arrays, programmable logic devices, etc.) but may also be implemented by software executed in various types of processors, or a combination of the above hardware circuits and software (e.g., firmware).

It should be noted that the above description of the scheduling engine 110 is provided for the purpose of illustration, and not intended to limit the protection scope of the present disclosure. For persons having ordinary skills in the art, various variations and modifications may be conducted under the teaching of the present disclosure. However, those variations and modifications may not depart the spirit and scope of this disclosure. For example, in some embodiments, a storage module may be included in the scheduling engine 110. The storage module may be a local device or an external device. The storage module may be included in the scheduling system 110, or implement corresponding function via the cloud-computing platform. For persons having ordinary skills in the art, modules may be combined in various ways, or connect with other modules as sub-systems under the teaching of the present disclosure. However, those variations and modifications may not depart the spirit and scope of this disclosure. For example, the passenger interface 230, the processing module 210, the driver interface 240 and the storage module 220 may be different modules in one system, or may be combined as a single module to perform the corresponding functions of two or more of the above modules in some embodiments. For example, the passenger interface 230 and/or the driver interface 240 may be combined as a single module to perform input and output functions, or may be an input module and an output module for the passenger, respectively. For example, the processing module 210 and the storage module 220 may be two modules or a single module capable of data processing and storing. For example, the modules may share one storage module, or have respective storage modules. All other alterations, improvements, and modifications are within the protection scope of the present disclosure.

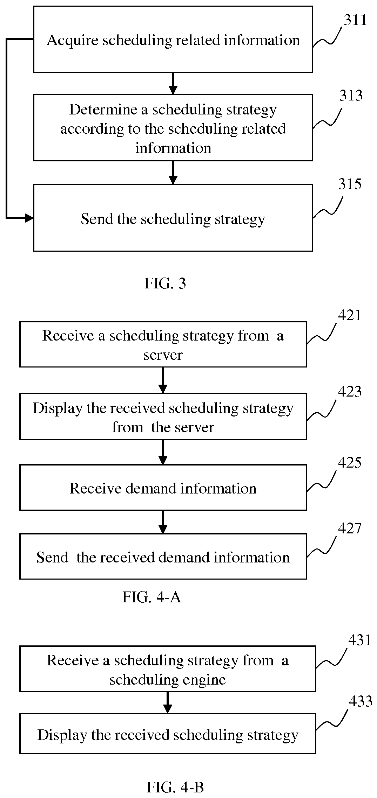

FIG. 3 is a flowchart illustrating an example of a transport capacity scheduling process according to some embodiments of the present disclosure. In some embodiments, the transport capacity scheduling process may be implemented by a part or all of the on-demand service system 105 (e.g., a scheduling engine 110).

In step 311, information related to transport capacity scheduling (also referred to as the "scheduling related information") may be acquired. The scheduling related information may be acquired by the scheduling engine 110. More particularly, for example, the scheduling related information may be acquired by the processing module 210. Exemplary scheduling related information may include but is not limited to order information, user information, environmental information, the like, or any combination thereof. The order information may include time information of an order (e.g., a departure time, a wait time, etc.), type information of an order (e.g., a long-distance order, a short-distance order, etc.), location information of an order (e.g., a departure location, a destination, etc.), price information of an order (e.g., transaction prices, surcharges, etc.), the like, or any combination thereof. Exemplary user information may include identity information of a user (e.g., profession, gender, etc.), terminal device information of a user (e.g., models, remaining power of the terminal device, etc.), preference information of a user (e.g., a passenger's preference for a driver, a driver's preference for departure locations, destinations and departure times, etc.), historical order information of a user (e.g., the number of historical orders received by a driver, the number of historical orders requested by a passenger), credit information of a user (e.g., payment records of a passenger, traffic violation information of a driver, etc.), the like, or any combination thereof. Exemplary environmental information may include weather information (e.g., temperature information, information related to types of weather, etc.), traffic information (e.g., road information, information of traffic congestion, information of traffic control), event information (e.g., holiday information, information related to important events), geographic information (e.g., information of region division, latitude-longitude information), the like, or any combination thereof. Forms of the information may include but are not limited to text, audio, video, images, the like, or any combination thereof. In some embodiments, the scheduling related information may be real-time information, historical information, or predictive information. The real-time information may include order information at the current time, user information at the current time, weather information at the current time, etc. The historical information may be information in the past N days, information at a specific time (e.g., every Monday or 10:00 every day), etc. The predictive information may include predictive weather information, predictive traffic information, etc.

In some embodiments, the scheduling related information may be derived from information received from the passenger terminal device 120 by the passenger interface 230, information received from the driver terminal device 140 by the driver interface 240, information stored in the database 130, the information source 160 and/or the storage module 220, and/or any other information. The communication during the process for information acquisition may be wired or wireless.

In step 313, a scheduling strategy may be determined according to the scheduling related information. The scheduling related information may be determined by the scheduling engine 110. More particularly, for example, the scheduling strategy may be determined by the processing module 210. The scheduling strategy may include but is not limited to a supply and demand density push strategy, a hotspot characteristic push strategy, a statistical characteristic push strategy, an order push strategy, an order adjustment strategy, a prompt information push strategy, the like, or any combination thereof. The supply and demand density push strategy may refer to pushing supply and demand density information to the user. In some embodiments, the supply and demand density information may be current supply and demand density information, historical supply and demand density information, predictive supply and demand density information, the like, or any combination thereof. The hotspot characteristic push strategy may refer to pushing hotspot characteristic information to the user. In some embodiments, the hotspot characteristic information may include hotspot region information (e.g., a region with the greatest number of orders, the number of orders in a specific region, etc.), hotspot period information (e.g., the number of orders at a specific period, the number of drivers in a specific region, etc.), hotspot order information (e.g., an order type with the greatest number of orders), the like, or any combination thereof. The statistical characteristic push strategy may refer to pushing statistical characteristic information to the user. In some embodiments, the statistical characteristic information may include statistical characteristic information of a driver (e.g., a driver's preference for receiving an order, a daily average number of orders received by a driver, etc.), statistical characteristic information of a passenger (e.g., choice preference of a driver, a daily average number of orders of a passenger, etc.), statistical characteristic information of orders (e.g., the number of orders in a specific region, an average transaction price of orders, etc.), statistical characteristic information of traffic (e.g., statistics of traffic congestion in a specific region and/or at a specific time, etc.), statistical characteristic information of weather (e.g., statistics of rain and snow weather in a specific region and at/or a specific time), the like, or any combination thereof. In some embodiments, the statistical characteristic information may be real-time statistical characteristic information (e.g., the number of current orders), historical statistical characteristic information (e.g., the number of historical orders), predictive statistical characteristic information (e.g., the number of predictive orders), the like, or any combination thereof. The order push strategy may refer to pushing order information to the user. The order information may include information of a particular order, information of multiple orders that may be provided to the user for selection, the like, or any combination thereof. The order adjustment strategy may refer to pushing order adjustment information to the user. The order adjustment information may include but is not limited to adjustment information of prices, types, etc. of orders. The prompt information push strategy may refer to pushing prompt information to the user. The prompt information may include but is not limited to traffic conditions, weather conditions, historical order records, the like, or any combination thereof. Forms of the information may include but are not limited to text, audio, video, images, the like, or any combination thereof.

In some embodiments, the determination of the scheduling strategy by the processing module 210 may include but is not limited to storing, classifying, filtering, transforming, calculating, testing, predicting, training the scheduling relate information, the like, or any combination thereof.

In some embodiments, the scheduling strategy may be determined based on one or more prediction models and/or machine learning methods. In some embodiments, the prediction model may be qualitative or quantitative. A quantitative prediction model may be based on a time series prediction method and/or a causal method. Exemplary time series prediction methods may include an average smoothing method, trend extrapolation, a prediction method based on seasonal variations, a Markov time series prediction method, the like, or any combination thereof. Exemplary casual methods may include a univariate regression method, a multivariate regression method and an input-output method. In some embodiments, exemplary prediction methods may include but are not limited to a weighted arithmetic average model, a trend average forecasting model, an exponential smoothing model, an average development speed model, a univariate linear regression model, a high-low point model, the like, or any combination thereof. In some embodiments, formulas, algorithms and/or models used to process information may be continuously optimized using one or more machine learning methods. According to different learning styles, exemplary methods of the machine learning may include supervised learning, unsupervised learning, semi-supervised learning, reinforcement learning, etc. According to different algorithms, methods of the machine learning may include regression algorithm learning, example-based learning, formal learning, decision tree learning, Bayesian learning, clustering algorithm learning, association rule learning, neural network learning, deep learning, dimensionality reduction algorithm learning, etc. More particularly, for example, exemplary regression algorithm models may include ordinary least square, logistic regression, stepwise regression, MARS (multivariate adaptive regression splines), locally estimated scatterplot smoothing; example-based-models may include k-nearest neighbor, learning vector quantization, SOM (self-organizing map), etc. Exemplary formal learning models may include RIDge Regression, LASSO (least absolute shrinkage and selection operator or elastic net) etc. Decision tree models may include classification and regression trees, ID 3 (iterative dichotomiser 3), C4.5, CHAID (chi-squared automatic interaction detection), decision stump, random forest, MARS, GBM (gradient boosting machine), etc. Exemplary Bayesian models may include naive Bayesian algorithm, averaged one-dependence estimators, BBN (Bayesian belief network), core-based algorithm models may include support vector machine, radial basis function, linear discriminate analysis, etc. Clustering algorithm models may include k-means algorithm, expectation maximization, etc. Exemplary association rule models may include Apriori algorithm, Eclat algorithm, etc. Exemplary neural network models may include back propagation, Hopfield network, SOM, Learning Vector quantization, etc. Exemplary deep learning models may include restricted Boltzmann machine, (DBN) (deep belief networks), convolutional network, stacked auto-encoders, etc. Exemplary dimensionality reduction algorithm models may include principle component analysis, partial least square regression, Sammon map, multi-dimensional scaling, projection pursuit, etc.

In step 315, the scheduling strategy may be sent. The scheduling strategy may be sent by the scheduling engine 110. In some embodiments, the scheduling strategy may be sent to the passenger terminal device 120 via the passenger interface 230. For example, information of adjustments of order prices may be sent to the passenger terminal device 120 via the passenger interface 230. In some embodiments, the scheduling strategy may be sent to the driver terminal device 140 via the driver interface 240. For example, the real-time order information may be sent to the driver terminal device 120 via the driver interface 230. As another example, historical order information in the current region may be sent to the driver terminal device 120 via the driver interface 230. In some embodiments, the scheduling strategy may be sent to the storage module 220, the database 130 and the information source 160. An internal module or unit of the processing module 210 may send the scheduling strategy to another internal module or unit of the processing module 210. For example, a price adjustment strategy may be sent to an order price calculation sub-unit (not shown in FIG. 3) in the processing module 210 in order to adjust the calculation of the order prices (e.g., multiplying the original order prices by a premium of 1.5 times).

FIG. 4-A is a flowchart illustrating an example of a method of transport capacity scheduling implemented in a user terminal according to some embodiments of the present disclosure. In some embodiments, the process for the transport capacity scheduling may be implemented by the passenger terminal device 120.

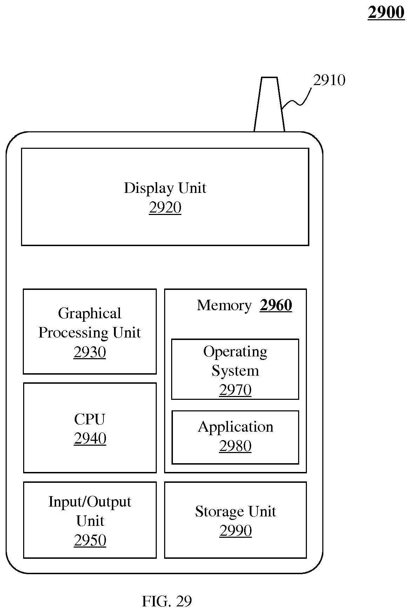

In step 421, a scheduling strategy may be received from a server. The scheduling strategy may include but is not limited to a supply and demand density push strategy, a hotspot characteristic push strategy, a statistical characteristic push strategy, an order push strategy, an order adjustment strategy, a prompt information push strategy, the like, or any combination thereof (e.g., as described in connection with FIG. 3 above). For example, the scheduling strategy may be an order adjustment strategy that adjusts an order price for adverse weather conditions. The original order prices may be multiplied by a premium of N times. As another example, the scheduling strategy may be a prompt information push strategy that reminds a passenger to avoid travel during rush hours of vehicle demand. As another example, the scheduling strategy may be an order push strategy that pushes information related to drivers to passengers in a region with a great number of drivers. The communication of receiving the scheduling strategy may be wired or wireless. For example, as illustrated in FIG. 29, when mobile device 2900 serves as the passenger terminal device 120, the scheduling strategy may be received via an antenna 2910.

In step 423, the received scheduling strategy may be displayed. The received scheduling strategy may be displayed using voice, text, graphics, video, the like, or any combination thereof. For example, information of the price adjustment may be broadcasted using voice. As another example, the number of vehicles in different regions may be displayed using text. As another example, a current vehicle distribution may be displayed on a map using images. A triangle and a square may be used to represent a taxi and a private car, respectively. As another example, density information of drivers may be displayed by a display box. The scheduling strategy may be displayed according to a map of the passenger terminal device 120. For example, degrees of concentration of vehicles may be distinguished by colors.

In some embodiments, red may be used to mark a region with the highest degree of concentration of the vehicles, and blue may be used to mark a region with the lowest degree of concentration of the vehicles. As another example, different gray levels may be used on a map to display different supply and demand densities, order densities, the number of orders, the number of users, etc. The display of the scheduling strategy may or may not be triggered by the user. For example, corresponding scheduling information may be displayed on a map of the passenger terminal device 120 after receiving a trigger signal sent by a passenger. For example, as illustrated in FIG. 29, when mobile device 2900 serves as the passenger terminal device 120, the scheduling strategy may be displayed by a display unit 2920. In some embodiments, certain data processing operations (e.g., data encoding, decoding, format conversion, etc.) may be performed between the reception of the scheduling strategy and the display of the scheduling strategy. The data processing may be implemented by a GPU (graphics processing unit) 2930, a CPU (central processing unit) 2940, and/or memory 2960 of the mobile device 2900.

In step 425, demand information may be received. The demand information may include order request information, preference information, or any other request information of a passenger. The order request information of the passenger may include but is not limited to a departure location, a departure time, an expected arrival time, an acceptable wait time, the number of passengers, gender of a passenger, whether to carry luggage, an amount of carry-on luggage, whether to carry pets, the type and number of pets, a mileage, a price, a price markup by a consumer, the like, or any combination thereof. The preference information of the passenger may include but is not limited to preference for a vehicle type, preference for a service provider (e.g., a preference for drivers with more than 10 years of driving experience), preference for a route (e.g., preference for selecting the shortest route), preference for a wait time (e.g., preference for selecting drivers that the passenger needs to wait about 5-10 minutes for), the like, or any combination thereof. The other request information of the passenger may include but is not limited to request information sent to the system for acquiring a weather condition, a distribution of drivers in a region, a price adjustment, the like, or any combination thereof. The form of the information may include but is not limited to text, audio, video, images, the like, or any combination thereof. Input methods of the information may include but are not limited to handwriting input, gesture input, image input, voice input, video input, electromagnetic wave input, somatosensory input or other data input methods, or any combination thereof. The received demand information may be stored in a storage unit of a receiving device. Alternatively or additionally, the received demand information may be transmitted. For example, as illustrated in FIG. 29, when mobile device 2900 serves as the passenger terminal device 120, the demand information received by an input/output unit 2950 may be stored in memory 2960 and central processing unit 2940, or may be directly sent by input/output unit 2950 or antenna 2910 without storing.

In step 427, the received demand information may be sent. In some embodiments, the sent demand information may be original demand information or processed demand information of a passenger. The processing of the information may include but is not limited to error correcting, combining, filtering, transforming, calculating, the like, or any combination thereof. For example, a passenger may input information in a form of text "a departure location: No. 3 Hai Avenue, Haidian District, Beijing." The device shown in FIG. 4-A may correct the information to "a departure location: No. 3 Haidian Avenue, Haidian District, Beijing", and then send the corrected information. The sent demand information may also include one or more latitude coordinates and/or longitude coordinates of the geographic location.

FIG. 4-B is a flowchart illustrating an example of a method of transport capacity scheduling implemented in a user terminal according to some embodiments of the present disclosure. In some embodiments, the process for the transport capacity scheduling strategy may be implemented by the driver terminal device 140.

In step 431, a scheduling strategy may be received from a server. The scheduling strategy may include but is not limited to a supply and demand density push strategy, a hotspot characteristic push strategy, a statistical characteristic push strategy, an order push strategy, an order adjustment strategy, a prompt information push strategy, the like, or any combination thereof (e.g., as described in connection with FIG. 3 above). For example, the scheduling strategy may be a prompt information push strategy that reminds drivers to receive orders in other regions in a region with fewer orders. As another example, the scheduling strategy may be an order push strategy that preferably pushes orders to drivers with relatively high credit evaluation in the region with fewer orders. As another example, the scheduling strategy may be a statistical characteristic push strategy that displays historical order information and real-time order information of a specific region. The communication of receiving the scheduling strategy may be wired or wireless. For example, as illustrated in FIG. 29, the scheduling strategy may be received via an antenna 2910.

In step 433, the received scheduling strategy may be displayed. The received scheduling strategy may be displayed using voice, text, images, video, the like, or any combination thereof. For example, information of a price adjustment may be broadcasted using voice. As another example, the number of passengers of different regions may be displayed using text. As another example, a distribution of current orders may be displayed on a map using images. A circle and a rhombus may be used to represent a long-distance order and a short-distance order, respectively. As another example, density information of an order may be displayed by a display box. The scheduling strategy may be displayed according to a map of the passenger terminal device 120. For example, degrees of concentration of passengers may be distinguished by colors. In some embodiments, red may be used to mark a region with the highest degree of concentration of the passengers, and blue may be used to mark a region with the lowest degree of concentration of the passengers. As another example, different gray levels may be used on a map to display different supply and demand densities, order densities, the number of orders, the number of users, etc. The display of the scheduling strategy may or may not be triggered by the user. For example, corresponding scheduling information may be displayed on a map of the driver terminal device 140 after receiving a trigger signal sent by a driver. For example, as illustrated in FIG. 29, the display of the scheduling strategy may be implemented by the display unit 2920. In some embodiments, certain data processing operations (e.g., data encoding, decoding, format conversion, etc.) may be performed between the reception of the scheduling strategy and the display of the scheduling strategy. The data processing may be implemented by a GPU (graphics processing unit) 2930, a CPU (central processing unit) 2940, and/or memory 2960 of the mobile device 2900.

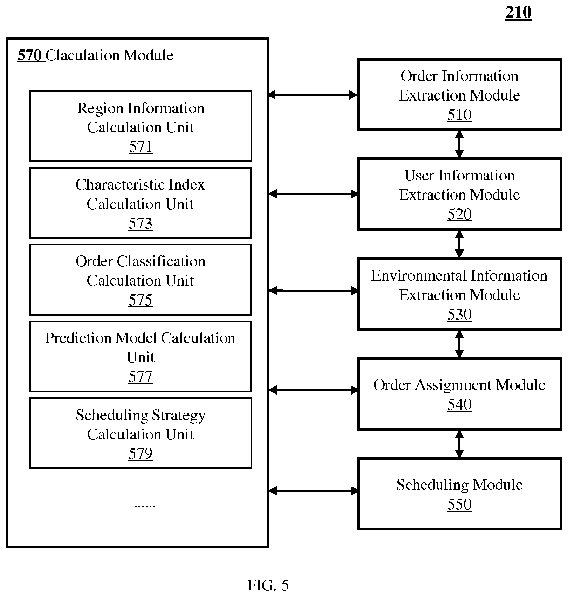

FIG. 5 is a schematic block diagram illustrating a processing module 210 of a transport capacity scheduling system according to some embodiments of the present disclosure. The processing module 210 may include but is not limited to one or more order information extraction modules 510, information extraction modules 520, environmental information extraction modules 530, order assignment modules 540, scheduling modules 550, and calculation modules 570. In addition, the processing module 210 may further include one or more other modules or units. The modules 510-570 may be mutually connected. The connection between the modules may be wired or wireless. The connection of the modules shown in FIG. 5 is merely by way of example, and not intended to limit the protection scope.

The order information extraction module 510 may be configured to extract direct or indirect information relating to an order. In some embodiments, the order information may be real-time order information, information related to historical order, information related to reservation order, information related to predictive order, the like, or any combination thereof. For example, the order information may include a transmission time of orders, an order number, a departure location, a destination, a departure time, an arrival time, an acceptable wait time, the number of passengers, whether to accept car sharing and/or carpool, a selected vehicle type, whether to carry luggage, an amount of the carry-on luggage, whether to carry pets, a mileage, a price, a price markup by a consumer, a price adjustment by a service provider, a price adjustment by the system, usages of coupons, payment methods (e.g., cash payments, card payments, online payments, remittance payments), completion status of orders, order selection conditions by the service provider, order sending conditions by the consumer, the like, or any combination thereof. Besides, the order information may also include other order related information, such as profile information of a passenger (e.g., gender, nickname, contact information, etc.), other information that not controlled by the consumers and the service providers, temporary/emergent information, the like, or any combination thereof. For example, the other information may include but is not limited to weather conditions, environmental conditions, road conditions (e.g., road closure due to security or road works, etc.), traffic condition, the like, or any combination thereof. The order information may or may not be extracted in real time. The extracted order information may be stored in the order information extraction module 510, the storage module 220, the information source 160, the database 130, or any storage devices described in the present disclosure that may be integrated in the system or external to the system.

In some embodiments, the order information extraction module 510 may also include one or more units. Exemplary units may include a time information extraction unit (not shown in FIG. 5), a location information extraction unit (not shown in FIG. 5), an analysis unit (not shown in FIG. 5) and a processing unit (not shown in FIG. 5), etc. The time information extraction unit may extract time information relating to the order (e.g., a transmission time of an order, a reservation departure time, a time period that the reservation departure time is located in, etc.). The location information extraction unit may extract location information relating to the order (e.g., a departure location, a destination, a region in which the departure location is located, traffic and road conditions around the departure location and the destination, etc.). The analysis unit may be configured to analyze the order-related time information, the order-related location information, etc. For example, the analysis unit may transform the location information from the form of text descriptions into the form of location coordinates. The text description may include a name, a house number and a building name of a place, the like, or any combination thereof. The location coordinates may include coordinate information of a place, such as latitude-longitude information. The processing unit may process order-related information extracted by the order information extraction module 510. The processing method may include but is not limited to calculating, identifying, verifying, judging, filtering, the like, or any combination thereof.

The user information extraction module 520 may be configured to extract information directly or indirectly relating to a user. In some embodiments, the user may include a passenger or a driver. In some embodiments, the user information may be historical user information, real-time user information, predictive user information, the like, or any combination thereof. The user information may be identity information, information of a terminal device of the user, preference information of the user, historical order information of the user, credit information of the user, the like, or any combination thereof. The identity information of the user may include but is not limited to a name, a nickname, nationality, profession, age, contact information (e.g., a phone number, a mobile phone number, information about a social media account (e.g., a WeChat™ number, a QQ™ number, a LinkedIn™ account, etc.), other information that may be used to contact the user, etc.), driving license, service time, driving experience, the like, or any combination thereof. The information of a user terminal device may include but is not limited to information of a communication device (e.g., device models, network modes, a time when the device is connected to the network, etc.), information of a transportation device (e.g., a vehicle type, a license plate number, fuel consumption per kilometer, remaining fuel, vehicle age, size of a trunk, panoramic sunroof, historical maintenance records, etc.), information of other devices (e.g., information of a carried first-aid medical device, information of a fire extinguishing device, etc.), the like, or any combination thereof. The preference information of the user may include but is not limited to a passenger's preference for a driver, a driver's preference for a passenger, a user's preference for a departure location, a user's preference for a destination, a user's preference for a wait time, the like, or any combination thereof. The historical order information of the user may include but is not limited to the number of historical orders accepted by a driver, the number of historical orders of a passenger, a departure location of a user's historical order, a destination of a user's historical order, a departure time of a user's historical order, a wait time of a user's historical order, the like, or any combination thereof. The credit information of the user may include but is not limited to the ratio of discontinuing orders, information of traffic violation, records of bank information, historical payment records of the user, the like, or any combination thereof. The user information may or may not be extracted in real time. For example, a part of the user information may be extracted in real time, and a part of the user information may be extracted in non-real-time. The extracted user information may be stored in the user information extraction module 520, the storage module 220, the information source 160, the database 130, or any storage devices described in the present disclosure that may be integrated in the system or may be external to the system.

In some embodiments, the user information extraction module 520 may also include one or more units, e.g., an information receiving unit (not shown in FIG. 5), an information analysis unit (not shown in FIG. 5) and an information transmission unit (not shown in FIG. 5). The information receiving unit may receive or access the user information. For example, the information sent by a driver may be various information determined by using a positioning technology. The various information may include information of a current location of the driver, a driving speed, information of feedback on current service condition (e.g., occupied, waiting to carry passengers, idling driving) returned by the driver, selection/confirmation/rejection information of the driver with respect to the service request, the like, or any combination thereof. The information may be but is not limited to information of natural language text, binary information, voice information (e.g., voice input of a driver), image information (e.g., still image or video), other types of multimedia information, the like, or any combination thereof. The information analysis unit may organize or classify the above information. For example, the information may be transformed into a readable or storable format, etc. The information transmission unit may be configured to receive or send the information. The information transmission unit may include one or more wired or wireless transceivers.

The environmental information extraction module 530 may be configured to extract information directly or indirectly relating to the environment. In some embodiments, the environmental information may be real-time environmental information, historical environmental information, predictive environmental information, the like, or any combination thereof. The environmental information may include weather information, traffic information, event information, geographic information, the like, or any combination thereof. The weather information may include but is not limited to a temperature (e.g., a maximum temperature, a minimum temperature, etc.), humidity, a type of weather (e.g., "sunshine," "cloud," "overcast," "rain," "snow," "dust," "sandstorm," "fog," "windy," etc.), weather indicators (e.g., "rainfall," "snowfall," "haze," "wind speeds," etc.), the like, or any combination thereof. The traffic information may include but is not limited to a location of a road, whether a road is clear or not, speed limits, whether an emergency happens or not (e.g., a traffic accident, maintenance construction and traffic control, the like, or any combination thereof. The event information may include but is not limited to holiday information, information related to important events, the like, or any combination thereof. The geographic information may include but is not limited to information of region division, latitude-longitude information, building information, the like, or any combination thereof. The environmental information may or may not be extracted in real time. The extracted environmental information may be stored in the environmental information extraction module 530, the storage module 220, the information source 160, the database 130, or any storage devices described in the present disclosure that may be integrated in the system or external to the system. The extracted order information, user information and environmental information may be sent to the calculation module 570 for further computational analysis. The information may also be sent to the order assignment module 540 or the scheduling module 550 for order assignment or transport capacity scheduling in real time or in non-rea-time. For example, after the environmental information extraction module 530 extracting the traffic accident information, the prompt information push strategy may be initiated. The accident information may then be sent to the passenger and/or the driver by the passenger interface 230 and/or the driver interface 240 in real time.

In some embodiments, the environmental information extraction module 530 may also include one or more units, e.g., an information receiving unit (not shown in FIG. 5), an information analysis unit (not shown in FIG. 5) and an information transmission unit (not shown in FIG. 5). The information receiving unit may receive or access the environmental information, e.g., weather information of a specific time and location, a level of predicted road congestion at a future time period, traffic accident information of a specific time and location, the like, or any combination thereof. The information may include but is not limited to information of natural language text, binary information, audio information (e.g., voice input of a driver), image information (e.g., still image or video), other types of multimedia information, the like, or any combination thereof. The information analysis unit may organize or classify the above information. For example, the information may be transformed into a readable and storable format, etc. The information transmission unit may receive or send the information. The information transmission unit may include one or more wired or wireless transceivers.

The order assignment module 540 may be configured to assign unassigned orders to one or more users. In some embodiments, the order assignment module 540 may be integrated in the passenger interface 230 and/or the driver interface 240. The order assignment module 549 may access information from other modules in real time or in non-real-time. The information may include a rank result, characteristics of a user, order information, a determination result, the like, or any combination thereof. In some embodiments, the order assignment module 540 may access a calculated scheduling strategy from the calculation module 570, and may then assign the order according to the scheduling strategy. In some embodiments, the order assignment module 540 and the scheduling module 550 may be integrated into a single module to implement functions of pushing the scheduling strategy and releasing the order simultaneously.

The scheduling module 550 may be configured to send the scheduling strategy to the user. In some embodiments, the scheduling strategy may be derived from a calculation result of a scheduling strategy calculation module 579. The scheduling strategy may also be calculation results of other units (e.g., a characteristic index calculation unit 573, a prediction model calculation unit 577). The scheduling strategy may also be information acquired from other modules directly (e.g., the order information extraction module 510, the user information extraction module 520, the environmental information extraction unit 530, etc.). For example, the scheduling module 550 may receive supply and demand density information calculated by the prediction model calculation unit 577 directly and send the information to the user in the supply and demand density push strategy. As another example, the scheduling module 550 may send the information to the user in the prompt information push strategy after the environmental information extraction unit 530 acquiring the traffic accident information. In some embodiments, the scheduling module 550 may be integrated into the passenger interface 230 and/or the driver interface 240.

The calculation module 570 may be configured to calculate the scheduling strategy. In some embodiments, the calculation module 570 may include one or more region information calculation units 571, characteristic index calculation units 573, order grouping calculation units 575, prediction model calculation units 577 and scheduling information calculation units 579. In addition, the calculation module 570 may also include one or more other modules or units. One or more storage units (not shown in FIG. 5) may be internally integrated with/in the calculation module 570. The one or more storage units may be used to store acquired order information, user information, environmental information and/or a calculated scheduling strategy. The calculated scheduling strategy may be sent to the order assignment module 540 or the scheduling module 550 in real time or in non-real-time in order to assign the order or release the scheduling information. In some embodiments, the calculation method used by the calculation module 570 may include but is not limited to minimum-maximum normalization, Z-score normalization, standardization by decimal scaling, a linear function method, a logarithmic function method, an arc cotangent function method, a norm method, historical threshold iteration, a modeling method, a least square method, an elimination method, a reduced method, a substitution method, an image method, a comparison method, an amplification and minification method, a vector method, an inductive method, proof by contradiction, an exhaustive method, a method of completing the square, an undetermined coefficient method, a method of changing variables, methods of splitting terms , a method of adding terms, a factorization method, a translation method, a function approximation method, an interpolation method, a curve fitting method, an integral method, a differential method, a perturbation method, the like, or any combination thereof. The information involved in the calculation may be acquired from the order information extraction module 530, the database 130, and/or the information source 160.

The region information calculation unit 571 may be configured to process information relating to the region division. The processing may include but not is limit to region division, region merging, region splitting, region searching, the like, or any combination thereof. The region information calculation unit 571 may also include one or more sub-units. For example, the region information calculation unit 571 may include a region division sub-unit 5711 (not shown in FIG. 5), an iconic location determination sub-unit 5713 (not shown in FIG. 5), a region affiliation determination sub-unit 5715 (not shown in FIG. 5), a region merging sub-unit 5717 (not shown in FIG. 5), the like, or any combination thereof.

The characteristic index calculation unit 573 may be configured to calculate characteristic index. The characteristic index may include but is not limited to a characteristic index of a region, a characteristic index of a user, a characteristic index of an order, the like, or any combination thereof. The characteristic index calculation unit 573 may also include one or more sub-units. For example, the characteristic index calculation unit 573 may include a region characteristic calculation sub-unit 5731 (not shown in FIG. 5), an order characteristic index sub-unit 5732 (not shown in FIG. 5), a supply and demand calculation unit 5733 (not shown in FIG. 5), a user characteristic index sub-unit 5734 (not shown in FIG. 5), a hotspot characteristic calculation sub-unit 5735 (not shown in FIG. 5), a probability calculation sub-unit 5736 (not shown in FIG. 5), an environmental characteristic calculation sub-unit 5737 (not shown in FIG. 5) the like, or any combination thereof.

The order classification calculation units 575 may be configured to classify orders. The orders may include but are not limited to historical orders, real-time orders, reservation orders, predictive orders, the like, or any combination thereof. The scheduling strategy calculation unit 579 may include one or more sub-units, e.g., a storage sub-unit (not shown in FIG. 5).

The prediction model calculation unit 577 may be configured to perform various predictions. The predictions may include but are not limited to a prediction of the number of future orders, a prediction of the number of users, a prediction of supply and demand densities, a prediction of order densities, a prediction of environmental information, the like, or any combination thereof. The prediction model calculation unit 577 may include one or more sub-units. For example, the prediction model calculation unit 577 may include a region characteristic-based prediction sub-unit 5771 (not shown in FIG. 5), an environmental information-based prediction sub-unit 5773 (not shown in FIG. 5), an order recipient prediction sub-unit 5775 (not shown in FIG. 5), an order quantity prediction sub-unit 5777 (not shown in FIG. 5), the like, or any combination thereof.

The scheduling strategy calculation unit 579 may be configured to calculate scheduling strategies. The scheduling strategies may include but are not limited to a supply and demand density push strategy, a hotspot characteristic push strategy, a statistical characteristic push strategy, an order push strategy, an order adjustment strategy, a prompt information push strategy, the like, or any combination thereof (e.g., as described in connection with FIG. 3 above). The scheduling strategy calculation unit 579 may include one or more sub-units. For example, the scheduling strategy calculation unit 579 may include a supply and demand adjustment strategy assessment sub-unit 5791 (not shown in FIG. 5), a high probability user selection sub-unit 5792 (not shown in FIG. 5), a region user selection sub-unit 5793 (not shown in FIG. 5), a high probability order selection sub-unit 5794 (not shown in FIG. 5), a region order selection sub-unit 5795 (not shown in FIG. 5), a scheduling amount calculation sub-unit 5796 (not shown in FIG. 5), a scheduling information search sub-unit 5797 (not shown in FIG. 5), an order-user matching sub-unit 5798 (not shown in FIG. 5), the like, or any combination thereof.

In some embodiments, one or more storage modules 220 (not shown in FIG.5) may be integrated in the processing module 210. The storage module 220 (not shown in FIG. 5) may be configured to store various information and intermediate data that extracted, calculated and generated by other modules. In some embodiments, a storage module 220 (not shown in FIG. 5) may be internally integrated in the sub-modules 510-570 of the processing module 210 for storing the information and the intermediate data, respectively.

In some embodiments, the operations and/or the processing implemented by the sub-modules 510-570 of the processing module 210 may be based on logic operation, such as an and/or/not operation, a numerical based operation, etc. The sub-modules 510-570 of the processing module 210 may include one or more processors. The processors may be any general processor, such as a PLD (programmable logic device), an ASIC (disclosure specific integrated circuit), a microprocessor, a SoC (system-on-chip), a DSP (digital signal processor), etc. Two or more units of the sub-modules 510-570 may be integrated in a hardware device, or two or more independent hardware devices. It should be understood that the sub-modules 510-570 in the processing module 210 may be implemented by various methods. For example, the scheduling engine 110 or the on-demand service system 105 may be implemented by hardware, software or a combination of both in some embodiments. For example, the scheduling engine 110 or the on-demand service system 105 may be implemented by hardware circuits and programmable hardware devices, or implemented by software implemented by various processors, or implemented by a combination of the hardware circuits and the software (e.g., firmware). The hardware circuit may include very large scale integration circuits, gate arrays semiconductors including semiconductors of logic chips, transistors, etc. The programmable hardware device may include field-programmable gate array, programmable logic devices, etc.

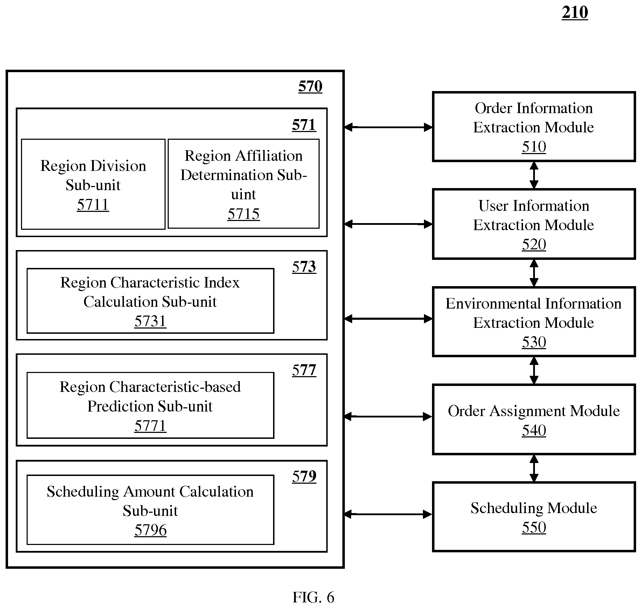

FIG. 6 is a schematic block diagram illustrating a processing module 210 according to some embodiments of the present disclosure. As shown in FIG. 6, the processing module 210 may include one or more order information extraction modules 510, extraction modules 520, environmental information extraction modules 530, order assignment modules 540, scheduling modules 550, calculation modules 570, etc. The calculation module 570 may include one or more region information calculation units 571, characteristic index calculation units 573, prediction model calculation units 577 and other modules (not shown in FIG. 6). The region information calculation unit 571 may include a region division sub-unit 5711 and other sub-units (not shown in FIG. 6). In some embodiments, one or more modules of the information extraction modules 510, the user information extraction modules 520, the environmental information extraction modules 530, the order assignment modules 540 and the scheduling modules 550 may be connected with the calculation modules 570, respectively. As shown in FIG. 6, the connection between the modules and the units may be wired or wireless. Data may be transmitted between the modules and units as described above.

The order information extraction module 510 may be configured to acquire order information. The user information extraction module 520 may be configured to acquire user information. The environmental information extraction module 530 may be configured to acquire environmental information. The order assignment module 540 may be configured to assign an unassigned order to a user. The scheduling module 550 may be configured to send scheduling strategy to a user. Various functions of the scheduling module 550 are described in connection with FIG. 5, and are not be repeated here.

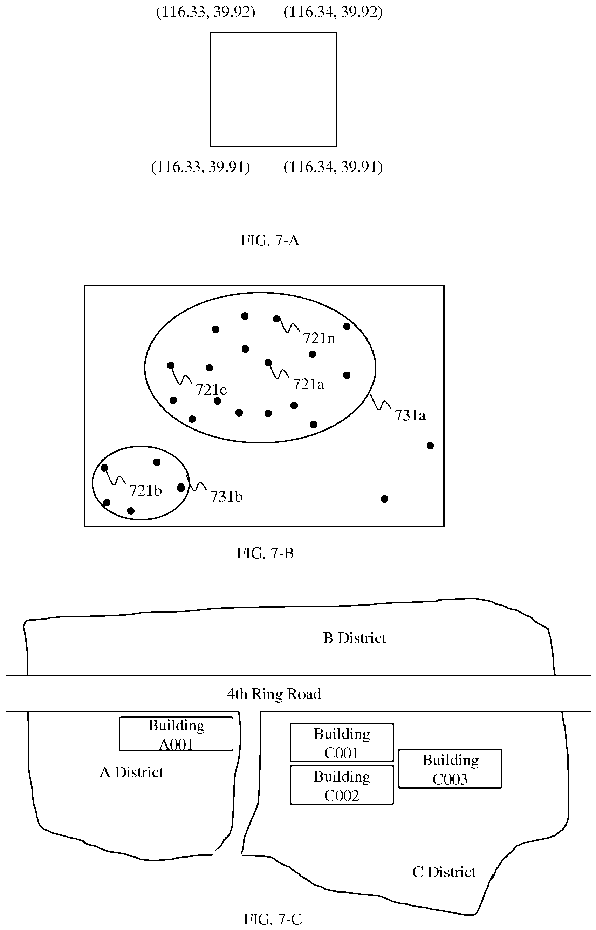

The region division sub-unit 5711 may be configured to perform region division. A method of the region division may include a grid-based division method, a cluster-based division method, a division method based on a special rule (e.g., administrative regions), the like, or any combination thereof (as will be descried in detail in connection with FIGS. 7-A, 7-B, and 7-C).

The region affiliation determination sub-unit 5715 may be configured to determine a region in which a specific location is located in, conditions of users in a specific region, etc. The user may be a driver or a passenger. The specific location may be a current location of a driver, a departure location of an order, a destination of an order, etc. The location information may be a geographic coordinate of the passenger terminal device 120 and/or the driver terminal device 140 determined using a positioning technology, a current location provided by the passenger or the driver, etc. The positioning technology may include but is not limited to a GPS (global positioning system, a GLONASS (global navigation satellite system), a COMPASS (compass navigation system), a Galileo positioning system, a QZSS (quasi-zenith satellite system), a Wi-Fi (wireless fidelity positioning technology, various positioning and speed measuring systems that a vehicle has, the like, or any combination thereof. For example, basic positioning information of the current location may be acquired using the Wi-Fi positioning technology. A wireless router may have a global unique MAC (Media Access Control) address. The wireless router may be generally not moved within a time period. If the Wi-Fi of the passenger terminal device 120 is turned on, the passenger terminal device 120 may scan and collect surrounding router signals to acquire the corresponding MAC addresses broadcasted by the routers. The passenger terminal device 120 may send the data that can identify the routers to a positioning module (not shown in FIG.6). The positioning module (not shown in FIG.6) may retrieve geographic locations relating to the routers in the database 130 according to the received data. The positioning module may further calculate the location of the passenger terminal device 120 according to intensity of different router signals received by the passenger terminal device 120.

The region characteristic index calculation sub-unit 5731 may be configured to calculate characteristic indexes of a region. The characteristic indexes of a region may include but are not limited to a basic characteristic index, a historical characteristic index, a real-time characteristic index, the like, or any combination thereof. In some embodiments, the basic characteristic index may include but is not limited to weekend information, holiday information, a current time, weather information, activity information, and information of business districts relating to a specific region division. It should be understood that car-hailing demand may be significantly different in workdays and weekends. Therefore, the weekend information about whether it is weekend may be one of the basic characteristic indexes that may affect the transport capacity scheduling. The current time may also be a basic characteristic index of the transport capacity scheduling, especially in combination with a specific business district. For example, Guomao district may have a greater transport capacity demand from 6:00 p.m. to 11 p.m. in workdays. The weather information may also be a basic characteristic index. For metropolis such as Beijing, weather conditions in different regions may be different. For example, if it is raining in Guomao district and it is a fine day in Huilongguan district, the transport capacity demand in Guomao district may be changed due to the weather. In some embodiments, the historical characteristic index may include but is not limited to historical contemporaneous vehicle demand, data of transaction ratio relating to a specific region division, etc. For example, the historical contemporaneous vehicle demand of taxis in Guomao district may be 800, and 600 orders may be completed (i.e., a transaction rate of 75%) at 19:00-20:00 on January 10, 2015. There are only 200 taxis at 18:55 on January. 10, 2016, and the number is much lower than a historical level over the same period. Therefore, it may be considered that some taxis may be dispatched to Guomao district from other districts. The real-time characteristics may include but are not limited to the number of demanded vehicles, a change to the number of demanded vehicles relating to a region specific division within a time period that is before the current time, the like, or any combination thereof. For example, the numbers of demanded taxis in the first three hours before the current time are 600, 500, and 400, respectively in Guomao district, indicating a decreasing trend. If there are 800 taxis in the Guomao district, it may be considered that one or more of the taxis may be dispatched out of Guomao district. A method of calculating the region characteristics by the region characteristic calculation sub-unit 5731 may include but is not limited to statistics, classification, summation, clustering, the like, or any combination thereof. In some embodiments, when the various information or other information is processed, the historical information at different time periods may have the same or different influences on the processing. For example, the historical information with a time period that is closer to the time of the current order and the historical information with a time period that is far from the time of the current order may have the same influence on the processing results. As another example, the historical information with a time period that is closer to the time of the current order may have more influence on the processing. The historical information with a time period that is far from the time of the current order may have less or no influence on the processing.

The region characteristic-based prediction sub-unit 5771 may be configured to predict indexes. The predicted indexes may include but not are limited to the number of orders, a demand amount, data of transaction rate of a specific region at a specific time period, the like, or any combination thereof. Databases used for the prediction may be a historical characteristic index, a real-time characteristic index, a basic characteristic index calculated by the region characteristic index calculation unit 5731, the like, or any combination thereof. The databases used for the prediction may be from data directly acquired by the order information extraction module 510, the user information extraction module 520 and/or the environmental information extraction module 530, the like, or any combination thereof.

The scheduling amount calculation unit 5796 may be configured to calculate parameters related to scheduling tasks (also referred to as the "scheduling-related parameters"). The scheduling-related parameters may include but are not limited to an actual scheduling amount, a potential scheduling amount, increments of potential transaction volumes, the sum of increments of potential transaction volumes, the sum of the largest increment of potential transaction volumes, the like, or any combination thereof. The calculation of the scheduling-related parameters may be based on real-time data, historical data, future data, the like, or any combination thereof. The scheduling amount may be determined according to the future weather condition. As another example, the current scheduling amount may be determined according to the historical order condition. The calculation result of the scheduling amount may be used for the transport capacity scheduling directly. For example, the scheduling information may be sent to the corresponding number of drivers. The calculation result of the scheduling amount may also be used whether or not to send the scheduling strategy. For example, if the calculated scheduling amount is less than a threshold, the scheduling strategy may not be initiated for a period of time.

It should be noted that the above description of the processing module 210 is provided for the purposes of illustration, and not intended to limit the scope of the present disclosure. Each of the above modules and units may be optional and may be implemented by one or more components. And functions of each module and unit are not limited here. Each of the above modules and units may be added or omitted to implement various applications. For persons having ordinary skills in the art, the processing module 210 may be modified or altered in forms and details, or make several simple deduction or substitution, or the sequence of each module or unit may be adjusted, combined or split without inventive work under the teaching of the present disclosure. However, those modifications and alterations are within the scope of the above description. For example, in some embodiments, a prompt information generation unit may be added to generate prompt information. The prompt information generation unit may be internal or external to the calculation module 570.

FIGS. 7-A, 7-B, and 7-C are schematic diagrams illustrating a region division according to some embodiments of the present disclosure. The region division may be made by evenly or unevenly dividing an area . For example, an area can be evenly divided into grids/regions with length and width of 1km. As another example, an area can be divided into a region that vehicles cannot go through (e.g., a lake with a larger area, etc.) and multiple other regions (e.g., multiple evenly divided regions). As another example, a region may have one or more centers. The region may be unequally divided outward from one center. The interval of the part that is near the center is small. The interval of the part that is far from the center is large. In some embodiments, the region division may or may not be performed according to a certain acreage. In some embodiments, locations in a region may be continuous or discontinuous. For example, regions that are separated by a river may be assigned to a sub-region. The river may be assigned to another sub-region. In some embodiments, the region division may be completed with one or more times. For example, based on a result of the former division, regions may be merged or re-divided according to some conditions. As another example, the results of the divisions may be dynamically adjusted according to an actual demand in practice. The description method of the region may include but is not limited to coordinates, longitude and latitude information, and/or any other methods that can be used to determine the location information.

As shown in FIG. 7-A, in some embodiments, the region division may include dividing an area into grids. A region division method by grids may include but is not limited to free meshing, mapped meshing, linear meshing, surface meshing, volume meshing, scanning meshing, hybrid meshing, meshing based on degrees of freedom coupling and constrain equation, meshing based on sub-region models, the like, or any combination thereof. In some embodiments, the region division method by grids may include steps of defining cell properties, defining grid properties on a geometric model, dividing grids, the like, or any combination thereof.

As shown in FIG. 7-B, in some embodiments, region division may be performed by clustering. A region division method by clustering may include clustering characteristic points (721 a-n) in order to form different sub-regions (731 an). The characteristic points (721 a-n) may be location information relating to a user, location information relating to an order (e.g., a departure location, a destination, etc.), location information determined by other information, the like, or any combination thereof. In some embodiments, the characteristic point may represent a departure location of an order. A sub-region may correspond to a concentrated region of the departure locations of the orders. The algorithm used for the region division method by clustering may be a divisive clustering algorithm, a hierarchical clustering algorithm, a density-based clustering algorithm, a model-based clustering algorithm, the like, or any combination thereof. The divisive clustering algorithm may include but is not limited to a K-means clustering algorithm, a CLARANS (clustering algorithm based on randomized search), a clustering algorithm based on division (e.g., FCM (Fuzzy C-Means)), etc. In some embodiments, the divisive clustering algorithm may first create K divisions. Then an object may be moved from one division to another division by cyclic positioning technology to improve the results of the divisions. The K divisions may be a result of self-adaptive calculation or preset. The hierarchical clustering algorithm may include but is not limited to a BIRCH (balanced iterative reducing and clustering using hierarchies) algorithm, a CURE (clustering using representatives) algorithm, a ROCK (robust clustering using links) algorithm, a CHEMALOEN algorithm, the like, or any combination thereof. In some embodiments, the hierarchical clustering algorithm may employ a top-down or a bottom-up operating method. The density-based cluster algorithm may include but is not limited to a DBSCAN (density-based spatial clustering of disclosures with noise) algorithm, an OPTICS (ordering points to identify the clustering structure) algorithm, the like, or any combination thereof. In some embodiments, the density-based clustering algorithm may constantly increase the number of cluster according to surrounding densities of an object. The grid-based cluster algorithm may include but is not limited to a STING (statistical information grid-based method) algorithm, a CLIQUE (clustering in quest) algorithm, etc. In some embodiments, the grid-based clustering algorithm may first divide space into finite cells in order to constitute a grid structure. And then complete the cluster by utilizing the grid structure. The model-based clustering algorithm may include but is not limited to a COBWEB method, a CLASSIT method, the like, or any combination thereof.

As shown in FIG. 7-C, region division may be performed according to one or more specific rules (e.g., administrative regions, geographic information, etc.). The administrative regions may include but are not limited to a province, a city, a county, a township, a town, a street, the like, or any combination thereof. For example, Haidian district may be divided into a sub-region. The geographic information may include but is not limited to topography, meteorology, precipitation, geology, hydrological information, the like, or any combination thereof. For example, locations with average altitude located in specific thresholds may be divided into a sub-region.

It should be noted that the above description of the method of the region division is provided for the purposes of illustration, and not intended to limit the scope of the present disclosure. For persons having ordinary skills in the art, the region division may be modified or altered in forms and details under the teaching of the present disclosure. However, those modifications and alterations are within the scope of the above description. For example, some locations may be selected randomly and divided into a region. As another example, some region division methods existed in other systems may be implemented in the system. As another example, the region may be divided according to an order density per unit area at a specific period.

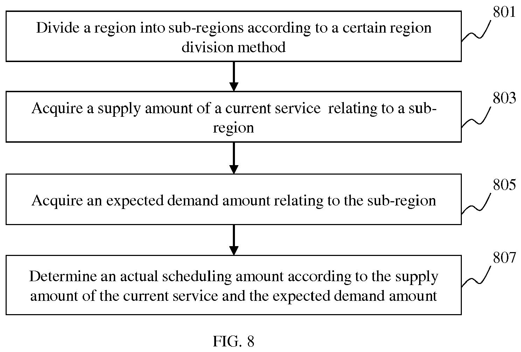

FIG. 8 is a flowchart illustrating an example method for transport capacity scheduling based on predictions of transport capacity according to some embodiments of the present disclosure.

In step 801, a region may be divided into sub-regions according to a certain region division method. In some embodiments, the region division may be performed by the region division sub-unit 5711. The region division method may include a grid-based division method, a cluster-based division method, a division method according to a specific rule, the like, or any combination thereof (e.g., as described in detail in connection with FIGS. 7-A, 7-B and 7-C). For example, the location points in Beijing may be clustered according to coordination information of all orders within a week. 937 regions and the corresponding centers may be acquired. As another example, the location points in Beijing may be divided into 18 districts/towns according to administrative regions. The district/town may include Dongcheng district, Xicheng district, Chongwen district, Miyun town, etc.,

In step 803, a supply amount of a current service relating to a sub-region may be acquired. The supply amount of the current service may be acquired by the region characteristic calculation unit 5731. The present disclosure may take traffic service as an example. The supply amount of the current service may be constituted by multiple indexes. The indexes may include but are not limited to information of the number of vehicles, information of a distance between a vehicle and a passenger, information of a driving speed of a vehicle, information of a fuel amount, information of remaining fuel, the like, or any combination thereof. In some embodiments, the region characteristic calculation unit 5731 may calculate a current demand amount of the region and some other indexes. The other indexes may include but are not limited to a real-time characteristic index, a historical characteristic index and/or a basic characteristic index, the like, or any combination thereof.

In step 805, an expected demand amount relating to the sub-region may be acquired. The expected demand amount may be calculated by the region characteristic prediction sub-unit 5771. In some embodiments, the calculation of the expected demand amount may be based on a historical characteristic index, a real-time characteristic index, a basic characteristic index, the like, or any combination thereof. In some embodiments, the expected demand amount may be predicted by a random forest method.

In step 807, an actual scheduling amount may be determined according to the supply amount of the current service and the expected demand amount. The actual scheduling amount may be calculated by the scheduling amount calculation sub-unit 5796. In some embodiments, the calculation of the actual scheduling amount may be calculating a difference between the expected demand amount and the supply amount of current service. For example, the expected demand amount of current vehicles in Guomao region may be 800. The supply amount of vehicles in the region may be 600. Therefore, the scheduling amount of vehicles in Guomao region may be 200. In some embodiments, the calculation of the actual scheduling amount may be related to the supply amount of the current service, the expected demand amount and other variations (e.g., time).

It should be noted that the above description of supply and demand scheduling based on the environmental information is provided for the purposes of illustration, and not intended to limit the scope of the present disclosure. For persons having ordinary skills in the art, the supply and demand scheduling may be modified or altered in forms and details under the teaching of the present disclosure. However, those modifications and alterations are within the scope of the above description. For example, steps 803 and 805 may be implemented simultaneously. The supply amount of current service and the expected demand amount may be calculated simultaneously. Step 803 may also be implemented after the step 805. In some embodiments, any other selection condition may be added between any two steps, e.g., storage and backup process for the result of any step.

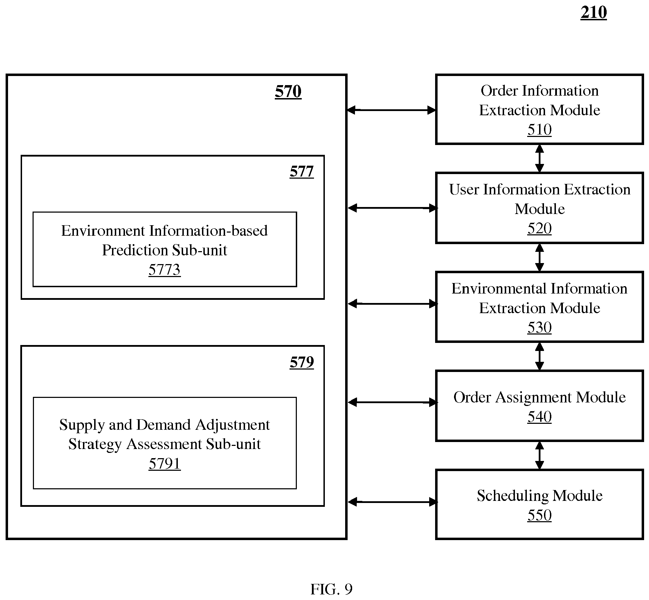

FIG. 9 is a block diagram illustrating a processing module 210 according to some embodiments of the present disclosure. The processing module 210 may include one or more order information extraction modules 510, user information extraction modules 520, environmental information extraction modules 530, order assignment modules 540, scheduling modules 550, calculation modules 570, etc. The calculation module 570 may include a prediction model calculation unit 577 and other modules (not shown in FIG. 9). The scheduling strategy calculation module 579 may include a supply and demand adjustment strategy assessment sub-unit 5791 and other sub-units (not shown in FIG. 9). In some embodiments, one or more of the information extraction module 510, the user information extraction module 520, the environmental information extraction module 530, the order assignment module 540, and the scheduling module 550 may be connected with the calculation module 570, respectively. As shown in FIG. 9, a connection between the modules and the units may be wired or wireless. Data may be transmitted between the modules and units as described above.

The order information extraction module 510 may be configured to acquire order information. The user information extraction module 520 may be configured to acquire user information. The environmental information extraction module 530 may be configured to acquire environmental information. The order assignment module 540 may be configured to assign an unassigned order to a user. The scheduling module 550 may be configured to send a scheduling strategy to a user. Various functions of the modules are described in connection with FIG. 5, and are not be repeated here.

The environmental information prediction unit 5773 may be configured to implement data prediction operation based on environmental information. The environmental information may include weather information, traffic information, event information, geographic information, the like, or any combination thereof (e.g., as described in connection with FIG. 5 above). The prediction may be a one-time or iterative prediction. The content of the prediction may include but is not limited to the number of orders, the number of users, a transaction volume of a specific region and/or time, the like, or any combination thereof. A method for the prediction may be a qualitative or quantitative prediction method. For example, the prediction method may include a moving average method, an exponential smoothing method, a trend extrapolation method, a regression prediction method, a grey prediction method, an autoregressive moving average prediction method, a cobweb model method, an analytic hierarchy process method, an entropy-weight method, a neural network method, a prediction method of a genetic algorithm, the like, or any combination thereof.

The supply and demand adjustment strategy assessment sub-unit 5791 may be configured to determine whether to initiate implementation of a scheduling strategy. The determination may be made using one or more methods, such as a threshold comparison method, a substitution method, etc. The determination may further include selecting the scheduling strategy. In some embodiments, in a short supply situation, the supply may be stimulated to increase, and/or the demand may be restrained. For example, the transport capacity may be scheduled from an unoccupied region to a busy region. As another example, a passenger may be reminded that it is hard to find a taxi. In some embodiments, in an oversupply situation, the demand may be stimulated to increase, and/or the supply may be restrained. For example, subsidies may be increased to stimulate the passenger's demand for taking a taxi. As another example, the transport capacity may be scheduled from a surplus region to an unoccupied region. In some embodiments, the scheduling strategy of diversion may be initiated in a region with unbalanced supply and demand. For example, passengers may be diverted among express cars, hitchhiking, cars for a specific service, taxi, and car sharing and/or carpool.

It should be noted that the above description of the processing module 210 is provided for the purposes of illustration, and not intended to limit the scope of the present disclosure. Each of the above modules and units may be optional and may be implemented by one or more components. And functions of each module and unit are not limited here. Each of the above modules and units may be added or omitted to implement various applications. For persons having ordinary skills in the art, the processing module 210 may be modified or altered in forms and details, or make several simple deduction or substitution, or the sequence of each module or unit may be adjusted, combined or split without inventive work under the teaching of the present disclosure. However, those modifications and alterations are within the scope of the above description. For example, one or more storage modules 220 may be integrated in the calculation module 570 to store calculated information. As another example, the environmental information prediction sub-unit 5773 and the supply and demand adjustment strategy assessment sub-unit 5791 may be integrated in a single module. The single module may predict parameters related to the scheduling, and simultaneously select and assess the scheduling strategy.

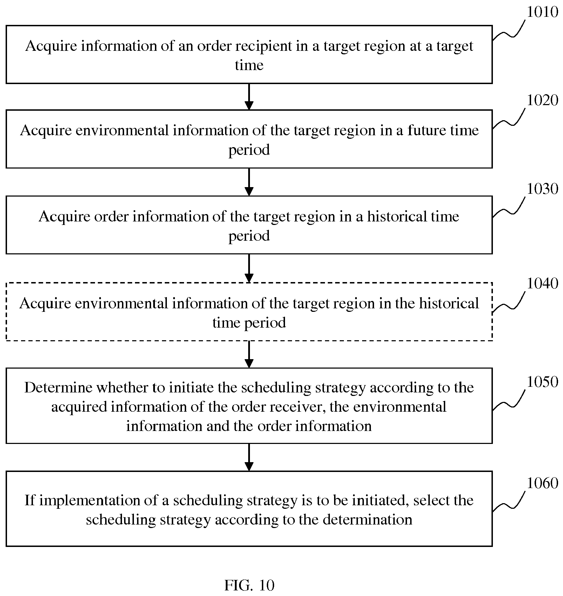

FIG. 10 is a flowchart illustrating an example process for transport capacity scheduling based on environmental information according to some embodiments of the present disclosure.

In step 1010, information of an order recipient in a target region at a target time may be acquired. The information of the order recipient may be acquired by the user information extraction module 520. The target region may be a random region, or a region in which the current location of a driver is positioned. The target region may be a fixed region (e.g.,

a region of which the center is the monument to the people's heroes in Tiananmen Square and the radium is 5 km), or a variable region (e.g., a region acquired by clustering based on condition of the real-time orders). The target time may be the current time, or a random time. For example, the number of the online driver terminal devices 140 at 16:00 on Jan. 29, 2016 in Tiananmen Square may be acquired.

In step 1020, environmental information of the target region in a future time period may be acquired. The environmental information may be acquired by the environmental information extraction module 530. The environmental information may include weather information, traffic information, event information, geographic information, the like, or any combination thereof (e.g., as described in detail in connection with FIG. 5). For example, the environmental information may be information of a daily rainfall expressed by $a$. If the daily rainfall is in a range from 0.05 mm to 10 mm, it may represent a light rain. If the rainfall is in a range from 10 mm to 30 mm (except 10 mm), it may represent a moderate rain. If the rainfall is more than 30 mm, it may represent a heavy rain. The future time period may be one or more specific moments. For example, if a current time is 7:00 AM on Friday, the future time period may be one hour after the current moment, i.e., 8:00 AM. The future time period may be one or more specific time periods. For example, if a current moment is 7:00 AM on Friday, the future time period may be one hour after the current moment, i.e., 7:00-8:00 AM. In some embodiments, the environmental information of one or more of the sub-regions of the target region may be acquired.

In step 1030, order information of the target region in a historical time period may be acquired. The order information may be acquired by the order information extraction module 510. The order information may include time information, type information, location information, price information of an order, the like, or any combination thereof (e.g., as described in detail in connection with FIG. 5). The historical time period may be one or more specific time instants or time periods. For example, the current moment is 7:00 AM on Friday and the future one-hour period is 7:00 AM-8:00 AM in the step 1020. Since the demand for taking a taxi may have strong periodicity of week, the time periods of 7:00-8:00 on Friday in the past N days may be selected to constitute the historical time period.

In step 1040, environmental information of the target region in the historical time period may be acquired. The e environmental information may be acquired by the environmental information extraction module 530. The step may be an optional step. In some embodiments, the historical order information may include environmental information relating to the order.

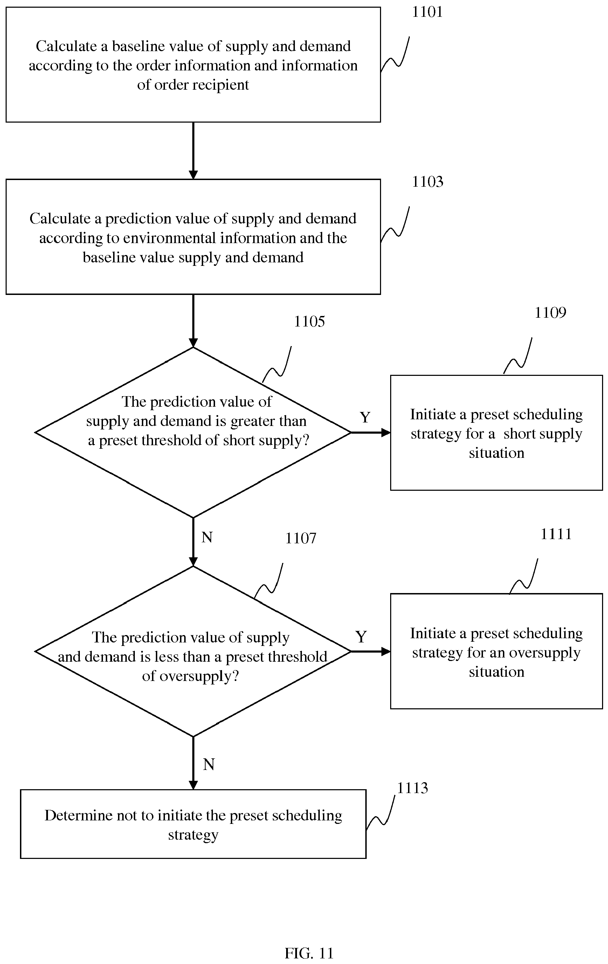

In step 1050, whether to initiate the scheduling strategy may be determined according to the acquired information of the order recipient, the environmental information and the order information. The determination may be implemented by the supply and demand adjustment strategy assessment sub-unit 5791. In some embodiments, the determination may include calculating a supply and demand baseline value, a supply and demand prediction value, etc. (e.g., as will be described in detail in connection with FIG. 11).

In step 1060, if implementation of a scheduling strategy is to be initiated, the scheduling strategy may be selected according to the determination. The scheduling strategy may include but is not limited to a supply and demand density push strategy, a hotspot characteristic push strategy, a statistical characteristic push strategy, an order push strategy, an order adjustment strategy or a prompt information push strategy, or any combination thereof (e.g., as described in detail in connection with FIG. 3). The scheduling strategy may be a scheduling strategy sent to the driver or the passenger. In some embodiments, a scheduling strategy for stimulating supply may be sent to the driver in order to deal with a short supply situation. The scheduling strategy may include increasing a driver's reward, adjusting a price dynamically, scheduling the transport amount from an unoccupied region to a busy region, the like, or any combination thereof. In some embodiments, a scheduling strategy for restraining demand may be sent to the passenger in order to deal with the short supply situation. The scheduling strategy may include reminding the passenger that it is difficult to find a taxi, reminding the passenger of a long wait time, reminding the passenger to increase a tip, adjusting a price dynamically, diversion of the car-hailing demand to other products with insufficient demand, the like, or any combination thereof. The other products may include taking a taxi, cars for specific service, car sharing and/or carpool, hitchhiking, etc. In some embodiments, a scheduling strategy for restraining supply may be sent to the driver in order to deal with the oversupply situation. The scheduling strategy may include reminding the driver of few passengers, reminding the driver of a long wait time, decreasing the driver's subsidy for accepting an order, adjusting a price dynamically, scheduling the transport capacity from a surplus region to an insufficient region, the like, or any combination thereof. In some embodiments, a scheduling strategy for stimulating demand may be sent to the passenger. The scheduling strategy may include increasing privileges for passenger, adjusting prices dynamically, providing other subsidies for taking a car (e.g., a passenger may get a chance for a free ride if the passenger takes a car for three times in one day. A passenger may get a free voucher of a specific supermarket if the passenger takes a car), reminding the passenger of a short wait time (e.g., compared with other travel methods, such as public transport), the like, or any combination thereof.

It should be noted that the above description of the method of the supply and demand scheduling based on the environmental information is provided for the purposes of illustration, and not intended to limit the scope of the present disclosure. For persons having ordinary skills in the art, the supply and demand scheduling may be modified or altered in forms and details under the teaching of the present disclosure. However, those modifications and alterations are within the scope of the above description. For example, in some embodiments, an assessment step may be inserted after the step 1020. If a preset condition (e.g., an average daily rainfall is more than 100 mm per day and reaches the range of rainstorms) is satisfied, a corresponding scheduling strategy may be initiated without implementing the steps of 1030-1050.

FIG. 11 is a flowchart illustrating an example method for initiating implementation of a scheduling strategy according to some embodiments of the present disclosure. Steps 1101-1113 described in FIG. 11 may be implemented by the supply and demand adjustment strategy assessment sub-unit 5791.

In step 1101, a baseline value of supply and demand may be calculated according to the order information and information of an order recipient. In some embodiments, the baseline value of supply and demand may be represented by a difference between the number of requests for car service and the number of online drivers. In some embodiments, the baseline value of supply and demand may be represented by a ratio of the number of requests for car service to the number of online drivers.

In step 1103, a prediction value of supply and demand may be calculated according to environmental information and the baseline value supply and demand. The environmental information may include environmental information in a future or historical period.

In steps 1105-1113, one or more determinations may be made based on the prediction value of supply and demand to get one or more determination results. Whether to initiate implementation of the scheduling strategy may further be determined according to the determination results. If the determination result is not to initiate implementation of the scheduling strategy, step 1113 may be performed. If the determination result is to initiate implementation of the scheduling strategy, the processing module 210 may select and initiate implementation of the corresponding scheduling strategy according to the determination.

In step 1105, the supply and demand adjustment strategy assessment sub-unit 5791 may compare the prediction value of supply and demand with a preset threshold of short supply. If the prediction value of supply and demand is greater than the preset threshold of short supply, the process may proceed to step 1109 and may initiate a preset scheduling strategy for a short supply situation. If the prediction value of supply and demand is less than the preset threshold of short supply, the process may proceed to step 1107 and may implement a further assessment.

According to some embodiments of the present disclosure, the condition that the prediction value of supply and demand is greater than the preset threshold of short supply may be denoted as:

$$(1+\alpha)\,\frac{D}{S} > T_1 \, . \tag{1}$$

The parameter $\alpha$ may represent a daily rainfall (e.g., 100 mm per day). The parameter $D$ may represent the number of order requests. The parameter $S$ may represent the number of order recipients. The parameter $T_1$ may represent a preset threshold of short supply. The expression $\frac{D}{S}$ may represent a supply and demand baseline value. The expression $(1+\alpha)\frac{D}{S}$ may represent a supply and demand prediction value.

In step 1107, the supply and demand adjustment strategy assessment sub-unit 5791 may compare the prediction value of supply and demand with a preset threshold of oversupply. If the prediction value of supply and demand is less than the preset threshold of oversupply, the system may proceed to step 1111 and initiate a preset scheduling strategy for an oversupply situation. If the prediction value of supply and demand is greater than the preset threshold of oversupply, the system may proceed to step 1113 and not initiate the preset scheduling strategy.

According to some embodiments of the present disclosure, the condition that the prediction value of supply and demand is less than the preset threshold of oversupply may be denoted as:

$$(1+\alpha)\,\frac{D}{S} > T_2 . \tag{2}$$

The parameter $\alpha$ may represent a daily rainfall (e.g., 100 mm per day). The parameter $D$ may represent of the number of order requests. The parameter $S$ may represent the number of order recipients. The parameter $T_2$ may represent a preset threshold of oversupply. The expression $\frac{D}{S}$ may represent a supply and demand baseline value. The expression $(1+\alpha)\frac{D}{S}$ may represent a supply and demand prediction value.

It should be noted that the above description of the method of the supply and demand scheduling based on the environmental information is provided for the purposes of illustration, and not intended to limit the scope of the present disclosure. It is apparent that for persons having ordinary skills in the art, the supply and demand scheduling may be modified or altered in forms and details under the teaching of the present disclosure. However, those modifications and alterations are within the scope of the above description. For example, steps 1105 and 1107 may be implemented simultaneously. The numerical relationship between the supply and demand prediction value and the preset threshold of oversupply may be determined simultaneously. In some embodiments, other selection conditions may be added between any two steps, e.g., storage and backup process for results of any step.

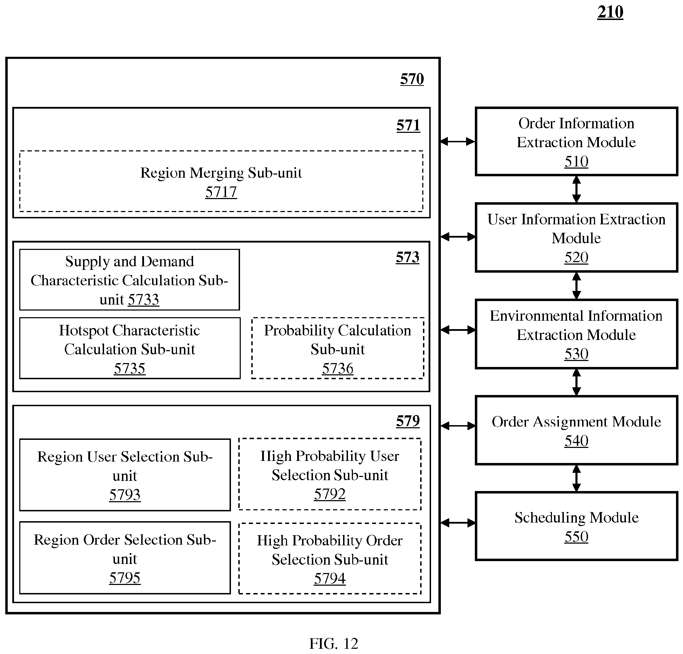

FIG. 12 is a schematic block diagram illustrating a processing module 210 according to some embodiments of the present disclosure. As shown in FIG. 12, the processing module 210 may include one or more order information extraction modules 510, user information extraction modules 520, environmental information extraction modules 530, order assignment modules 540, scheduling modules 550, calculation modules 570, etc. The calculation module 570 may include an information calculation unit 571, a characteristic index calculation unit 573, and a scheduling information calculation unit 579 and other units (not shown in FIG. 12). The information calculation unit 571 may include a region merging sub-unit 5717, other sub-units (not shown in FIG. 12), or any combination thereof. The scheduling strategy calculation module 579 may include a region user selection sub-unit 5793, a region order selection sub-unit 5795, a high probability user selection sub-unit 5792, a high probability order selection sub-unit 5794, other sub-units (not shown in FIG. 12), or any combination thereof. In some embodiments, one or more modules of the information extraction module 510, the user information extraction module 520, the environmental information extraction module 530, the order assignment module 540 and the scheduling module 550 may be connected with the calculation module 570, respectively. As shown in FIG. 12, the connection between the modules and the units may be wired or wireless. Data may be transmitted between the modules and units as described above.

The order information extraction module 510 may be configured to acquire order information. The user information extraction module 520 may be configured to acquire user information. The environmental information extraction module 530 may be configured to acquire environmental information. The order assignment module 540 may be configured to assign an unassigned order to a user. The scheduling module 550 may be configured to send scheduling strategy to a user. Various functions of the modules are described in connection with FIG. 5, and are not be repeated here.

The region merging sub-unit 5717 may be configured to merge regions. The regions may be a result of the region division by the region division sub-unit 5711 (not shown in FIG. 12), or region information accessed from other information sources 160 directly (e.g., the order information may include region affiliation information of the order, etc.). In some embodiments, the regions may be merged according to different characteristic parameters (e.g., the number of orders, the number of users, supply and demand characteristic information, etc.). The merging may be merging one or more sub-regions into a larger sub-region, or dividing a sub-region into one or more different sub-regions. The region information acquired by the merging may be stored in the merging region sub-unit 5717, the storage module 220, or any storage devices described in the present disclosure that may be integrated in the system or external to the system.

The supply and demand characteristic calculation sub-unit 5733 may be configured to calculate a supply and demand characteristic index. The supply and demand characteristic index may include a real-time supply and demand characteristic index, a historical supply and a demand characteristic index, a predictive supply and demand characteristic index, the like, or any combination thereof. The supply and demand characteristics may be represented by a ratio of the number of orders to the number of the order recipients, an order density, other indexes that may reflect the relationship between the supply and the demand, the like, or any combination thereof. The number of orders may be the number of real-time orders, the number of historical orders and the number of predictive orders. The number of the order recipients may be the number of recipients of real-time orders, the number of recipients of historical orders, the number of recipients of predictive orders, the like, or any combination thereof. The order density may be an area density, a time density, a complex density of area and time of an order, the like, or any combination thereof. The calculated supply and demand characteristic information may be stored in the supply and demand calculation unit 5733, the storage module 220, or any storage devices described in the present disclosure that may be integrated in the system or external to the system. The hotspot calculation sub-unit 5735 may be configured to calculate a hotspot characteristic index of a region. The hotspot characteristic index may include a real-time hotspot characteristic index, a historical hotspot characteristic index, a predictive hotspot characteristic index, the like, or any combination thereof. The hotspot characteristic index may be a hotspot characteristic of a user, a hotspot characteristic of an order, the like, or any combination thereof. The hotspot characteristics may be represented by an absolute number (e.g., the number of online drivers in a region representative of a hotspot characteristic of the region, etc.), or a relative number (e.g., a rank of the number of the online drivers in a region among multiple regions representative of a hotspot characteristic of the region, etc.). The hotspot characteristic information may be stored in the hotspot characteristic calculation sub-unit 5735, the storage module 220, or any other storage devices described in the present disclosure that may be integrated in the system or external to the system.

The probability calculation sub-unit 5736 may be configured to calculate a probability that a user may select an order associated with the user. The user may be a service provider (e.g., a driver) or a service requester (e.g., a passenger). The association between the user and the order may be based on association of location information, association of time information, association of preference information, association of other information, the like, or any combination thereof. For example, if the distance between the departure location of an order and the location of a driver is within a preset range (e.g., 1 km, 3 km), the order may be determined to be associated with the driver. As another example, if the departure time of an order is within an unoccupied time period of a driver, the order may be determined to be associated with the driver. In some embodiments, the probability that a user may select an order associated with the user may be determined by one or more factors. The factor may include an order-based characteristic (e.g., a departure location, a departure time, a destination, an expected arrival time, luggage information, a tip, etc.), a service provider's characteristic (e.g., driving experience, age, gender, a historical situation of taking orders, evaluation grade, violation record, preference for receiving an order, etc.), a service user's characteristic (e.g., gender, age, evaluation grade, health condition, preference for an order, etc.), an environmental characteristic (e.g., weather conditions, traffic conditions, event information, etc.). The probability calculated by the calculation may be stored in the probability calculation sub-unit 5736, the storage module 220, or any storage devices described in the present disclosure that may be integrated in or external to the scheduling engine 110 or the on-demand service system 105.

For each order in a specific region, the region user selection sub-unit 5793 may be configured to select one or more users for presentation of the order. For each user, the region order selection sub-unit 5795 may be configured to select an order to be presented to the user. The selection may be made randomly or based on certain rules. The rules may include but are not limited to a probability, location information, a user's preference, the like, or any combination thereof. The user may be derived from an interior of a specific region or a boundary region between the specific region and other regions. The selection(s) made by the region user selection sub-unit 5793 and the region order selection sub-unit 5795 may be pushed to the user by the order assignment unit 540. Additionally or alternatively, the selection(s) may be stored in the storage unit (not shown in FIG. 12) for further processing.

The high probability user selection sub-unit 5792 may be configured to select, for each order, one or more users that are more likely to select the order from users relating to the order (e.g., a user with a relatively high probability and/or likelihood of accepting the order). The high probability order selection sub-unit 5794 may be configured to select an order that the user is likely to select from orders relating to the user (e.g., an order with a relatively high probability of being accepted by the user). The selection may be implemented by ranking. For example, after ranking from top to bottom, top 10 or 10% may be selected. The selection may be made by comparing a threshold with a probability and/or likelihood of accepting an order and/or a probability and/or likelihood of acceptance by a user. For example, a threshold of the probability may be preset as 0.90. A user or an order with a probability and/or likelihood higher than the threshold may be regarded as being an order or a user with a relatively high probability.

It should be noted that the above description of the processing module 210 is provided for the purposes of illustration, and not intended to limit the scope of the present disclosure. Each of the above modules and units may be optional and may be implemented by one or more components. And functions of each module and unit are not limited here. Each of the above modules and units may be added or omitted to implement various applications. For example, the high probability user selection sub-unit 5792 and the region user selection sub-unit 5793 may be integrated in a single sub-unit. As another example, one or more storage units may be added to store the calculation of the hotspot characteristics or the calculation result of the supply and demand characteristics. The units expressed by dash lines may be not necessary and may be selected to add or omitted according to specific circumstance or demand.

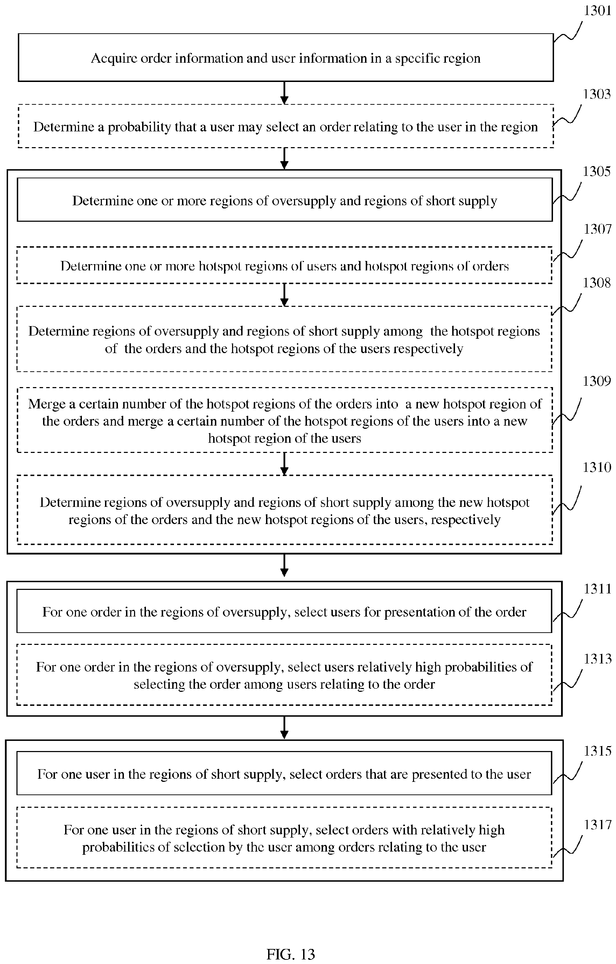

FIG. 13 is a flowchart illustrating an example process for transport capacity scheduling based on environmental information according to some embodiments of the present disclosure.

In step 1301, order information and user information in a specific region may be acquired. The order information may be acquired by the order information extraction module 510. The order information may include time information of an order, type information of an order, location information of an order, price information of an order, the like, or any combination thereof (e.g., as described in connection with FIG. 5 above). The user information may be acquired by the user information extraction module 520. The user information may include identity information, information of a terminal device, preference information, historical order information, credit information of a user, the like, or any combination thereof (e.g., as described in connection with FIG. 5 above).

In step 1303, a probability that a user may select an order relating to the user in the region may be determined. In some embodiments, step 1303 may be optional. For example, step 1303 may be performed after step 1301 or omitted. The probability may indicate the user's interest in selecting the order.

In some embodiments, each order may be associated with one or more users relating to the order. For example, a one-to-one association may be determined for an order and a user. A possibility and/or likelihood that a user may select the order may be calculated for each association of an order and a user relating to the order. Probabilities calculated for multiple associations of the order and the users related to the order may be the same or different. In some embodiments, each order may be associated with a group of users relating to the order using one-to-many method. Probabilities indicating that the group of users select the order may be calculated among the association. The number of uses of the groups may be same or different. In some embodiments, the location of an order relating to a user of a specific region may or may not be in the region. For example, the location of an order relating to a driver Zhao of Zhongguancun may be in Haidianhuangzhuang. In some embodiments, a user relating to an order of a specific region may or may not be in the region. For example, a user relating to an order of Zhongguancun may be in Haidianhuangzhuang.

In some embodiments, one or more regions of oversupply and regions of short supply may be determined in step 1305. The determination may be made by the supply and demand characteristic calculation sub-unit 5733. In some embodiments, the determination of the regions of oversupply and/or the regions of short supply may be acquired by comparing a ratio of the number of orders to the number of the service providers with a threshold. The number of orders may be the number of actual orders, the number of historical orders, the number of predictive orders, the like, or any combination thereof. The number of orders may or may not include information of a demand amount of orders (e.g., a description of No. 1001 order stating that five passengers need to take two cars simultaneously). The number of the service providers may or may not include information of the service providers' capacity for service provision (e.g., a car of a driver can carry four passengers, and one passenger has been in the car, and the car can carry another three passengers for car sharing and/or carpool). The specific threshold may be any numerical value. In some embodiments, the specific threshold may be 1. In some embodiments, the threshold may be less than 1 (e.g., 0.01, 0.5, 0.6 and 0.9), or much less than 1 (e.g., 0.0001 and 0.0000001), etc. In some embodiments, the specific threshold may be greater than 1 (e.g., 1.1, 1.3, 1.9 and 10) or much greater than 1 (e.g., 996 and 10000), etc. The specific thresholds used to determine the regions of oversupply and the regions of short supply may be equal. For example, the thresholds for the regions of oversupply and the regions of short supply may both be set as 1. A region may be regarded as being a region of short supply when the region is associated with a ratio of the number of orders to the number of the service providers that is greater than or equal to 1. A region may be regarded as being a region of oversupply when the region is associated with a ratio of the number of orders to the number of the service providers is less than 1. The specific thresholds used to determine the regions of oversupply and the regions of short supply may or may not be equal. For example, the threshold for the region of short supply may be fixed as 0.7. The threshold for the region of oversupply may be fixed as 2.

In step 1307, one or more hotspot regions of users and hotspot regions of orders may be determined. The determination may be made by the hotspot characteristic calculation sub-unit 5735.

In some embodiments, the hotspot region of the orders may be determined by comparing the number of orders and/or an order density with a hotspot threshold. The number of orders may be the number of actual orders, the number of historical orders, the number of preset orders, the number of predictive orders, the like, or any combination thereof. The number of orders may or may not include information of a demand amount of orders. The order density may be an area density, a time density, a complex density of area and time of an order, the like, or any combination thereof. For example, a value of the order density may be 100 orders per square kilometer, 80 orders per minute, 120 orders per square kilometer per minute, the like, or any combination thereof. The hotspot threshold of the order may be a fixed numerical value, or a variable value (e.g., varying according to time or characteristics of the region), etc.

In some embodiments, the hotspot region of the users may be determined by comparing the number of users and/or a user density with a user threshold. The number of users may be an actual number of users, a historical number of users, a predictive number of users, the like, or any combination thereof. The number of users corresponding to the service providers may or may not include information of the user's capacity for service provision. The user density may be an area density, a time density, a complex density of area and time of a user, the like, or any combination thereof. For example, a value of the user density may be 100 users per square kilometer, 100 users per minute, 100 users per square kilometer per minute, the like, or any combination thereof. The hotspot threshold of the users may be a fixed numerical value, or a variable value (e.g., varying according to time or characteristics of the region), etc.

In some embodiments, the hotspot regions of the orders and/or the users may be determined by ranking. For example, the scheduling engine 110 may be configured to monitor distributions of the number pf orders and the number of users of the sub-regions (or grids) in the regions. More particularly, for example, the scheduling engine 110 may count the number of online orders and/or online users in the sub-region (or grid) with a frequency of, e.g., two seconds per time. Based on the acquired information of the counting, the number of order and/or the number of users of the region may be ranked by the scheduling engine 110. The top ranked regions may then be selected as the hotspot regions of the orders and/or the users.

In step 1308, the region of oversupply and the region of short supply may be determined among the hotspot regions of the orders and the hotspot regions of the users, respectively. The determination may be made by the supply and demand characteristic calculation sub-unit 5733.

In step 1309, a certain number of the hotspot regions of the orders may be merged into a new hotspot region of the orders and a certain number of the hotspot regions of the users may be merged into a new hotspot region of the users. The merging may be implemented by the region merging sub-unit 5717. In some embodiments, adjacent regions may be merged into a new hotspot region of the orders and/or the users. Additionally or alternatively, nonadjacent regions may be merged into a new hotspot region of the orders and/or the users. In some embodiments, two regions or more than two regions (e.g., 3, 8, 16 and 100) may be merged into a new hotspot region of the orders and/or the users.

In step 1310, regions of oversupply and regions of short supply may be determined among the new hotspot regions of the orders and the new hotspot regions of the users, respectively. The determination may be implemented by the supply and demand characteristic calculation sub-unit 5733.

For one order in the regions of oversupply, users for presentation of the order may be selected in step 1311. The step 1311 may be implemented by the region user selection sub-unit 5793. The method of selecting the users may be made randomly, or based on certain rules. For example, the users may be selected according to the probability determined in the step 1303. As another example, the users may be selected in an order of from smallest to greatest of distances between the departure location of the order and the current locations of the users.

For one order in the region of oversupply, users with relatively high probabilities of selecting the order may be selected among users relating to the order in step 1313. The step 1313 may be implemented by the high probability user selection sub-unit 5792. In some embodiments, among the users relating to the order, users may be ranked from high to low according to the probabilities that the users select the order. A certain number (e.g., 1 and 10) or a certain proportion (e.g., 5% and 10%) of the users may be selected accordingly. In some embodiments, a threshold (e.g., 0.56 and 0.98) of the probability may be fixed. The users with relatively high probabilities of selecting the order may be determined by comparing the threshold with the probability among the users relating to the order.

For one user in the regions of short supply, orders that are presented to the user may be selected in step 1315. The step 1315 may be implemented by the region order selection sub-unit 5795. A method of selecting the users may be made randomly or based on certain rules. For example, the orders may be selected according to the probability determined in the step 1303. As another example, the orders may be selected in an order of from nearest to farthest distances between destinations that the user prefer to of the orders.

For one user in the regions of short supply, orders with relatively high probabilities of selection by the user may be selected among orders relating to the user in step 1317. The step 1317 may be implemented by the high probability order selection sub-unit 5794. Among the orders relating to the user, a certain number (e.g., 1 or 10) or proportion (e.g., 5% or 10%) of orders may be selected after ranking the orders in reverse order of probability that the user selects the orders. In some embodiments, a threshold (e.g., 0.56 and 0.96) of the probability may be fixed. The orders with relatively high probabilities of selection by the user may be determined by comparing the threshold with the probabilities among the orders relating to the user.

It should be noted that the above description of the process for the supply and demand scheduling based on the environmental information is provided for the purposes of illustration, and not intended to limit the scope of the present disclosure. For persons having ordinary skills in the art, the supply and demand scheduling may be modified or altered in forms and details under the teaching of the present disclosure. However, those modifications and alterations are within the scope of the above description. For example, in some embodiments, a region division step may be inserted before the step 1301. In some embodiments, the steps 1307-1310, the step 1313 and the step 1317 may be optional steps. As another example, the step 1311 and the step 1315 may be implemented in any order. The two steps may be implemented sequentially or simultaneously. In some embodiments, other selection conditions may be added between any two steps, e.g., storage and backup of results of any step.

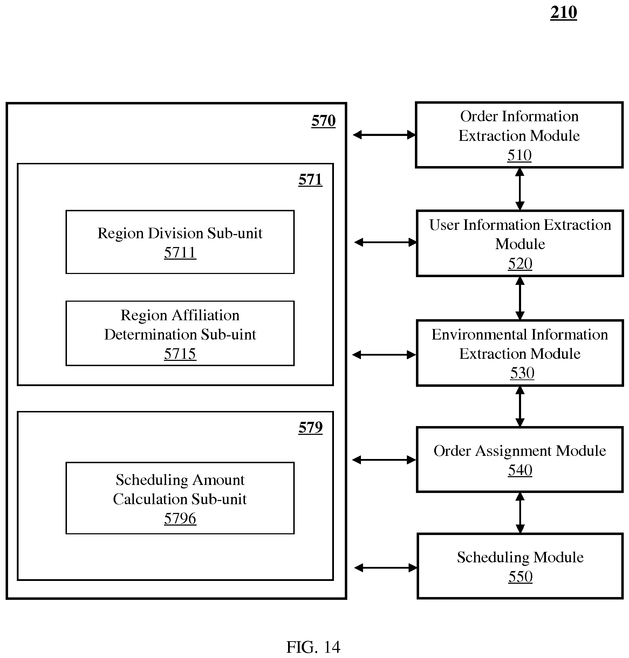

FIG. 14 is a schematic block diagram illustrating a processing module 210 according to some embodiments of the present disclosure. As shown in FIG. 14, the processing module 210 may include one or more order information extraction modules 510, user information extraction modules 520, environmental information extraction modules 530, order assignment modules 540, scheduling modules 550, calculation modules 570, etc. The calculation module 570 may include a region information calculation unit 571, a scheduling strategy calculation unit 579 and other units (not shown in FIG. 14). The region information calculation unit 571 may include a region division sub-unit 5711, a region affiliation determination sub-unit 5715, and any other sub-units (not shown in FIG. 14). The scheduling strategy calculation unit 579 may include a scheduling amount calculation sub-unit 5796 and other sub-units (not shown in FIG. 14). In some embodiments, one or more order information extraction modules 510, user information extraction modules 520, environmental information extraction modules 530, order assignment modules 540, one or more scheduling modules 550 may be connected with the calculation module 570 respectively. As shown in FIG. 14, a connection between the modules and units may be wired or wireless. Data may be transmitted between the modules and units as described above.

The order information extraction module 510 may be configured to acquire order information. The user information extraction module 520 may be configured to acquire user information. The environmental information extraction module 530 may be configured to acquire environmental information. The order assignment module 540 may be configured to assign an unassigned order to a user. The scheduling module 550 may be configured to send scheduling strategy to a user. Various functions of the modules are described in connection with FIG. 5, and are not be repeated here.

The region division sub-unit 5711 may be configured to perform a region division for a predetermined area. The region division method may include a grid-based division method, a cluster-based division method, a division method based on a specific rule, the like, or any combination thereof (e.g., as described in detail in connection with FIGS. 7-A, 7-B and 7-C). For example, the region division may be based on administrative regions (e.g., Haidian district, Chaoyang district, etc.), longitude and latitude information, distribution conditions of orders, business districts, buildings, street names, the like, or any combination thereof.

The region affiliation determination sub-unit 5715 may be configured to determine a region that a specific location belongs to, conditions of users in a specific region, etc. The specific location may be a current location of a driver, a departure location of an order, a destination of an order, the like, or any combination thereof. The user may be a driver or a passenger. For example, the current location of driver Zhao is NO.3, Haidian Street. The location of driver Zhao may be located in Zhongguancun region determined by the calculation of the region affiliation determination sub-unit 5715. As another example, the number of all drivers or ordering passengers (e.g., passengers that place orders in a certain time of period and/or at a certain time) in Zhongguancun region may be determined by the region affiliation determination sub-unit 5715. Various functions of the region affiliation determination sub-unit 5715 are described in connection with FIG. 6, and are not be repeated here.

The scheduling amount calculation sub-unit 5796 may be configured to calculate parameters related to scheduling tasks (also referred to as "scheduling-related parameters"). The scheduling-related parameters may include but are not limited to an actual scheduling amount, a potential scheduling amount, an increment of potential transaction volumes, a sum of increments of potential transaction volumes, a maximum sum of increments of potential transaction volumes, the like, or any combination thereof. The scheduling-related parameters may calculated based on real-time data, historical data, future data, the like, or any combination thereof. Various functions of the scheduling amount calculation sub-unit 5796 are described in connection with FIG. 6, and are not be repeated here.

It should be noted that the above description of the processing module 210 is provided for the purposes of illustration, and not intended to limit the scope of the present disclosure. Each of the above modules and units may be optional and may be implemented by one or more components. The functions of each module and unit are not limited here. Each of the above modules and units may be added or omitted to implement various applications. For persons having ordinary skills in the art, the processing module 210 may be modified or altered in forms and details, or make several simple deduction or substitution, or the sequence of each module or unit may be adjusted, combined or split without inventive work under the teaching of the present disclosure. However, those modifications and alterations are within the scope of the above description. For example, the region division sub-unit 5711 and the region affiliation determination sub-unit 5715 may be integrated in one sub-unit. The sub-unit may be configured to simultaneously perform region division operation and determine a region that a specific location belongs to. As another example, one or more storage sub-units may be integrated in the region division sub-unit 5711, the region affiliation determination sub-unit 5715 and the scheduling amount calculation sub-unit 5796 (not shown in FIG. 14) respectively. The storage sub-unit may be configured to store primary data, intermediate data and/or result information of calculation.

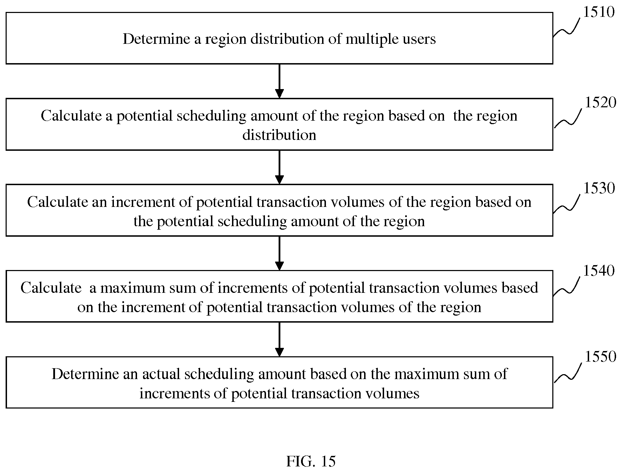

FIG. 15 is a flowchart illustrating an example method of transport capacity scheduling based on transaction volume information according to some embodiments of the present disclosure. In some embodiments, a dependent variable may be changed by adjusting one or more independent variables. A utilization rate of vehicles may be improved if the dependent variable reaches a specific value. The independent variables may be a number of service providers, a ratio of the number of drivers to the number of passengers (e.g., a ratio of the number of drivers to the number of passengers), a number of orders , an increment of service providers, an increment of ratios of drivers to passengers (the number of drivers/the number of passengers), an increment of orders, the like, or any combination thereof. The dependent variable may be a transaction volume (e.g., the number of transactions), an increment of transaction volumes, a sum of increments of transaction volumes, customer satisfaction scores, a distribution of rates of grabbing orders successfully by service providers (e.g., most service providers may or may not have a high rate of grabbing order successfully, etc.), a distribution of transaction rates of service providers (e.g., most service providers may or may not have a high transaction rate, etc.), etc. In some embodiments, the total number of service providers or the total number of orders may be variable or constant during the entire process of transport capacity scheduling.

For brevity, the description of the method of transport capacity scheduling in FIG. 15 may take a specific condition as an example. The specific condition may be that an increment of service providers is designated as the independent variable, a sum of increments of transaction volumes is designated as the dependent variable, and the total number of service providers is constant. It will be appreciated that the method of transport capacity scheduling described in FIG. 15 may be implemented under other conditions, and is not limited here.

In step 1510, a distribution of multiple users by region may be determined. The determination may be made by the region division sub-unit 5711 and/or the region affiliation determination sub-unit 5715. In some embodiments, the users may refer to service providers or service requesters. Merely for illustration, the description of the method of transport capacity scheduling in FIG. 15 may take service providers as an example. It will be appreciated that the users in the method of transport capacity scheduling described in FIG. 15 may be service requesters. For example, if the method of transport capacity scheduling is implemented in a scheduling system for tourists, the users may be the service requesters (e.g., tourists).

In some embodiments, the region division may be performed based on administrative regions (e.g., Haidian district, Chaoyang district, etc.), longitude and latitude information, distribution conditions of orders, business districts, buildings, street names, the like, or any combination thereof. In some embodiments, regions that service providers are associated with may be determined according to the location information of the service providers. Therefore, distribution conditions of the service providers in the regions may be determined. It will be appreciated that the number of vehicles are usually in accordance with the number of service providers, so these two numbers can be used interchangeably in the present disclosure. For example, in a predetermined area, if there are m vehicles and n hotspot regions, a matrix may be denoted as:

$$A_{n \times m} = \begin{bmatrix} a_{01} & \cdots & a_{0M} \\ \vdots & a_{ij} & \vdots \\ a_{N1} & \cdots & a_{NM} \end{bmatrix}, \quad a_{ij} = \begin{cases} 1, & \text{the vehicle j is in region i} \\ 0, & \text{the vehicle j is not in region i} \end{cases} \quad (3)$$

The vehicles may be referred to using indices starting form 1. The hotspot regions may be referred to using indices starting from 0. A value of "0" may be assigned to a region to indicate that the region is not a hotspot region in the predetermined area. In some embodiments, the hotspot regions may be regions with a greater total number of orders, a greater density of orders, a smaller ratio of the number of drivers to the number of passengers, a greater increment of orders, any other regions that can reflect characteristics of hotspot regions, or any combination thereof.

In step1520, a potential scheduling amount of the region may be calculated based on the region distribution. The potential scheduling amount may be calculated by the scheduling amount calculation sub-unit 5796. In some embodiments, the potential scheduling amount may be the number of scheduling-in of vehicles and/or the number of scheduling-out of vehicles. In some embodiments, the parameter $A'_{n \times m}$ may denote a distribution of the vehicles in a region before scheduling, and the parameter $A_{n \times m}$ may denote a distribution of the vehicles in the region after scheduling. Equation (4) can be obtained accordingly as:

$$\Delta Q_{n \times 1}^{T} = [\Delta q_0 \quad \cdots \quad \Delta q_n]^{T}. \quad (4)$$

The parameter $\Delta Q_{n \times 1}^{T}$ may denote an increment of the number of vehicles in a region after scheduling. For example, the parameter $\Delta q_i$ may denote the increment of the number of vehicles in the region i after scheduling. The parameter $\Delta q_i$ may be positive or negative. By performing one or more matrix operations, Equation (5) can be obtained as:

$$A_{n \times m} \times E_{m \times 1}^{T} - A'_{n \times m} \times E_{m \times 1}^{T} = \Delta Q_{n \times 1}^{T}. \quad (5)$$

The $E_{m \times 1}^{T}$ may denote a unit column vector represented as:

$$E_{m \times 1}^{T} = [1 \quad \cdots \quad 1]^{T}. \quad (6)$$

For example, in a predetermined area, four vehicles (e.g., vehicle 1, vehicle 2, vehicle 3, and vehicle 4) may be available and one region may be a hotspot region currently. Before scheduling, vehicle 1, vehicle 2, and vehicle 3 may be located in region 0. Vehicle 4 may be located in region 1. After scheduling, vehicle 1 may be located at in region 0, while vehicle 2, vehicle 3, and vehicle 4 may be located in region 1. The distribution of the vehicles $A'_{n \times m}$ in the region before scheduling may be denoted as:

$$A'_{n \times m} = \begin{bmatrix} 1 & 1 & 1 & 0 \\ 0 & 0 & 0 & 1 \end{bmatrix}. \quad (7)$$

The distribution of the vehicles $A_{n \times m}$ in the region after scheduling may be denoted as:

$$A_{n \times m} = \begin{bmatrix} 1 & 0 & 0 & 0 \\ 0 & 1 & 1 & 1 \end{bmatrix}. \quad (8)$$

According to Equations (4) - (8), the parameter $\Delta Q_{n \times 1}^{T}$ may be denoted as:

$$\Delta Q_{n\times 1}^{T} = \begin{bmatrix} 1 & 0 & 0 & 0 \\ 0 & 1 & 1 & 1 \end{bmatrix} \times \begin{bmatrix} 1 \\ 1 \\ 1 \\ 1 \end{bmatrix} - \begin{bmatrix} 1 & 1 & 1 & 0 \\ 0 & 0 & 0 & 1 \end{bmatrix} \times \begin{bmatrix} 1 \\ 1 \\ 1 \\ 1 \end{bmatrix} = \begin{bmatrix} -2 \\ 2 \end{bmatrix}. \quad (9)$$

The calculation results of Equation (9) may represent that two vehicles are dispatched from region 0, and two vehicles are dispatched to region 1.

In step 1530, an increment of potential transaction volumes of the region may be calculated based on the potential scheduling amount of the region. The increment of potential transaction volumes may be calculated by the scheduling amount calculation sub-unit 5796. In some embodiments, the increment of potential transaction volumes is correlated with an increment of the number of vehicles, a number of orders, a transaction rate, etc. In some embodiments, the transaction rate is correlated with a ratio of the number of drivers to the number of passengers (the number of drivers/the number of passengers). For example, the relation between the transaction rate $E$ and the ratio of the number of drivers to the number of passengers $\frac{q}{o}$ may be denoted as:

$$E = k * ln\left(\frac{q}{o} + 1\right). \quad (10)$$

The parameter $k$ may represent a fitting coefficient. The parameter $q$ may denote the number of service providers (e.g., the number of drivers) or the number of vehicles. The parameter o may denote the number of orders.

In some embodiments, the transaction volume may be represented as a function of the transaction rate and the number of orders. For example, the transaction volume $S$ may be denoted as:

$$S = k * ln\left(\frac{q}{o} + 1\right) * o. \quad (11)$$

The parameter $k$ may denote the fitting coefficient. The parameter $q$ may denote the number of service providers (e.g., the number of drivers) or the number of vehicles. The parameter $o$ may denote the number of orders.

In some embodiments, for the purpose of promoting the utilization rate of vehicles by the method of transport capacity scheduling without changing the total number of vehicles, a relation between an increment of transaction volumes and an increment of vehicles in a single region may be calculated. For example, by performing a differential operation to Equation (11), Equation (12) may be obtained as:

$$dS = \frac{\partial\left[k*ln\left(\frac{q}{o}+1\right)*o\right]}{\partial q} * dq = \left(k * \frac{o}{q+o}\right) * dq. \quad (12)$$

It can be disclosed from Equation (12) that: 1) the increment of transaction volumes is positively correlated with the number of orders. For example, if there are more orders, the promotion to the transaction volume by the increment of vehicles may be more obvious. 2) The increment of transaction volumes is negatively correlated with the number of vehicles. For example, if there are less vehicles, the promotion on the transaction volume by the increment of vehicles may be more obvious. 3) The increment of transaction volumes is negatively correlated with the ratio of the number of drivers to the number of passengers. For example, the lower the ratio of the number of drivers to the number of passengers is, the promotion on the transaction volume by the increment of vehicles may be more obvious.

In some embodiments, a functional relation between an increment of transaction volumes and an increment of vehicles may be calculated. For example, by performing an integral operation to Equation (12), Equation (13) may be obtained as:

$$\Delta S = \int_{q}^{q+\Delta q}\left(k * \frac{o}{q+o}\right) * dq. \quad (13)$$

Equation (13) can be simply written as:

$$f = (o, \quad q, \quad \Delta q) = \int_q^{q+\Delta q} \left( k * \frac{o}{q+o} \right) * dq = k * ln \left( \frac{q+o+\Delta q}{q+o} \right). \qquad (14)$$

In some embodiments, a sum of increments of potential transaction volumes in a predetermined area may be obtained according to increments of vehicles and increments of potential transaction volumes in regions obtained by step 1520.

It will be appreciated that the above description about the functional relation between the increment of transaction volumes and the increment of vehicles is merely by way of example. The functional relation may also include other functional relations, and is not intended to be limited here.

It will be appreciated that the description of steps 1520 and 1530 are merely provided as an example of a scheduling method. To calculate a maximum sum of increments of potential transaction volumes, sums of increments of potential transaction volumes of multiple potential scheduling methods may be calculated. In some embodiments, the sums of increments of potential transaction volumes may be calculated for a part or all of the potential scheduling methods. For example, some constraint conditions may be set to filter out a part of the potential scheduling methods and the remained part of the potential scheduling methods may be calculated. The constraint conditions may include a scheduling distance of a potential scheduled vehicle (a vehicle that have potential to be scheduled) and an expected region is no more than a certain threshold (e.g., no more than four kilometers, etc.), a service provider with a potential scheduled vehicle not executing orders during a preset time period (e.g., no order is received in a successive ten minutes, etc.), a ratio of the number of drivers to the number of passengers is no more than a threshold for a single region (e.g.,

$q_i + \dfrac{\Delta q_i}{q_i} < K,$ etc.), the like, or any combination thereof.

In step 1540, a maximum sum of increments of potential transaction volumes may be calculated based on the increment of potential transaction volumes of the region. The calculation may be performed by the scheduling amount calculation sub-unit 5796. In some embodiments, multiple increments of potential transaction volumes of the region may be generated by multiple potential scheduling methods in a predetermined area. The sum of increments of potential transaction volumes may be calculated accordingly for the scheduling methods. The maximum sum of increments of potential transaction volumes may be obtained by comparing, analyzing, and calculating the sums of increments of potential transaction volumes.

In step 1550, an actual scheduling amount of every region may be determined based on the maximum sum of increments of potential transaction volumes. The determination may be made by the scheduling amount calculation sub-unit 5796. In some embodiments, a scheduling method corresponding to the maximum sum of increments of potential transaction volumes may be selected, and may be determined as an actual scheduling method. In some embodiments, a scheduling strategy may be sent to a service provider with a potential scheduled vehicle according to the actual scheduling method. For example, the scheduling strategy may be sent to the mobile device 2900 according to the actual scheduling method. The scheduling strategy may include but is not limited to a supply and demand density push strategy, a hotspot characteristic push strategy, a statistical characteristic push strategy, an order push strategy, an order adjustment strategy, a prompt information push strategy, the like, or any combination thereof. In some embodiments, rewards, subsidies or privileges may be provided to the service providers when sending the scheduling strategy to which. The scheduling efficiency for the service providers may be promoted.

In some embodiments, multiple intelligent searching algorithms may be employed for optimally calculating the maximum sum of increments of potential transaction volumes. Exemplary intelligent searching algorithms may include a genetic algorithm, an ant colony algorithm, the like, or any combination thereof. For example, when using a hill climbing algorithm, an initial solution may be calculated according to the above formulas. A new solution may be calculated by transforming a part of the current solution. Then whether the new solution is better may be determined. In response to determining that the new solution is better, the current solution may be replaced by the new solution. Alternatively, in response to determining that the new solution is not better, the current solution may be output. For example, when using a genetic algorithm, an initial solution population may be generated according to the corresponding rules accompany with certain randomness. New solutions may be obtained by calculating the solutions in the solution population with a crossover method. The scale of the population may be doubled then. A fitness function may be determined. Comparing to an average value of the population, solutions lower than the average value may be abandoned. An exit function may be determined, and when it reaches to a certain iteration times or the results are convergent, the exit function may perform an exit operation. Alternatively, new solutions may be calculated by the crossover method continually.

It should be noted that the above description of the process for transport capacity scheduling is provided for the purposes of illustration, and not intended to limit the scope of the present disclosure. For persons having ordinary skills in the art, the modification or alteration for the transport capacity scheduling process may be implemented under the teaching of the present disclosure. For example, steps in the process can be added, omitted, combined or split. For example, step 1510 can be split into three steps: dividing regions for a predetermined area, determining the region that users belong to, and determining distribution conditions of the users in the region. For example, a step of calculating a sum of increments of potential transaction volumes in the predetermined area may be added between step 1530 and step 1540. This step may also be combined with step 1530 or step 1540 in one step. All other alterations, improvements, and modifications are within the protection scope of the present disclosure.

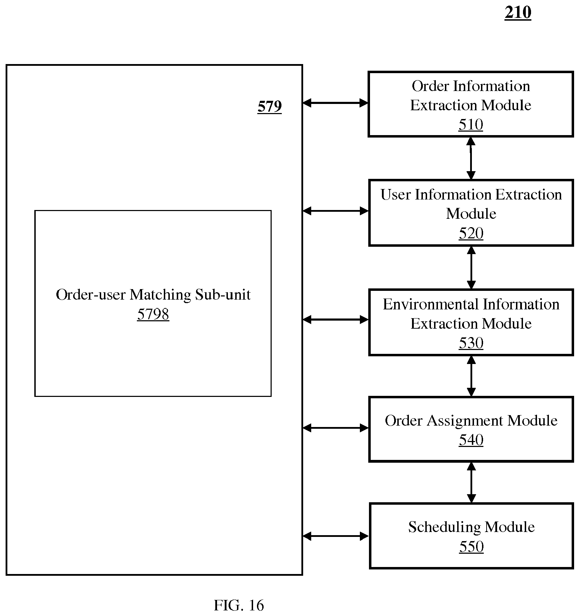

FIG. 16 is a schematic block diagram illustrating a processing module 210 according to some embodiments of the present disclosure. As shown in FIG. 16, the processing module 210 may include one or more order information extraction modules 510, user information extraction modules 520, environmental information extraction modules 530, order assignment modules 540, scheduling modules 550, calculation modules 570 (not shown in FIG. 16), etc. The scheduling strategy calculation unit 579 may include an order-user matching sub-unit 5798 and other units (not shown in FIG. 16). In some embodiments, one or more order information extraction modules 510, user information extraction modules 520, environmental information extraction modules 530, order assignment modules 540, scheduling modules 550 may be connected with the calculation module 570 or the scheduling strategy calculation unit 579 respectively. As shown in FIG. 16, a connection between the modules and units may be wired or wireless. Data may be transmitted between the modules and units as described above.

The order information extraction module 510 may be configured to acquire order information. The environmental information extraction module 530 may be configured to acquire environmental information. The order assignment module 540 may be configured to assign an unassigned order to a user. The scheduling module 550 may be configured to send scheduling strategy to a user. Various functions of the modules are described in connection with FIG. 5, and are not be repeated here.

The user information extraction module 520 may be configured to acquire user information. The user information may include but is not limited to vehicle state information of a user acquired based on a vehicle-mounted diagnosis system (e.g., as described in detail in connection with FIG. 5), etc. The vehicle state information may include but is not limited to speeds of vehicles, accelerations of vehicles, location information, amounts of remaining energy (e.g., amounts of remaining fuel, remaining electricity power, etc.), amounts of energy consumption, energy consumption rates, operation conditions of vehicles (e.g., operation conditions of engines, operation conditions of water tanks, operation conditions of braking systems, operation conditions of vehicle body stability systems, operation conditions of instrument systems, operation conditions of security systems, etc.), the like, or any combination thereof. The vehicle state information may be historical data, real-time data, or predictive data, the like, or any combination thereof. In some embodiments, the vehicle-mounted diagnosis system may be a part of the user terminal, or be independent of the user terminal. The vehicle-mounted diagnosis system may be replaced by a system or a combination of several systems that may implement the same functions. For example, the vehicle-mounted diagnosis system may be replaced by a combination of a speed detection system, a positioning system, a vehicle testing system.

For an existing order, the order-user matching sub-unit 5798 may be configured to select at least one user that can accept the order. Alternatively or additionally, ep order-user matching sub-unit 5798 can match the order information with vehicle state information of the at least one user that can accept the order to acquire a matching result. The user may be a consumer, or a service provider. For example, in a car-hailing system, the user may be a driver (representing the service provider). An order generated by a passenger and the driver may be matched by the order-user matching sub-unit 5798. As another example, in an active service pushing system of a vehicle service station (e.g., a gas station, a washing station, etc.), the user may be a car owner (representing the consumer). An order generated by the service station and the car owner may be matched by the order-user matching sub-unit 5798. As another example, in an active dining order pushing system, the user may be a passenger that takes a vehicle (representing the consumer). An order generated by the restaurant and the passenger may be matched by the order-user matching sub-unit 5798.

It should be noted that the above description of the processing module 210 is provided for the purposes of illustration, and not intended to limit the scope of the present disclosure. Each of the above modules and units may be optional and may be implemented by one or more components. The functions of each module and unit are not limited here. Each of the above modules and units may be added or omitted to implement various applications. For persons having ordinary skills in the art, the processing module 210 may be modified or altered in forms and details, or make several simple deduction or substitution, or the sequence of each module or unit may be adjusted, combined or split without inventive work under the teaching of the present disclosure. However, those modifications and alterations are within the scope of the above description. For example, the order-user matching sub-unit 5798 may be divide into two units. One of the units may be configured to select at least one user that can accept the existing order, and the other one may be configured to match the order information with vehicle state information of the at least one user that can accept the order to acquire a matching result respectively. All other alterations, improvements, and modifications are within the protection scope of the present disclosure.

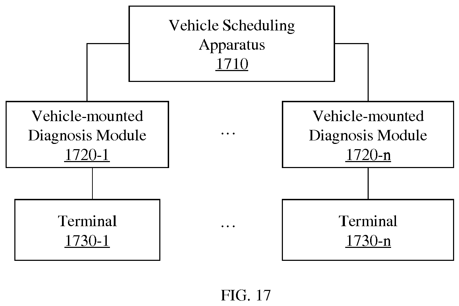

FIG. 17 is a schematic block diagram illustrating a network environment of a transport capacity scheduling system according to some embodiments of the present disclosure. As shown in FIG. 17, the network environment of a transport capacity scheduling system may include a vehicle scheduling apparatus 1710, one or more vehicle-mounted diagnosis modules 1720, and one or more user terminals 1730. In some embodiments, the vehicle scheduling apparatus 1710 may be configured to analyze and process the collected information to generate results, and then send the generated results. In some embodiments, the vehicle-mounted diagnosis module 1720 may be configured to acquire vehicle state information of users. The vehicle state information may include but is not limited to speeds of vehicles, accelerations of vehicles, location information, amounts of remaining energy (e.g., amounts of remaining fuel, remaining electricity power, etc.), amounts of energy consumption, energy consumption rates, operation conditions of vehicles (e.g., operation conditions of engines, operation conditions of water tanks, operation conditions of braking systems, operation conditions of vehicle body stability systems, operation conditions of instrument systems, operation conditions of security systems, etc.), the like, or any combination thereof. The vehicle state information may be historical data, real-time data, or predictive data, the like, or any combination thereof. The vehicle-mounted diagnosis module 1720 may be a part of the user terminal, or be independent of the user terminal. The vehicle-mounted diagnosis module 1720 may be replaced by a system or a combination of several systems that may implement the same functions. For example, the vehicle-mounted diagnosis module 1720 may be replaced by a combination of a speed detection system, a positioning system, a vehicle testing system. In some embodiments, the user terminal 1730 may be configured to send vehicle state information. Alternatively or additionally, the user terminal 1730 may be configured to receive order assignment information, scheduling strategy, etc. The user terminal 1730 may include but is not limited to a laptop, a tablet PC, a cellphone, a PDA (personal digital assistant), an electronic watch, a POS machine, a vehicle-mounted computer, a television, a smart wearable device, the like, or any combination thereof. As shown in FIG. 17, a connection between the modules and units may be wired or wireless. In some embodiments, the vehicle scheduling apparatus 1710 may send the scheduling strategy and/or the order assignment information to the user terminal 1730 directly. In some embodiments, the vehicle scheduling apparatus 1710 may send the scheduling strategy and/or the order assignment information to the vehicle-mounted diagnosis module 1720. The vehicle-mounted diagnosis module 1720 may then send the scheduling strategy and/or the order assignment information to the user terminal 1730.

It should be noted that the above description of the network environment of a transport capacity scheduling system is provided for the purposes of illustration, and not intended to limit the scope of the present disclosure. Each of the above modules and units may be optional and may be implemented by one or more components. The functions of each module and unit are not limited here. Each of the above modules and units may be added or omitted to implement various applications. For persons having ordinary skills in the art, the network environment may be modified or altered in forms and details, or make several simple deduction or substitution, or the sequence of each module or unit may be adjusted, combined or split without inventive work under the teaching of the present disclosure. However, those modifications and alterations are within the scope of the above description.

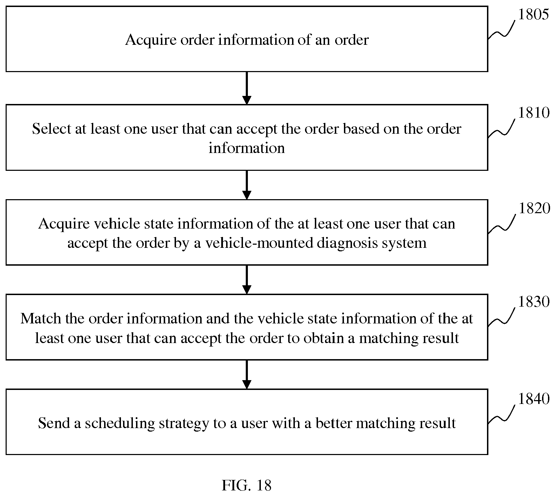

FIG. 18 is a flowchart illustrating an example method of transport capacity scheduling based on a vehicle-mount diagnosis system according to some embodiments of the present disclosure.

In step 1805, order information of an order may be acquired. The order information may be acquired by the order information extraction module 510. The order may be a historical order, a real-time order, a reservation order, a predictive order, etc. The order information is described in detail in connection with FIG. 5, and is not be repeated here.

In step 1810, for an existing order, at least one user that can accept the order may be selected based on the order information. The selection may be made by the order-user matching sub-unit 5798. The order information may include but is not limited to a transmission time of the order, an order number, a departure location, a destination, a departure time, a arrival time, an acceptable wait time, a number of passengers, whether to accept car sharing and/or carpool, a selected vehicle type, a selected service type (e.g., taxi, express car, chauffeured car service, hitchhiking, bus, car rental, designated driving service, etc.), whether to carry luggage (carry-on luggage), an amount of the carry-on luggage, whether to carry pets, mileage, prices, price markup by a consumer, price adjustment by a service provider, price adjustment by a system, usage conditions of coupons, a payment method (e.g., a cash payment, a card payment, an online payment, a remittance payment, etc.), completion status of the order, order selection conditions by the service provider, order sending conditions by the consumer, the like, or any combination thereof. In addition, the order information may further include other information related to the order, e.g., profile information of a service requester (e.g., gender, nickname, contact information, hardware address, etc.), or any other information that not controlled by a consumer or a service provider, or temporary/emergent information. The other information may include but is not limited to weather conditions, environment conditions, road conditions (e.g., road closure due to security or road works), traffic conditions, the like, or any combination thereof. The selection method may be a random selection, a selection based on specific indexes, etc. The indexes may include but are not limited to a distance between the location of a user and departure location of the order, a driving time cost from the location of a user to the departure location of the order, an expected income of the order, whether the destination direction of the order is accordance with the expected driving direction of a user, a user habit/preference, other indexes, the like, or any combination thereof. The user habit/preference may include but is not limited to a preference of a service requester for departure locations, destinations, departure times, a preference of a service requester for users, an acceptable wait time for a service requester, a preference of a service requester for order sharing, a preference of a service requester for vehicle types (e.g., aircraft, train, ship, subway, taxi, bus, motorcycle, bicycle, walk, etc.), a preference of a service requester for service types (e.g., taxi, express car, chauffeured car service, hitchhiking, bus, car rental, designated driving service, etc.), a preference of a service requester for vehicle models, a preference of a user for departure locations, destinations, departure times, a preference of a user for driving routes, a work time of a user, a rate for breaking an appointment of a user, order-grabbing characteristics of a user, a number of grabbing orders of a user, a number of successfully grabbing orders of a user, a transaction volume, a rate of successfully grabbing orders of a user, a transaction rate, the like, or any combination thereof. The state of the at least one user that can accept the order may be an idle state, a state of nearly finishing an order service, a capability state of car sharing and/or carpool, or any other states in which the user can accept the order. For example, in the process of selecting the at least one user that can accept the order, the at least one user may be acquired if the distance between the location of the at least one user and the departure location of the order is less than a preset threshold. The at least one user may also be acquired if the at least one user is located in a region where the departure location of the order belongs to. The region that the departure location of the order belongs to may be a region that the distance between the region and the departure location of the order is less than a preset threshold, or a geographic region that the departure location of the order belongs to. The division of the geographic region may be based on administrative regions (e.g., Haidian district, Chaoyang district, etc.), longitude and latitude information, business districts, buildings, street names, the like, or any combination thereof.

In step 1820, vehicle state information of the at least one user that can accept the order may be acquired by a vehicle-mounted diagnosis system. The acquisition may be made by the user information extraction module 520. In some embodiments, the vehicle state information may include but is not limited to speeds of vehicles, accelerations of vehicles, location information, amounts of remaining energy, amounts of energy consumption, energy consumption rates, operation conditions of vehicles (e.g., operation conditions of engines, operation conditions of water tanks, operation conditions of braking systems, operation conditions of vehicle stability systems, operation conditions of instrument systems, operation conditions of security systems, etc.), the like, or any combination thereof. The energy may be gasoline, kerosene, diesel, natural gas, liquefied petroleum gas (LPG), alcohol fuel, dimethyl ether, hydrogen fuel, biomass fuel, battery, solar energy, etc. The vehicle state information may be historical data, real-time date, predictive data, the like, or any combination thereof. In some embodiments, the vehicle-mount diagnosis system may be a part of the user terminal, or be independent of the user terminal. The vehicle-mount diagnosis system may be replaced by a system or a combination of several systems that can implement the same functions. For example, the vehicle-mount diagnosis system may be replaced by a combination of a speed detection system, a positioning system, a vehicle testing system.

In step 1830, the order information and the vehicle state information of the at least one user that can accept the order may be matched. A matching result may be obtained accordingly. The matching may be made by the order-user matching sub-unit 5798. More particularly, for example, demand information of a service requester (e.g., a departure time, a departure location, a destination, a travel distance, an acceptable wait time, etc.), may be obtained according to the order information. A matching degree of a service provider and a service requester may be calculated using a matching algorithm according to the demand information of the service requester and the vehicle state information. The service provider and the service requester may be matched according to the matching degree. It will be appreciated that, in the matching process, the matching indexes may be not limited to the vehicle state information, but may include other matching indexes. Exemplary the other indexes may include a distance between the location of a user and departure location of an order, a driving time cost from the location of a user to the departure location of an order, an expected income of an order, whether the destination direction of an order is accordance with the expected driving direction of a user, a user habit/preference, environmental information, other indexes, the like, or any combination thereof. The user habit/preference may include but is not limited to a preference of a service requester for departure locations, destinations, departure times, a preference of a service requester for users, an acceptable wait time for a service requester, a preference of a service requester for order sharing, a preference of a service requester for vehicle types (e.g., aircraft, train, ship, subway, taxi, bus, motorcycle, bicycle, walk, etc.), a preference of a service requester for service types (e.g., taxi, express car, chauffeured car service, hitchhiking, bus, car rental, designated driving service, etc.), a preference of a service requester for vehicle models, a preference of a user for departure locations, destinations, departure times, a preference of a user for driving routes, a work time of a user, a rate for breaking an appointment of a user, order-grabbing characteristics of a user, a number of grabbing orders of a user, a number of successfully grabbing orders of a user, a transaction volume, a rate of successfully grabbing orders of a user, a transaction rate, the like, or any combination thereof. The environmental information may include but is not limited to weather information, traffic information, event information, geographic information, the like, or any combination thereof. The traffic information may include but is not limited to a location of a road, whether the road is clear or not, speed limits, whether an emergency happens or not (e.g., traffic accidents, maintenance measures, traffic controls), the like, or any combination thereof.

In step 1840, a scheduling strategy may be sent to a user with a better matching result. The sending may be implemented by the scheduling module 550 and/or the order assignment module 540. In some embodiments, the better matching result may be an optimal matching result, a suboptimal matching result, or any other matching results that can satisfy practical situations. The scheduling strategy may include but is not limited to a supply and demand density push strategy, a hotspot characteristic push strategy, a statistical characteristic push strategy, an order push strategy, an order adjustment strategy, a prompt information push strategy, the like, or any combination thereof (e.g., as described in detail in connection with FIG. 3). The order push strategy may include but is not limited to a departure location and a destination of an order, profile information of a service requester (e.g., gender, nickname, contact information, hardware address, etc.), environmental information, the like, or any combination thereof. In some embodiment, the scheduling strategy may be sent to the mobile device 2900.

It should be noted that the above description of the process for transport capacity scheduling is provided for the purposes of illustration, and not intended to limit the scope of the present disclosure. For persons having ordinary skills in the art, the process for transport capacity scheduling may be modified or altered under the teaching of the present disclosure. For example, steps may be added, omitted, combined or split. For example, an order assignment step may be added after step 1830. More particularly, for example, after acquiring a better assignment, an order may be assigned to a user with a better matching result. And then the process may proceed to step 1840, sending a scheduling strategy to the user with the better matching result. It will be appreciated that the order assignment step may be performed simultaneously with step 1840, or after step 1840. For example, a user drives to the departure location of an order after receiving a scheduling strategy. The order may be assigned to the user after the user arriving at the departure location of the order. If some accidents occur during the user driving to the departure location of the order and cause the user unavailable to arrive at the departure location of the order, the processing module 210 may perform step 1830 and step 1840 again to select other user to match the order. All other alterations, improvements, and modifications are within the protection scope of the present disclosure.

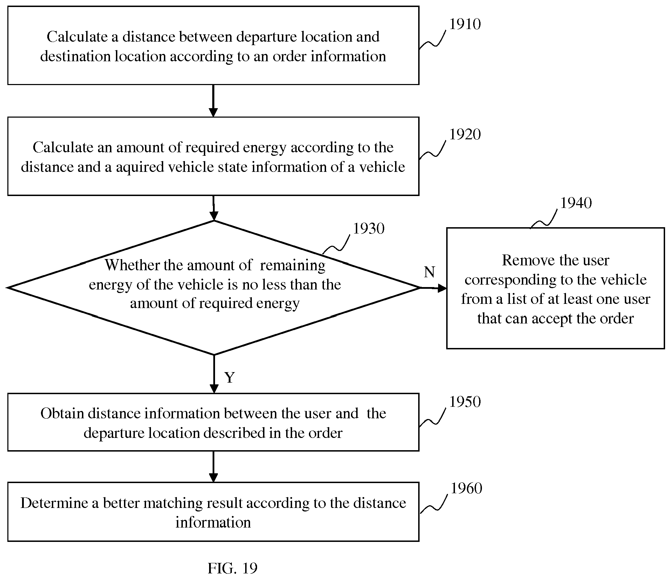

FIG. 19 is a flowchart illustrating an example of a matching process in a method of transport capacity scheduling based on a vehicle-mounted diagnosis system according to some embodiments of the present disclosure. The matching shown in FIG. 19 may be performed by the order-user matching sub-unit 5798. In step 1910, a distance between the departure location and the destination described in an order may be calculated according to the order information. In some embodiments, if there are multiple routes from the departure location to the destination, the distance between the departure location and the destination may be the shortest route in the multiple routes, the longest route in the multiple routes, an average value of the multiple routes, etc. In some embodiments, when calculating the distance between the departure location and the destination, environment factors may be considered. The environment factors may include but are not limited to weather information, traffic information, event information, geographic information, the like, or any combination thereof. The traffic information may include but is not limited to a location of a road, whether the road is clear or not, speed limits, whether an emergency happens or not (e.g., traffic accidents, maintenance measures, traffic controls, etc.), the like, or any combination thereof.

In step 1920, an amount of required energy may be calculated according to the distance and an acquired vehicle state information of a vehicle (e.g., as described in connection with step 1820). In some embodiments, the amount of required energy may be calculated based on all users, or a single user. In some embodiments, the users may be classified into several categories. The amount of required energy may be calculated for every category. Alternatively or additionally, other calculation methods may be applied.

In step 1930, whether the amount of remaining energy of a vehicle is no less than the amount of required energy may be assessed. If the amount of remaining energy of the vehicle is less than the amount of the required energy, the process may proceed to step 1940, removing the user corresponding to the vehicle from a list of at least one user that can accept the order. If the amount of remaining energy of the vehicle is no less than the amount of the required energy, the process may proceed to step 1950.

In step 1950, distance information between the user and the departure location described in the order may be acquired. The distance information may include but is not limited to a distance between the location of the user and the departure location described in the order, a time cost by the user driving to the departure location described in the order, environmental information, the like, or any combination thereof.

In step 1960, a better matching result may be determined according to the distance information. In some embodiments, the better matching result may be determined based on a distance between the location of a user and the departure location described in the order, a time cost by a user driving to the departure location described in the order, the like, or any combination thereof. For example, a user with a shortest distance between the location of the user and the departure location described in the order may be selected as the better matching result. As another example, a user that has the shortest time cost by the user driving to the departure location described in the order may be selected as the better matching result. In some embodiments, a matching degree for multiple possible matching results may be calculated. The possible matching results may be ranked according to the matching degree. In some embodiments, the determination of the matching degree may be based on a distance between the location of a user and the departure location described in an order, a time cost by a user driving to the departure location described in an order, distance information, vehicle state information, an expected income of an order, whether the destination direction of an order is accordance with the expected driving direction of a user, a preference of a service requester for users, a preference of a service requester for users, an acceptable wait time for a service requester, a preference of a service requester for order sharing, a preference of a service requester for vehicle types (e.g., aircraft, train, ship, subway, taxi, bus, motorcycle, bicycle, walk, etc.), a preference of a service requester for service types (e.g., taxi, express car, chauffeured car service, hitchhiking, bus, car rental, designated driving service, etc.), a preference of a service requester for vehicle models, a preference of a user for departure locations, destinations, departure times, a preference of a user for driving routes, a work time of a user, a rate for breaking an appointment of a user, order-grabbing characteristics of a user, a number of grabbing orders of a user, a number of successfully grabbing orders of a user, a transaction volume, a rate of successfully grabbing orders of a user, a transaction rate, the like, or any combination thereof.

It should be noted that the above description of the matching process is provided for the purposes of illustration, and not intended to limit the scope of the present disclosure. For persons having ordinary skills in the art, the matching process may be modified or altered under the teaching of the present disclosure. For example, steps may be added, omitted, combined or split. All other alterations, improvements, and modifications are within the protection scope of the present application.

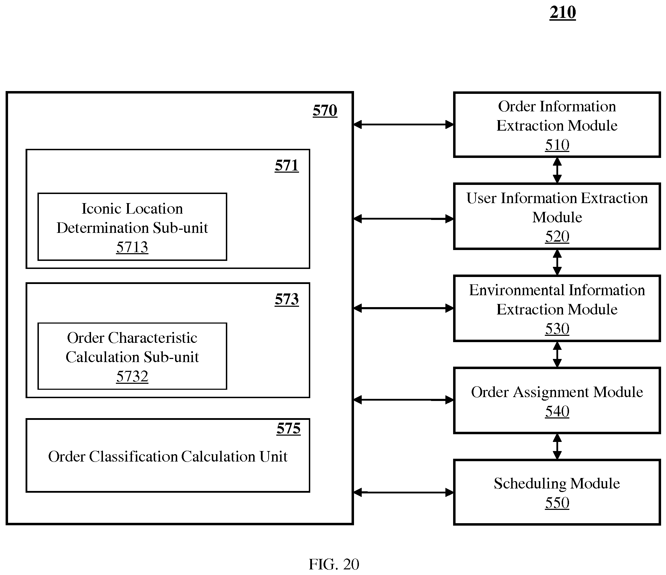

FIG. 20 is a schematic block diagram illustrating a processing module 210 according to some embodiments of the present disclosure.

As shown in FIG. 20, the processing module 210 may include one or more order information extraction modules 510, user information extraction modules 520, environmental information extraction modules 530, order assignment modules 540, scheduling modules 550, calculation modules 570, etc. The calculation module 570 may include one or more region information calculation units 571, characteristic index calculation units 573, order classification calculation units 575, or other units (not shown in FIG. 20). The region information calculation units 571 may include an iconic location determination sub-unit 5713 and other sub-units (not shown in FIG. 20). The characteristic index calculation unit 573 may include an order characteristic calculation sub-unit 5732 and other sub-units (not shown in FIG. 20). In some embodiments, one or more order information extraction modules 510, user information extraction modules 520, environmental information extraction modules 530, order assignment modules 540, scheduling modules 550 may be connected with the calculation module 570. As shown in FIG. 20, a connection between the modules and units may be wired or wireless. Data may be transmitted between the modules and units as described above.

The order information extraction module 510 may be configured to acquire order information. The user information extraction module 520 may be configured to acquire user information. The environmental information extraction module 530 may be configured to acquire environmental information. The order assignment module 540 may be configured to assign the unassigned order to a user. The scheduling module 550 may be configured to send the scheduling strategy to a user. Various functions of the modules are described in connection with FIG. 5, and are not be repeated here.

The iconic location determination sub-unit 5713 may be configured to determine an iconic location of a specific location. The iconic location may be one or more locations. The iconic location may be a coordinate location (e.g., longitude 109.3, altitude 56.7), a specific building (e.g., the monument to the people's heroes in Tiananmen Square), a region within a specific area (e.g., Haidian district), the like, or any combination thereof. The iconic location may be preset, or calculated (e.g., a location with the number of orders exceeding a threshold may be designated as an iconic location, etc.). Corresponding methods used in the determination of the iconic location may be a quantitative method, or a qualitative method.

The order characteristic calculation sub-unit 5732 may be configured to calculate characteristic parameters of orders. The characteristic parameters may be individual characteristics of a single order or statistical characteristics of multiple orders (e.g., the entire orders during a time period or in a region, etc.). The orders may be historical orders, real-time orders, reservation orders, predictive orders, the like, or any combination thereof. The characteristic parameters of orders may include but are not limited to a total number of orders, departure times, average wait times, arrival times, prices of transactions, average prices, transaction rates, etc.

The order classification calculation unit 575 may be configured to classify orders. The classification may be an artificially designated classification, or a calculated classification according to certain rules. In some embodiments, orders with one or more same characteristic parameters (e.g., a departure time, a region that an order belongs to, etc.) may be classified into one group. The characteristic parameters used for classification may be a result calculated by the order classification calculation unit 575, a result calculated by the characteristic index calculation unit 573, information directly acquired from the order information without calculation, etc.

It should be noted that the above description of the process module 210 is provided for the purposes of illustration, and not intended to limit the scope of the present disclosure. Each of the above modules and units may be optional and may be implemented by one or more components. The functions of each module and unit are not limited here. Each of the above modules and units may be added or omitted to implement various applications. For persons having ordinary skills in the art, the processing module 210 may be modified or altered in forms and details or make several simple deduction or substitution, or the sequence of each module or unit may be adjusted, combined or split without inventive work under the teaching of the present disclosure. However, those modifications and alterations are within the scope of the above description. For example, a part of functions of the iconic location determination sub-unit 5713 may be integrated in the order characteristic calculation sub-unit 5732 and the user characteristic calculation sub-unit (not shown in FIG. 20) respectively. The iconic location of an order and a user may be determined accordingly. As another example, the order classification calculation unit 575 and the order characteristic calculation sub-unit 5732 may be integrated in one sub-unit. The sub-unit may simultaneously implement the classification of an order and the calculation of characteristic parameters of the order.

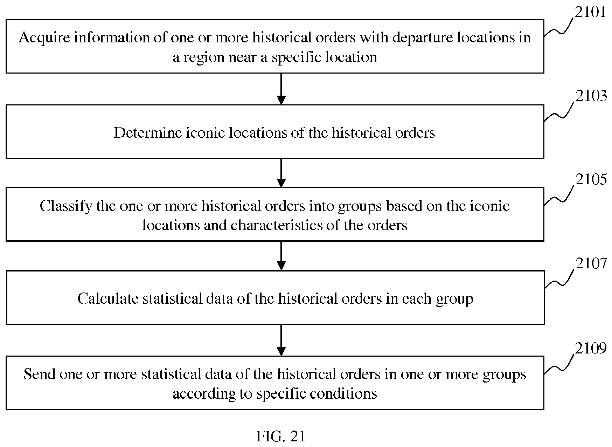

FIG. 21 is a flowchart illustrating an example of a transport capacity scheduling system based on statistical information according to some embodiments of the present disclosure.

In step 2101, information of one or more historical orders with departure locations in a region near a specific location may be acquired. Step 2101 may be performed by the order information extraction module 510. The region near a specific location may be a region that the specific location belongs to according to a certain region division method. The region division method may include a grid-based division method, a cluster-based division method, a division method based on a special rule, the like, or any combination thereof (e.g., as described in detail in connection with FIGS. 7-A, 7-B and 7-C). The region near a specific location may be a region that a distance between which is less than a threshold. For example, the region near a specific location may be a region constituted by locations that the distances between the locations and the specific location are less than a threshold (e.g., 100m, 1000m, etc.), or a region constituted by locations that distances between the locations and the specific location are within a specific area (e.g., lager than 10m and less than 100m). The multiple historical orders may be historical orders in a continuous time period (e.g., last N days) or a discrete time period (e.g., every Monday in last N days). The multiple historical orders may be historical orders that satisfy a certain filtering conditions (e.g., types of orders, transaction prices of orders, destinations of orders, etc.).

In some embodiments, all historical orders during a certain time period (e.g., last N days) may be acquired. And multiple historical orders that the distances between the departure locations of the historical orders and the specific location are less than a specific threshold (e.g., 10 kilometers) may be determined from the above historical orders. In some embodiments, all historical orders in an administrative region that the specific location belongs to may be acquired. And multiple historical orders in a time period (e.g., from 9:00 to 13:00 every Monday) may then be selected from the above historical orders.

In step 2103, iconic locations of the historical orders may be determined. The determination of the iconic locations may be made by the iconic location determination sub-unit 5713. The iconic locations are described in detail in connection with FIG. 20 and are not be repeated here. The iconic locations may be determined based on departure locations of the orders, destinations of the orders, or any other locations related to the orders (e.g., intermediate locations). In addition, one or more iconic locations may be determined for one order.

In some embodiments, multiple iconic locations may be determined by presetting. For example, multiple iconic locations such as Haidian district, Dongcheng district, International Trade Building, may be artificially set in a region. In some embodiments, multiple iconic locations may be determined based on departure locations and destinations of all historical orders. For example, 200 iconic locations may need to be selected. Digits of longitude and latitude of the departure locations and destinations of the historical orders in recent N days may be calculated and reserved with X decimal places. 200 longitude-latitude coordinates may be selected after removing duplicates. Then the 200 longitude-latitude coordinates or nearby buildings may be designated as the iconic locations. In some embodiments, after determining the multiple iconic locations, distances between the iconic locations and destinations of the historical orders may be calculated respectively. The iconic location with the shortest distance may be designated as the iconic location of the order.

In step 2105, the one or more historical orders may be classified into one or more groups based on the iconic locations and characteristics of the orders. The classification may be made by order classification calculation unit 575. The characteristics of the orders may be time characteristics of the orders (e.g., departure times, completion times, ordering times, preset departure times, actual departure times, wait times, etc.), or any other characteristics of the orders (e.g., types of the orders, transaction prices of the orders), the like, or any combination thereof. Orders in a same group may have one or more same characteristics. Orders in different groups may have different characteristics or same characteristics.

In some embodiments, the one or more historical orders may be classified into groups according to the iconic locations of the historical orders and the departure time. The historical orders in a group may have same iconic locations during a same time period. For example, during the time period from15:00 to 16:00, all historical orders that directed to Tiananmen may be classified into a group. As another example, during the time period from 15:00 to 16:00, all historical orders that directed to Tiananmen with same type of vehicles may be classified into a group.

In step 2107, statistical data of the historical orders in each group may be calculated. The statistical data may be calculated by the characteristic index calculation unit 573, more specifically, by the order characteristic calculation sub-unit 5732. The statistical data may be one or more statistical data. The statistical data may include but are not limited to a total number of orders, average response times of orders, a total number of order initiators, average time intervals between order sending, transaction rates of orders, etc.

In step 2109, one or more statistical data of the historical orders in one or more groups may be sent according to specific conditions. The sending may be performed by the scheduling module 550. The specific conditions may be a specific time period (e.g., the current time period), a specific location (e.g., the current location), a specific region (e.g., the current region), a selection of a user, the like, or any combination thereof. The one or more statistical data may be one or more statistical data based on the selection of a user, one or more statistical data regulated by the processing module 210, the like, or any combination thereof. The one or more statistical data may be a part or all of the statistical data calculated in step 2107. For example, only the statistical data of the historical orders that belong to the top K groups with the greatest number of orders may be sent. Forms of the statistical data may be text, images (dynamic or static), graphics, voice, the like, or any combination thereof.

In some embodiments, the statistical data of historical orders with order types (e.g., express car, taxi, chauffeured car service, etc.) at the current time period (e.g., from 13:00 to 15:00 on Monday) and in the current region (e.g., Zhongguancun) may be sent to the passengers for selecting in different order types. In some embodiments, demand information at the current time period in different regions may be sent to drivers. The drivers can select a location to provide transport capacity service accordingly. In some embodiments, statistical data of the total number of orders of historical orders in specific regions may be sent to drivers. The drivers can select a region to receive order. In some embodiments, the one or more statistical data may be sent to the mobile device 2900.

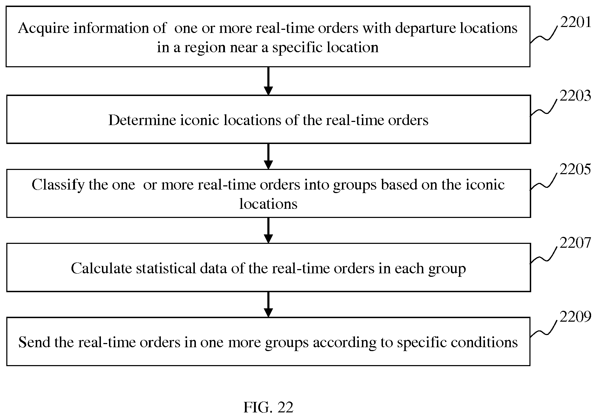

FIG. 22 is a flowchart illustrating an example of a transport capacity system utilizing statistical information according to some embodiments of the present disclosure.

In step 2201, information of one or more real-time orders with departure locations in a region near a specific location may be acquired. Step 2201 may be performed by the order information extraction module 510. The region near a specific location are described in connection with FIG. 21, and are not be repeated here. The real-time orders may refer to real-time orders that satisfy a certain filtering conditions (e.g., no response, no carry-on pets, etc.).

In some embodiments, orders in a region near a specific location may be acquired and orders without response may be selected. In some embodiments, all real-time orders that satisfy the filtering conditions may be acquired. And then real-time orders that distances between the departure locations of the real-time orders and the location of a driver are less than a certain threshold (e.g., 1 kilometer) may be selected from the above real-time orders.

In step 2203, iconic locations of the real-time orders may be determined. The determination may be made by the iconic location determination sub-unit 5713. The iconic locations are described in connection with FIG. 21, and are not be repeated here.

In step 2205, the one or more real-time orders may be classified into one or more groups based on the iconic locations. The classification may be made by the order classification calculation unit 575. In some embodiments, the orders may be classified based on the iconic locations and other characteristics. The other characteristics may include but are not limited to time characteristics of the orders (e.g., departure times, ordering times, preset departure times, acceptable wait times, etc.), characteristics of the additional information of the orders (e.g., types of orders, tips, etc.), preferences of users (e.g., a preference of an ordering passenger for driving experience of a driver, etc.), the like, or any combination thereof. The classification is described in detail in connection with FIG. 21, and is not be repeated here.

In step 2207, statistical data of the real-time orders in each group may be calculated. The statistical data may be calculated by the characteristic index calculation unit 573, more specifically, by the order characteristic calculation sub-unit 5732. The calculation of the statistical data is described in detail in connection with FIGS. 20 and 21, and is not be repeated here.

In step 2209, the real-time orders in one or more groups may be sent according to specific conditions. The real-time orders may be sent by the order assignment module 540 and/or the scheduling module 550. In some embodiments, the specific order information may be sent to a driver by the order assignment module 540. And the statistical information of the real-time orders may be sent to a driver by the scheduling module 550. For example, the statistical information of the real-time orders may be sent to the mobile device 2900 (shown in FIG.29). The specific conditions may be a specific time period (e.g., the current time period), a specific location (e.g., the current location), a specific region (e.g., the current region), a selection of a user, etc.

In some embodiments, the total number of real-time orders without response and the order information in the iconic location may be sent by the processing module 210 based on the iconic location selected by a driver (e.g., may or may not the current location of a driver).

It should be noted that the above description of the process for transport capacity scheduling based on the statistical information is provided for the purposes of illustration, and not intended to limit the scope of the present disclosure. For persons having ordinary skills in the art, the supply and demand scheduling may be modified or altered under the teaching of the present disclosure. However, those modifications and alterations are within the scope of the above description. For example, step 2103 may be omitted. The order information acquired in step 2101 may include information of the iconic locations. As another example, a step may be added before step 2109 or step 2209. The added step may be performed to receive selection information of a user and send data accordingly.

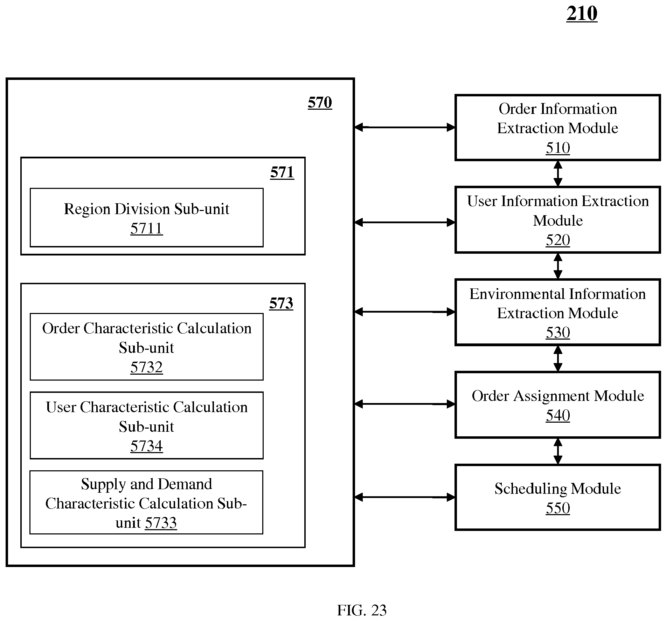

FIG. 23 is a schematic block diagram illustrating a processing module 210 according to some embodiments of the present disclosure.

As shown in FIG. 23, the processing module 210 may include one or more order information extraction modules 510, user information extraction modules 520, environmental information extraction modules 530, order assignment modules 540, scheduling modules 550, calculation modules 570, etc. The calculation module 570 may include a region information calculation unit 571, a characteristic index calculation unit 573, and other units (not shown in FIG. 23). The region information calculation unit 571 may include a region division sub-unit 5711 and other sub-units (not shown in FIG. 23). The characteristic index calculation unit 573 may include an order characteristic calculation sub-unit 5732, a user characteristic calculation sub-unit 5734, a supply and demand characteristic calculation sub-unit 5733 and other sub-units (not shown in FIG. 23).

The order information extraction module 510 may be configured to acquire order information. The user information extraction module 520 may be configured to acquire user information. The environmental information extraction module 530 may be configured to acquire environmental information. The order assignment module 540 may be configured to assign the unassigned order to a user. The scheduling module 550 may be configured to send the scheduling strategy to a user. Various functions of the modules are described in connection with FIG. 5, and are not be repeated here.

The region division sub-unit 5711 may be configured to perform a region division. The region division method may include a grid-based division method, a cluster-based division method, a division method based on a special rule (e.g., administrative regions), the like, or any combination thereof (e.g., as described in detail in connection with FIGS. 7-A, 7-B, and 7-C).

The order characteristic calculation sub-unit 5732 may be configured to calculate characteristic parameters of an order. The order may be a real-time order, a historical order, a reservation order, a predictive order, etc. The characteristic parameters may include but are not limited to a number of real-time orders of a region, a number of historical orders of the region, a third number of potential order initiators of the region, preferences of the potential order initiators of the region, a first number of order demands of the region determined according to the number of real-time orders, the number of historical orders, the number of potential order initiators, etc.

The supply and demand characteristic calculation sub-unit 5733 may be configured to calculate supply and demand characteristic indexes of a region. The supply and demand characteristic indexes may include real-time supply and demand characteristic indexes, historical supply and demand characteristic indexes, predictive supply and demand characteristic indexes, etc. The supply and demand characteristics may be represented by a ratio of the number of orders to the number of service providers, by a density of orders, or by any other indexes that can reflect the supply and demand relations.

The user characteristic calculation sub-unit 5734 may be configured to calculate characteristic parameters of a user. The characteristic parameters may include but are not limited to a number of static potential order recipients of a region, a number of dynamic potential order recipients of the region, a second number of potential order recipients, the like, or any combination thereof.

It should be noted that the above description of the process module 210 is provided for the purposes of illustration, and not intended to limit the scope of the present disclosure. Each of the above modules and units may be optional and may be implemented by one or more components. And functions of each module and unit are not limited here. Each of the above modules and units may be added or omitted to implement various applications. For persons having ordinary skills in the art, the processing module 210 may be modified or altered in forms and details or make several simple deduction or substitution, or the sequence of each module or unit may be adjusted, combined or split without inventive work under the teaching of the present disclosure. However, those modifications and alterations are within the scope of the above description. For example, one or more storage units may be integrated in the region division sub-unit 5711, the order characteristic calculation sub-unit 5732, the supply and demand characteristic calculation sub-unit 5733, and/or the user characteristic calculation sub-unit 5734 respectively, to store the acquired data, intermediate data and/or result information of calculation.

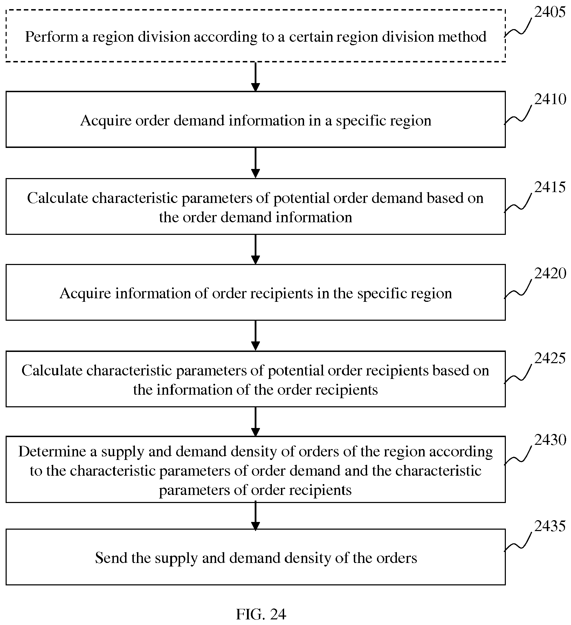

FIG. 24 is a flowchart illustrating an example of a transport capacity scheduling system based on supply and demand density information according to some embodiments of the present disclosure.

In step 2405, a region division may be performed according to a certain region division method. The region division may be performed by the region information calculation unit 571, more specifically, by the region division sub-unit 5711. The region division methods may include a grid-based division method, a cluster-based division method, a division method based on a special rule (e.g., administrative regions, business districts, etc.), the like, or any combination thereof (e.g., as described in detail in connection with FIGS. 7-A, 7-B, and 7-C). The region division may be once division, or more times division (e.g., re-dividing the region based on a result of the last division). The region division may be fixed, or dynamic (e.g., a result of the region division may be obtained by performing a real-time cluster operation according to orders conditions or user conditions).

In step 2410, order demand information in a specific region may be acquired. The order demand information may be historical order information, real-time order information, potential order information, predictive order information, the like, or any combination thereof.

In step 2415, characteristic parameters of potential order demands in a specific region may be calculated based on the order demand information. The characteristic parameters may be calculated by the order characteristic calculation sub-unit 5732. In some embodiments, the characteristic parameters of order demands may be directly acquired from the order information extraction module 510. The characteristic parameters of order demands may include but are not limited to a number of real-time orders of a region, a number of historical orders of the region, a third number of potential order initiators of the region, preferences of the potential order initiators of the region, a first number of order demands of the region determined according to the number of real-time orders, the number of historical orders, the number of potential order initiators, the like, or any combination thereof. The characteristic parameters may be calculated by the order characteristic calculation sub-unit 5732.

In some embodiments, the first number of order demands $K_1$ of a specific region may be acquired by calculating the number of real-time orders of the region, the number of historical orders of the region, and the third number of potential order initiators of the region. For example, the first number of order demands can be calculated based on the following equation:

$$K_1 = X + \alpha P + \beta O_{pre}. \qquad (15)$$

The parameter $X$ may denote the number of real-time orders of the region. The parameter $P$ may denote the third number of potential order initiators of the region. The parameter $O_{pre}$ may denote the number of historical orders of the region. And the parameters $\alpha$ and $\beta$ may denote coefficients.

In some embodiments, the number of real-time orders $X$ of the region may be real-time order data processed based on a certain operation rule. For example, the parameter $X$ may represent the number of real-time orders, the number of orders with tips at current, etc.

In some embodiments, the third number of potential order initiators $P$ of the region may be an actual number of requesters with potential service requests, a number of service terminals (e.g., passenger terminals with car-hailing software) that are online or not online, a number of other online or not online terminals (e.g., social software, payment software, etc.) acquired from a third party, a number acquired by a terminal positioning software (e.g., GPS) of service requesters, a number acquired by a location information of base station of terminal network interface of the service requesters, etc.

In some embodiments, the number of historical orders $O_{pre}$ of the region may be the number of entire historical orders during a corresponding time period, a number of historical orders processed based on a certain operation rule, etc. For example, the number of historical orders $O_{pre}$ of the region may be the number of actual orders during the same time period yesterday, an average value of the number of actual orders during the same time period in previous N days, a total number of actual orders during the same time period in previous N days, etc.

In some embodiments, the coefficients $\alpha$ and $\beta$ may be designated as any values. The values of coefficients $\alpha$ and $\beta$ may be equal or unequal. For example, if the values of coefficients $\alpha$ and $\beta$ are both designated as 1, the parameter $K_1$ may reflect a degree of service demands. As another example, the coefficient $\alpha$ may be designated as a value between 0.4 and 0.6, and the coefficient $\beta$ may be designated as 1. The values of coefficients $\alpha$ and $\beta$ can be designated as constants or be adjustable dynamically. As another example, the values of coefficients $\alpha$ and $\beta$ may be adjusted according to a result that the parameter $K_1$ may become close to the number of the actual service demands. And finally, the adjusted values of coefficients $\alpha$ and $\beta$ may cause the parameter $K_1$ become closer to the number of the actual service demands.

In some embodiments, the first number of order demands are positively correlated with car-using demands of passengers. For example, if the values of coefficients $\alpha$ and $\beta$ are constants, the larger the parameter $K_1$ is, the higher the car-using demands of passengers are.

In step 2420, information of order recipients in a specific region may be acquired. The information of order recipients may be information of real-time order recipients, information of historical order recipients, etc. The information of order recipients may include but is not limited to information related to the order recipients such as order information, user information, environmental information (e.g., information of road conditions), the like, or any combination thereof.

In step 2425, characteristic parameters of potential order recipients may be calculated based on the information of the order recipients. The characteristic parameters of potential order recipients may include but are not limited to a number of static potential order recipients of a region, a number of dynamic potential order recipients of the region, a second number of potential order recipients, the like, or any combination thereof. The characteristic parameters may be calculated by the user characteristic calculation sub-unit 5734.

In some embodiments, the number of static potential order recipients may be a number of motionless order recipients during a time period. For example, the number of static potential order recipients may be a number of available vehicles that are motionless to wait passengers. The motionlessness may represent that the vehicles move a short distance (e.g., 500m) or don't move during a time period (e.g., 5 minutes).

In some embodiments, the number of dynamic potential order recipients may be a number of order recipients that are moving during a time period. For example, the number of dynamic potential order recipients may be a number of available vehicles that are moving. The number of dynamic potential order recipients may be acquired using multiple methods. For example, the number of potential order recipients that are driving in a region may be predicted according to a degree of traffic congestion during historical or current time periods in the region. The degree of traffic congestion during the historical or current time periods may be acquired by other road condition information system. For example, the degree of traffic congestion during the historical time period and/or the current time period may be acquired by the environmental information extraction module 530. The historical time period may be the corresponding time period in previous N days. For example, if the current time period is from 8:00 to 9:00 AM, the time period from 8:00 to 9:00 AM yesterday may be determined as the historical time period. The historical time period may be the corresponding time periods with same characteristics in previous N days. For example, if the current time period is from 8:00 to 9:00 AM on Monday, the time period from 8:00 to 9:00 AM in previous N Mondays may be determined as the historical time periods. In some embodiments, when processing the above or other historical information, the historical information in different time periods may have the same or different effects on the processing results. For example, the historical information in a time period that is close to the current time period may have the same effects on the processing results compare to the historical information in a time period that is far away from the current time period. As another example, the historical information in a time period that is close to the current time period may have greater effects on the processing results. The historical information in a time period that is far away from the current time period may have less effects or no effects on the processing results. For example, time periods from 8:00 to 9:00 AM in the previous N Mondays are determined as the historical time periods. In some embodiments, information in the N historical time periods may have same effects on predicting the number of potential order recipients of the region. In some embodiments, information in the N historical time periods may have different effects on predicting or estimating the degree of traffic congestion during the historical or current time periods. In some embodiments, in the N historical time periods, the historical information in a time period that is close to the current time period may have greater effects on predicting the number of potential order recipients in the region, and the historical information in a time period that is far away from the current time period may have less effects on predicting the number of potential order recipients in the region. As another example, in the N time periods, the historical information in a time period that has one or more same characteristics with the current time period (e.g., same or similar weather, same or similar special road conditions (e.g., road works, road closure, traffic controls, etc.), etc.) may have greater effects on predicting the number of potential order recipients in the region.

In some embodiments, the number of dynamic potential order recipients during a current time period in a region may be predicted according to the number of potential order recipients that are moving during historical time periods in the region, the degree of traffic congestion during the historical time periods in the region, the degree of traffic congestion in current time period in the region. For example, the number of dynamic potential order recipients $D_{pre}$ during the current time period may be denoted as:

$$D_{pre} = D_{h1} \times (\delta_2 / \delta_1). \qquad (16)$$

The parameter $D_{h1}$ may denote the number of potential order recipients during the historical time periods in the region. The parameter $\delta_1$ may denote a coefficient indicating the degree of traffic congestion during the historical time periods in the region. The parameter $\delta_2$ may denote a coefficient indicating the degree of traffic congestion during the current time period in the region.

It will be appreciated that the parameter $D_{pre}$ may be calculated using other methods, or directly acquired from a form of contrasted lookup table (e.g., a degree of traffic congestion corresponds to a congestion coefficient). Any other conditions that can reflect relevant relations between the parameter $D_{pre}$ and the degree of traffic congestion, and further reflect the number of dynamic potential order recipients are within the protection scope of the present disclosure.

In some embodiments, the second number of potential order recipients may be represented as a function of the number of static potential order recipients of a region and the number of dynamic potential order recipients of the region. For example, the second number of potential order recipients $K_2$ may be denoted as:

$$K_2 = D_s + D_{pre}. \qquad (17)$$

The parameter $K_2$ may denote the second number of potential order recipients. The parameter $D_S$ may denote the number of static potential order recipients of the region. The parameter $D_{pre}$ may denote the number of dynamic potential order recipients of the region.

In some embodiments, the number of available vehicles $D_{h1}$ during historical time periods in a region may be used to estimate the number of dynamic potential order recipients $D_{pre}$. And the second number of potential order

recipients $K_2$ may be estimated accordingly. For example, a relation between the number of available vehicles $D_{h1}$ during the historical time periods in the region and the number of dynamic potential order recipients $D_{pre}$ may be denoted as:

$$D_{pre} = D_{h1}. \qquad (18)$$

In step 2430, a supply and demand density of orders of a region may be determined according to the characteristic parameters of order demand and the characteristic parameters of potential order recipients. The supply and demand density of orders may be calculated by the supply and demand characteristic calculation sub-unit 5733.

In some embodiments, the supply and demand density of orders may be represented as a ratio of the first number of order demands to the second number of potential order recipients. More particularly, for example, the supply and demand density of orders $K$ may be denoted as:

$$K = K_1/K_2. \qquad (19)$$

Further, according to Equations (15) - (18), the supply and demand density of orders $K$ may be denoted as:

$$K = \frac{X + \alpha P + \beta O_{pre}}{D_S + D_{pre}}. \qquad (20)$$

The parameters $X$, $P$, $O_{pre}$, $D_S$, $\alpha$, and $\beta$ are described in connection with Equations (15) - (19), and are not be repeated here.

In step 2435, the supply and demand density of orders may be sent to any information demand terminal devices (e.g., terminal devices 120 and/or 140), the database 130, the storage module 220, etc.

It should be noted that the above description of the process for transport capacity scheduling based on the statistical information is provided for the purposes of illustration, and not intended to limit the scope of the present disclosure. For persons having ordinary skills in the art, the supply and demand scheduling may be modified or altered in forms and details or make several simple deduction or substitution, or the sequence of each module or unit may be adjusted, combined or split without inventive work under the teaching of the present disclosure. However, those modifications and alterations are within the scope of the above description. For example, step 2405 can be omitted. The information of region division may be included in the acquisition of order information. As another example, an environmental information acquisition step may be added before step 2425. The added step may be configured to acquire environmental information, e.g., road condition relating to order information.

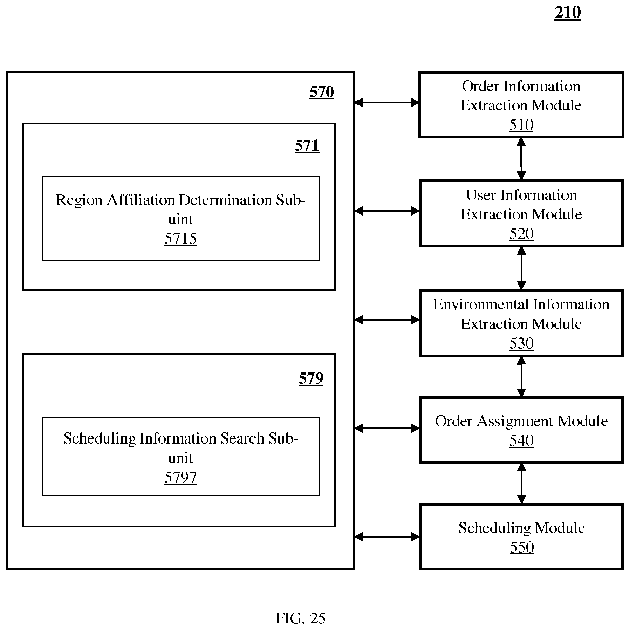

FIG. 25 is a schematic block diagram illustrating a processing module 210 according to some embodiments of the present disclosure. As shown in FIG. 25, the calculation module 570 may include a region information unit 571, and/or scheduling strategy calculation unit 579, and other units (not shown in FIG. 25). The region information unit 571 may include a region affiliation determination sub-unit 5715 and other sub-units (not shown in FIG. 25). The scheduling strategy calculation unit 579 may include a scheduling information search sub-unit 5797 and other sub-units (not shown in FIG. 25). In some embodiments, one or more order information extraction modules 510, user information extraction modules 520, environmental information extraction modules 530, order assignment modules 540, scheduling modules 550 may be connected with the calculation module 570 respectively. As shown in FIG. 25, a connection between the modules and units may be wired or wireless. Data may be transmitted between the modules and units as described above.

As shown in FIG. 25, the region affiliation determination sub-unit 5715 may be configured to determine a region that the location information sent by a user belongs to. In some embodiments, the user may be a service requester (e.g., a passenger), or a service provider (e.g., a driver). The region that the location information belongs to may be a region that the distance between the region and the location is less than a first preset threshold, a geographic region that the location belongs to, etc.

In some embodiments, the scheduling information search sub-unit 5797 may be configured to search a scheduling strategy during a preset time period in the region. The sources of the information search may include but are not limited to the database 130, the information source 160, the storage module 220, other storage devices, the like, or any combination thereof. In some embodiments, the length of the preset time period may be fixed or changed according to practical situations. The region that the scheduling strategy for searching belongs to may be a region that the location information sent by a user belongs to, or an adjacent region to the region that the location information sent by the user belongs to. In some embodiments, the scheduling strategy may include but is not limited to a supply and demand density push strategy, a hotspot characteristic push strategy, a statistical characteristic push strategy, an order push strategy, an order adjustment strategy, a prompt information push strategy, the like, or any combination thereof. The statistical characteristic push strategy may include but is not limited to order information, order interactive information, distribution information, environmental information, the like, or any combination thereof. The order information may include but is not limited to a total number of orders, an ordering time of an order, a departure location, a destination, a departure time, a number of passengers, whether to choose car sharing and/or carpool, whether to carry luggage, the like, or any combination thereof. The order information may be real-time order information, information related to reservation order, information related to historical order, the like, or any combination thereof. The order interactive information, the distribution information, and the environmental information may be historical data, real-time data, predictive data, the like, or any combination thereof.

It should be noted that the above description of the processing module 210 is provided for the purposes of illustration, and not intended to limit the scope of the present disclosure. Each of the above modules and units may be optional and may be implemented by one or more components. And functions of each module and unit are not limited here. Each of the above modules and units may be added or omitted to implement various applications. For persons having ordinary skills in the art, the processing module 210 may be modified or altered in forms and details or make several simple deduction or substitution, or the sequence of each module or unit may be adjusted, combined or split without inventive work under the teaching of the present disclosure. However, those modifications and alterations are within the scope of the above description. For example, a prompt information generation unit may be added to generate prompt information. The prompt information generation unit may be internal or external to the calculation module 570. In some embodiments, the prompt information generation unit may be configured in the user terminal. As another example, an assessment unit may be added to determine whether a total number of orders is less than a second preset threshold. If the total number of orders is less than the second preset threshold, a first prompt information may be generated to prompt a user that the number of orders in the region is relatively less. Alternatively, a second prompt information may be generated to prompt the user that the number of orders in the region is abundant in response to the determining that the total number of orders is greater than the second preset threshold. The assessment unit may also be configured to determine whether a total number of orders is greater than a third preset threshold. If the total number of orders is greater than the third preset threshold, the scheduling module 550 may send a scheduling strategy to the user terminal. Alternatively, the scheduling module 550 may not send the scheduling strategy to the user terminal in response to the determining that the total number of orders is less than or equal to the third preset threshold. The assessment unit may be internal or external to the calculation module 570. Besides, one or more units may be integrated in one unit to implement functions of the one or more units. All other alterations, improvements, and modifications are within the protection scope of the present disclosure.

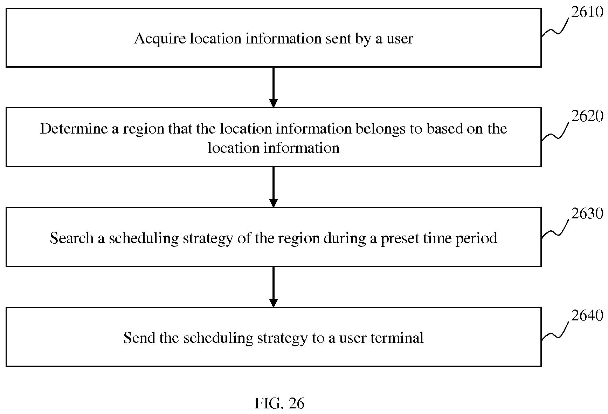

FIG. 26 is a flowchart illustrating an example method of transport capacity scheduling based on order interactive information and order distribution information according to some embodiments of the present disclosure.

In step 2610, location information sent by a user may be acquired. The location information may be acquired by the user information extraction module 520. In some embodiments, the user may be a service requester (e.g., a passenger), or a service provider (e.g., a driver). The user may send the location information to the scheduling engine 110 actively, or after receiving a send request from the scheduling engine 110. The user may send the location information to the scheduling engine 110 when necessary, or authorize the scheduling engine 110 or any other location information acquisition devices to acquire location information of the user without considering the user's demand. The user may send the location information regularly or irregularly. The input method of the location information may be actively inputted by the user, or automatically acquired by the user terminal. The input method by the user may include but is not limited to a text input, an image input, a graphic input, a voice input, a video input, a somatosensory input, the like, or any combination thereof. The automatic acquisition method by the user terminal may be an acquisition method by positioning technologies. The positioning technologies may include but are not limited to GPS (global positioning system) technologies, GLONASS (global navigation satellite system) technologies, compass navigation system technologies, Galileo positioning system technologies, QAZZ (quasi-zenith satellite system) technologies, base station positioning technologies, Wi-Fi positioning technologies, the like, or any combination thereof. In some embodiments, the location information may be referred to as a location point, a location area, etc.

In step 2620, a region that the location information belongs to may be determined based on the location information. The determination may be made by the region affiliation determination sub-unit 5715. In some embodiments, the region that the location information belongs to may be a region that the distance between the region and the location is less than a first preset threshold, or a geographic region that the location information belongs to. The first preset threshold may be fixed or changed according to practical situations. In some embodiments, the first preset threshold may be changed according to different geography locations, different time periods, or a combination thereof. For example, the first preset threshold for location information of Tiananmen may be less than the first preset threshold for location information of Yizhuang industrial district. For example, the first threshold for rush hours may be less than the first threshold for early morning hours. The first threshold for non-holidays may be less than the first threshold for Spring Festival. The first threshold for time periods with bad weather or major events may be less than the first threshold for usual time periods. The division of the geographic region that the location information belongs to may be based on the administrative regions (e.g., Haidian district, Chaoyang district, etc.), longitude and latitude information, business districts, buildings, street names, the like, or any combination thereof. The disclosure is not intended to limit.

In step 2630, a scheduling strategy of the region during a preset time period may be searched. The searching may be made by the scheduling information search sub-unit 5797. The sources of the information search may include but are not limited to the database 130, the information source 160, the storage module 220, other storage devices, the like, or any combination thereof. In some embodiments, length of the preset time period may be fixed or changed according to practical situations. The region that the scheduling strategy for searching belongs to may be a region that the location information sent by a user belongs to, or an adjacent region to the region that the location information sent by the user belongs to. In some embodiments, the scheduling strategy may include but is not limited to a supply and demand density push strategy, a hotspot characteristic push strategy, a statistical characteristic push strategy, an order push strategy, an order adjustment strategy, a prompt information push strategy, the like, or any combination thereof. The statistical characteristic push strategy may include but is not limited to order information, order interactive information, distribution information, environmental information, the like, or any combination thereof. The order information may include but is not limited to a total number of orders, an ordering time of an order, a departure location, a destination, a departure time, a number of passengers, whether to choose car sharing and/or carpool, whether to carry luggage, the like, or any combination thereof. The order information may be real-time order information, reservation order information, historical order information, the like, or any combination thereof. The order interactive information may include but is not limited to a number of terminals that grab one order, transaction volumes of orders, a number of unsettled orders, states of orders (e.g., orders may or may not have been transacted), transaction rates of orders, competition probabilities of orders, the like, or any combination thereof. The distribution information may include but is not limited to a total number of service providers, a number of service providers that can accept an order, supply and demand densities, densities of orders, densities of service providers, the like, or any combination thereof. The state of a service provider that can accept an order may be an idle state, a state of nearly finishing an order service, a capability state of car-sharing and/or carpool, or any other states in which the service provider can accept an order. The densities of orders and/or the densities of service providers may be the number of orders and/or the number of service providers in a unit region area (e.g., 10 orders/square meter, 20 drivers/square kilometer), during a unit time period (e.g., 10 orders/minute), etc. The environmental information may include but is not limited to weather information, traffic information, event information, geographic information, the like, or any combination thereof. The traffic information may include but is not limited to a location of a road, whether the road is clear or not, speed limits, whether an emergency happens or not (e.g., traffic accidents, maintenance measures, traffic controls, etc.), the like, or any combination thereof. The order interactive information, the distribution information and the environmental information may be historical data, real-time data, predictive data, the like, or any combination thereof.

In step 2640, a scheduling strategy may be sent to a user terminal. The scheduling strategy may be sent by the scheduling module 550. In some embodiments, the scheduling strategy may a scheduling strategy of a region that the location information sent by a user belongs to, or a scheduling strategy of an adjacent region to the region that the location information sent by the user belongs to, or a combination thereof. Forms of sending the scheduling strategy may be in a form of text, images, graphics, video, audio, the like, or any combination thereof. In some embodiments, the scheduling strategy may be sent to the mobile device 2900 (not shown in FIG. 29).

It should be noted that the above description of the process for transport capacity scheduling is provided for the purposes of illustration, and not intended to limit the scope of the present disclosure. For persons having ordinary skills in the art, the process for transport capacity scheduling may be modified or altered under the teaching of the present disclosure. For example, steps may be added, omitted, combined or split. For example, step 2630 may further include a prompt information generation step. A total number of orders may be compared to a second preset threshold. If the total number of orders is less than the second preset threshold, a first prompt information may be generated to prompt a user that the number of orders of the region is relatively less. Alternatively, a second prompt information may be generated to prompt a user that the number of orders of the region is adequate in response to determining that the total number of orders is greater than the second preset threshold. In some embodiments, the prompt information generation step may be implemented by the user terminal. As another example, an assessment step may be added before step 2640 to determine whether a total number of orders is greater than a third preset threshold. If the total number of orders is greater than the third preset threshold, the process may proceed to step 2640. Alternatively, in response to the determining that the total number of orders is less than or equal to the third preset threshold, the process may not proceed to step 2640 and the process may conclude. The second preset threshold or the third preset threshold may be fixed or changed according to practical situations. In some embodiments, the second preset threshold or the third preset threshold may be changed according to different geographic locations, different time periods, or a combination thereof. For example, the second preset threshold or the third preset threshold for Tiananmen may be less than the second preset threshold or the third preset threshold for Yizhuang industrial district. For example, the second preset threshold or the third preset threshold for rush hours may be less than the second preset threshold or the third preset threshold for early morning hours. The second preset threshold or the third preset threshold for non-holidays may be less than the second preset threshold or the third preset threshold for Spring Festival. The second preset threshold or the third preset threshold for time periods with bad weather or major events may be less than the second preset threshold or the third preset threshold for usual time periods.

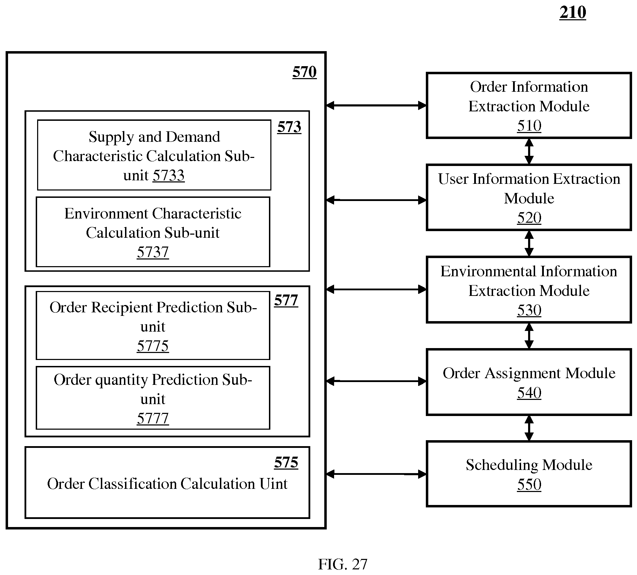

FIG. 27 is a schematic block diagram illustrating a processing module 210 according to some embodiments of the present disclosure.

As shown in FIG. 27, the processing module 210 may include one or more order information extraction modules 510, user information extraction modules 520, environmental information extraction modules 530, order assignment modules 540, scheduling modules 550, calculation modules 570. The calculation module 570 may include a characteristic index calculation unit 573, an order classification calculation unit 575, a prediction model calculation unit 577 and other units (not shown in FIG. 27). The characteristic index calculation unit 573 may include an environment characteristic calculation sub-unit 5737, a supply and demand characteristic calculation sub-unit 5733, and other sub-units (not shown in FIG. 27). The prediction model calculation unit 577 may include an order recipient prediction sub-unit 5775, an order quantity prediction sub-unit 5777 and other sub-units (not shown in FIG. 27).

The order information extraction module 510 may be configured to acquire order information. The user information extraction module 520 may be configured to acquire user information. The environmental information extraction module 530 may be configured to acquire environmental information. The order assignment module 540 may be configured to assign the unassigned order to a user. The scheduling module 550 may be configured to send the scheduling strategy to a user. Various functions of the modules are described in connection with FIG. 5, and are not be repeated here.

The supply and demand characteristic calculation sub-unit 5733 may be configured to calculate supply and demand characteristic indexes. The supply and demand characteristic indexes may include real-time supply and demand characteristic indexes, historical supply and demand characteristic indexes, predictive supply and demand characteristic indexes, the like, or any combination thereof. The supply and demand characteristic indexes may be represented as a ratio of the number of orders to the number of order recipients, a density of orders, other indexes that can reflect the supply and demand relations, the like, or any combination thereof. With respect to the ratio of the number of orders to the number of order recipients, the number of orders may be a number of real-time orders, a number of historical orders, a number of predictive orders, the like, or any combination thereof. The number of order recipients in the ratio may be a number of real-time order recipients, a number of recipients of historical orders, a number of recipients of predictive orders, the like, or any combination thereof. The density of orders may be an area density of orders, a time density of orders, a composite density of the area and the time of orders, etc.

The environment characteristic calculation sub-unit 5737 may be configured to calculate environmental information. The environmental information may refer to historical environmental information, real-time environmental information, predictive environmental information, etc. The environmental information may include weather information, traffic information, event information, geographic information, the like, or any combination thereof.

The order recipient prediction sub-unit 5775 may be configured to predict the number of order recipients. The prediction may be made based on historical data, real-time data, predictive data, the like, or any combination thereof. For example, the number of order recipients may be predicted based on a number of predictive orders.

The order quantity prediction sub-unit 5777 may be configured to predict a number of orders. The prediction may be made based on historical data, real-time data, predictive data, the like, or any combination thereof. For example, the number of orders may be predicted based on a number of orders in a specific region during a historical time period. As another example, the number of orders may be predicted based on predictive weather conditions.

The order classification calculation unit 575 may be configured to classify orders into groups. The classification may be an artificial designated grouping, or a calculated classification based on specific rules. In some embodiments, orders with one or more same characteristic parameters (e.g., a departure time, a region that a location belongs to, etc.) may be classified into one group.

It should be noted that the above description of the processing module 210 is provided for the purposes of illustration, and not intended to limit the scope of the present disclosure. Each of the above modules and units may be optional, each of the modules and units may be implemented by one or more components, and functions of each module and unit are not limited here. Each of the above modules and units may be added or omitted to implement various applications. For persons having ordinary skills in the art, the processing module 210 may be modified or altered in forms and details or make several simple deduction or substitution, or the sequence of each module or unit may be adjusted, combined or split without inventive work under the teaching of the present disclosure. However, those modifications and alterations are within the scope of the above description.

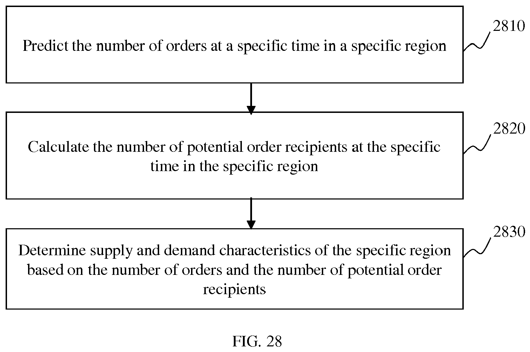

FIG. 28 is a flowchart illustrating an example of a transport capacity scheduling system based on supply and demand characteristic according to some embodiments of the present disclosure.

In step 2810, the number of orders at a specific time and in a specific region may be predicted. The specific time and the specific region may be preset by the system, preset based on a user demand, preset randomly, preset based on specific conditions, etc. The specific time may be time points and/or time periods. The specific time may be successive time points and/or time periods. Alternatively or additionally, the specific time may be discrete time points and/or time periods. The time standard may be a commonly used time standard, or a preset time standard based on an order. The specific region may be any space region (e.g., a location point, a location region, etc.). The specific region may be successive location points and/or location regions. Alternatively and additionally, the specific region may be discrete location points and/or location regions. Shape and size of the specific region may not be limited. More particularly, in some embodiments, a time duration in which the number of orders are relative stable may be set the specific time, according to characteristics of the number of orders.

The prediction of the number of orders at the specific time and in the region may be a prediction that can satisfy a setting condition. The setting condition may include but is not limited to a condition based on classification of orders, a condition based on relevant statistical data of orders, etc.

The classification of orders may be a classification that can satisfy a setting condition. The setting condition may be based on statistical data of orders in a specific region and at a specific time (e.g., based on a type of orders), based on data of users (e.g., preferences of users), the like, or any combination thereof. The type of orders may be a time based type (e.g., orders in the morning, orders in the noon, orders in the midnight, etc.). The type of orders may be a distance based type (e.g., short-distance orders, long-distance orders, etc.). The type of orders may be a special type of orders based on major events or holidays (e.g., orders in holidays, orders in workdays, etc.). In some embodiments, the type of orders may be short-distance orders, long-distance orders, etc. The preferences of users may be a data result processed using specific rules or significances. The data result may be acquired by analyzing and processing relevant information of users. The preferences of users may be an analysis result of users' preference for types of orders. For example, the preferences of users may include but are not limited to preferences of users for departure locations and destinations of orders, preferences of users for short-distance orders, long-distance orders, time information of orders, etc. The preferences of users may be acquired by analyzing preferences of service requesters, and/or preferences of service providers. In some embodiments, the analysis on the preferences of service providers may include preference characteristics of a driver group, preference characteristics of an individual driver, the like, or any combination thereof. The preference characteristics of the driver group may be reflected by orders with superior destinations. For example, destinations may be clustered to analyze orders with common preferences by the driver group. When clustering, the destinations may be clustered according to distances and times of the orders. Response of drivers in the same distance and time period may be determined to reflect a popularity degree of the destinations. The preference characteristics of the drive group may be determined accordingly. The preference characteristics of the individual driver may be analyzed based on data information of the driver that grabbing orders. The analysis on the preference characteristics of the individual driver may be made by analyzing times of grabbing orders by the driver, distances of orders, fees of orders, destinations of orders, etc. In some embodiments, the orders may be classified into long-distance orders, short-distance orders, preference orders, etc. The information sources of the step may include but are not limited to the database 130, the information source 160 and/or the storage module 220. Step may be implemented by the order information extraction module 510, the user information extraction module 520, the order grouping calculation unit 575, the like, or any combination thereof.

Relevant data of orders may be processed based on some conditions. The processing result may have an effect on the prediction based on relevant statistical data of the orders. The relevant statistical data of the orders may be time-related data of the orders, space-related data of the orders, fee of the orders, service type of the orders, the like, or any combination thereof. The time-related data of the orders may be data of historical orders, data of real-time orders, data of future orders (e.g., data of reservation orders), the like, or any combination thereof. In some embodiments, data of historical orders of a specific region at a time point or time period yesterday or in previous days may be analyzed. The number of orders of the region at the specific time may be predicted according to the analysis. In some embodiments, the number of orders may be predicted based on the data of real-time orders. In some embodiments, the number of orders predicted based on the historical data and real-time orders at current may be given a certain weight. The number of orders may be jointly determined by the two numbers above. The information sources of the step may include but are not limited to the database 130, the information source 160 and/or the storage module 220. Step 2810 may be implemented by the order information extraction module 510, the user information extraction module 520, the order grouping calculation unit 575, the order recipient prediction sub-unit 5775, the like, or any combination thereof.

In step 2820, the number of potential order recipients at a specific time and in a specific region may be calculated. The specific time and the specific region are described in connection with step 2810, and are not repeated here. The specific time and the specific region in step 2820 may be same with or different from that in step 2810. In some embodiments, explanations of the specific time and the specific region is same with the relevant explanations in step 2820. The potential order recipients may be service providers. The calculation of the number of potential order recipients at the specific time and in the specific region is similar to the calculation in step 2420 and step 2425, and is not repeated here. Any data processing with a purpose of calculating the number of potential order recipients at the specific time and in the specific region are within the scope of the above description. The information sources of the step may include but are not limited to the database 130, the information source 160 and/or the storage module 220. Step 2830 may be implemented by the order information extraction module 510, the user information extraction module 520, the environmental information extraction module 530, the order recipient prediction sub-unit 5775, the like, or any combination thereof.

In step 2830, supply and demand characteristics of a specific region may be determined based on the number of orders and the number of potential order recipients. The supply and demand characteristics of the specific region can be finally acquired using a data processing method. It will be appreciated that any data processing methods that can finally acquire the supply and demand characteristics of the specific region are within the scope of the description in step 2830. The supply and demand characteristics may be characteristics that can reflect a supply and demand relation between the number of orders and the number of potential order recipients at the specific time and in the specific region. The data processing method may be similar to step 2430, or be any other data processing methods. The data processing method corresponded to the data processing method in step 2430 is not be repeated here. With respect to other data processing methods, in some embodiments, a value of the supply and demand characteristics may be represented by a ratio of the number of orders to the number of potential order recipients multiplied by a smooth function. The setting of smooth function may optimize the data processing and reflect the supply and demand characteristics effectively. In some embodiments, the smooth function may be a base with any values logarithm function. For example, the logarithm function may be a base-2 logarithm function and denoted as:

$$Q = (N/O) \times log_2(D). \qquad (21)$$

The parameter Q may denote a value of the supply and demand characteristics. The parameter N may denote the number of orders. The parameter O may denote the number of potential order recipients. The parameter D may denote the number of types of orders.

In some embodiments, the parameter D (e.g., the number of types of orders) may represent one or more types of orders described in step 2810 and be not repeated here. For example, the parameter D may be a number of short-distance orders, a number of long-distance orders, a number of preference orders of users, the like, or any combination thereof.

The information sources of step 2830 may include but are not limited to the database 130, the information source 160, the storage module 220, etc. Step 2830 may be performed by the supply and demand characteristic calculation sub-unit 5733.

It should be noted that the above description of the process for transport capacity scheduling based on statistical information is provided for the purposes of illustration, and not intended to limit the scope of the present disclosure. For persons having ordinary skills in the art, the supply and demand scheduling may be modified or altered in forms and details under the teaching of the present disclosure. However, those modifications and alterations are within the scope of the above description. For example, a step for acquiring the order information and the user information may be added before step 2810.

FIG. 29 illustrates a structure of a mobile device that is configured to implement a specific system disclosed in the present disclosure. In some embodiments, the user terminal device configured to display and communicate information related to locations may be a mobile device 2900. The mobile device may include but is not limited to a smart phone, a tablet computer, a music player, a portable game console, a GPS receiver, a wearable calculating device (e.g. glasses, watches, etc.), etc. The mobile device 2900 may include one or more CPUs 2940, one or more GPUs 293030, a display 2920, a memory 2960, an antenna 2910 (e.g. a wireless communication unit), a storage unit 2990, and one or more input/output (I/O) devices 2950. Moreover, the mobile device 2900 may also be any other suitable component that includes but is not limited to a system bus or a controller (not shown in FIG. 29). As shown in FIG. 29, a mobile operating system 2970 (e.g. IOS, Android, Windows Phone, etc.) and one or more applications 2980 may be loaded from the storage unit 2990 to the memory 2960 and implemented by the CPUs 2940. The application 2980 may include a browser or other mobile applications configured to receive and process information related to locations in the mobile device 2900. The passenger/driver may obtain communication information related to locations through the system I/O device 2950, and provide the information to the scheduling engine 110 and/or other modules or units of the system 100, e.g. the network 150.

In order to implement various modules, units and their functions described above, a computer hardware platform may be used as hardware platforms of one or more elements (e.g., the scheduling engine 110 and/or other sections of the system 100 described in FIG. 1 through FIG. 28). Since these hardware elements, operating systems and program languages are common, it may be assumed that persons skilled in the art may be familiar with these techniques and they may be able to provide information required in the on-demand service according to the techniques described in the present disclosure. A computer with user interface may be used as a personal computer (PC), or other types of work stations or terminal devices. After being properly programmed, a computer with user interface may be used as a server.

It may be considered that those skilled in the art may also be familiar with such structures, programs, or general operations of this type of computer device. Thus, extra explanations are not described for the Figures.

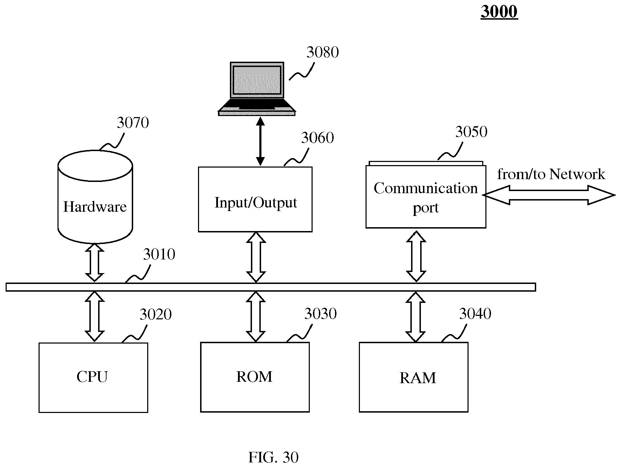

FIG. 30 illustrates a structure of a computing device that is configured to implement a specific system disclosed in the present disclosure. The particular system may use a functional block diagram to explain the hardware platform containing one or more user interfaces. The computer may be a computer with general or specific functions. Both types of the computers may be configured to implement any particular system according to some embodiments of the present disclosure. The computer 3000 may be configured to implement any components that provides information required by the on-demand service disclosed in the present description. For example, the order pushing engine 110 may be implemented by hardware devices, software programs, firmware, or any combination thereof of a computer like the computer 3000. For brevity, FIG. 30 depicts only one computer. In some embodiments, the functions of the computer, providing information that on-demand service may require, may be implemented by a group of similar platforms in a distributed mode to disperse the processing load of the system.

The computer 3000 may include a communication terminal 3050 that may connect with a network that may implement the data communication. The computer 3000 may also include a CPU that is configured to execute instructions and includes one or more processors. The schematic computer platform may include an internal communication bus 3010, different types of program storage units and data storage units, e.g. a hard disk 3070, a ROM 3030, a RAM 3040), various data files applicable to computer processing and/or communication, and some program instructions executed possibly by the CPU. The computer 3000 may also include an I/O device 3060 that may support the input and output of data flows between the computer and other components (e.g. a user interface 3080). Moreover, the computer 3000 may receive programs and data via the communication network.

Various aspects of methods of providing information required by on-demand service and/or methods of implementing other steps by programs are described above. The programs of the technique may be considered as "products" or "artifacts" presented in the form of executable codes and/or relative data. The programs of the technique may be joined or implemented by the computer readable media. Tangible and non-volatile storage media may include any type of memory or storage that is applied in computer, processor, similar devices, or relative modules. For example, the tangible and non-volatile storage media may be various types of semiconductor storages, tape drives, disc drives, or similar devices capable of providing storage function to software at any time.

Some or all of the software may sometimes communicate via a network, e.g. the Internet or other communication networks. This kind of communication may load a software from a computer device or a processor to another. For example, a software may be loaded from a management server or a main computer of the on-demand service system to a hardware platform in a computer environment, or to other computer environments capable of implementing the system, or to systems with similar functions of providing information required by on-demand service. Correspondingly, another media used to transmit software elements may be used as physical connections among some of the equipment. For example, light wave, electric wave, electromagnetic wave, etc. may be transmitted by cables, optical cables or air. Physical media used to carry waves, e.g. cable, wireless connection, optical cable, etc., may also be considered as media of hosting software. Herein, unless the tangible "storage" media is particularly designated, other terminologies representing the "readable media" of a computer or a machine may represent media joined by the processor when executing any instruction.

A computer readable media may include a variety of forms, including but is not limited to tangible storage media, wave-carrying media or physical transmission media. Stable storage media may include compact disc, magnetic disk, or storage systems that are applied in other computers or similar devices and may achieve all the sections of the system described in the drawings. Unstable storage media may include dynamic memory, e.g. the main memory of the computer platform. Tangible transmission media may include coaxial cable, copper cable and optical fiber, including circuits forming the bus in the internal of the computer system. Wave-carrying media may transmit electric signals, electromagnetic signals, acoustic signals or light wave signals. And these signals may be generated by radio frequency communication or infrared data communication. General computer readable media may include hard disk, floppy disk, magnetic tape, or any other magnetic media; CD-ROM, DVD, DVD-ROM, or any other optical media; punched cards, or any other physical storage media containing aperture mode; RAM, PROM, EPROM, FLASH-EPROM, or any other memory chip or magnetic tape; carrying waves used to transmit data or instructions, cable or connection devices used to transmit carrying waves, or any other program code and/or data accessible to a computer. Most of the computer readable media may be applied in executing instructions or transmitting one or more results by the processor.

It may be understood to those skilled in the art that various alterations and improvements may be achieved according to some embodiments of the present disclosure. For example, the various components of the system described above are all achieved by hardware equipment. In fact, the various components of the system described above may be achieved merely by software, e.g. installing the system on the current server. Additionally or alternatively, the location information disclosed here may be provided by a firmware, a combination of a firmware and a software, a combination of a firmware and a hardware, or a combination of a firmware, a hardware and a software.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

**Claims**

1. A method of scheduling services based on location information, comprising:

   acquiring scheduling related information;
   determining a scheduling strategy according to the scheduling related information; and
   sending the scheduling strategy to at least one of an order initiator or an order recipient.

2. The method of claim 1, wherein the scheduling related information comprises at least one of historical order information, real-time order information, historical weather information, real-time weather information, future weather information, traffic information, historical information of a service provider, real-time information of a service provider, or vehicle information collected by a vehicle-mounted diagnosis system.

3. The method of claim 1, wherein the determination of a scheduling strategy further comprises:

   determining an actual scheduling amount according to the scheduling related information; and
   determining a scheduling strategy according to the actual scheduling amount.

4. The method of claim 3, wherein the determination of the actual scheduling amount according to the scheduling related information comprises:

   determining a region distribution of one or more order recipients;
   calculating a potential scheduling amount of a region based on the region distribution;
   calculating a potential transaction volume of the region based on the potential scheduling amount of the region;
   calculating a maximum sum of increments of potential transaction volumes based on the potential transaction volume of the region; and
   determining the actual scheduling amount of the region based on the maximum sum of increments of potential transaction volumes.

5. The method of claim 3, wherein the determination of the actual scheduling amount according to the scheduling related information comprises:

   performing a region division based on geographic information;
   calculating a current demand amount of service providers related to the region division;
   calculating an expected demand amount of the service providers related to the region division; and
   determining the actual scheduling amount based on the current demand amount and the expected demand amount.

6. The method of claim 1, wherein the scheduling strategy comprises at least one of a supply and demand density push strategy, a hotspot characteristic push strategy, a statistical characteristic push strategy, an order push strategy, an order adjustment strategy, or a prompt information push strategy.

7. The method of claim 6, wherein the determination of the supply and demand density push strategy comprises:

   acquiring a number of predictive orders at a specific time and in a specific region;
   determining a number of service providers that are likely to receive an order at the specific time and in the specific region; and
   determining the supply and demand density of the specific region based on the number of predictive orders and the number of service providers.

8. The method of claim 6, wherein the determination of the statistical characteristic push strategy comprises:

extracting location information of a service provider according to the scheduling related information;
extracting information of a plurality of orders that are associated with locations near a location of the service provider based on the location information of the service provider;
determining, for each of the plurality of orders, at least one iconic location;
classifying the plurality of orders into a plurality of groups based on the iconic locations and time information of the orders; and
calculating statistical characteristics of the orders in each of the plurality of groups.

9. The method of claim 6, further comprising:

selecting a group of real-time orders corresponding to an iconic location based on the iconic location.

10. The method of claim 6, wherein the determination of the order push strategy comprises:

determining a first region associated with a first ratio of order demand to service ability of a service provider and a second region associated with a second ratio of order demand to service ability of the service provider, wherein the first ratio is less than a first threshold, and wherein the second ratio is greater than a second threshold;
for each order in the first region, selecting at least a first user for presentation of the order; and
for each user in the second region, selecting at least one order to be presented to at least a second user.

11. The method of claim 6, wherein the determination of the order adjustment strategy comprises:

extracting weather information during a first preset time period in a target region the scheduling related information;
extracting order information during a second preset time period in the target region and information of service providers at a current time according to the scheduling related information; and
determining the order adjustment strategy according to the weather information, the order information in the second preset time period, and the information of the service providers.

12. A system for scheduling services based on location information, comprising:

a tangible computer readable storage medium that stores executable modules, comprising:

an order information extraction module;
a user information extraction module;
an environmental information extraction module,
wherein the order information extraction module, the user information extraction module and the environment information extraction module are configured to acquire scheduling related information;
a calculation module configured to determine a scheduling strategy according to the scheduling related information;
a scheduling module configured to send the scheduling strategy; and

a processor, configured to execute the executable modules stored in the computer readable storage medium.

13. The system of claim 12, wherein the scheduling related information comprises at least one of historical order information, real-time order information, historical weather information, real-time weather information, future weather information, traffic information, historical information of a service provider, or real-time information of a service provider, or vehicle information collected by a vehicle-mounted diagnosis system.

14. The system of claim 12, wherein the determination of a scheduling strategy further comprises:

determining an actual scheduling amount according to the scheduling related information; and
determining a scheduling strategy according to the actual scheduling amount.

15. The system of claim 14, wherein the determining of the actual scheduling amount according to the scheduling related information comprises:

determining a region distribution of multiple order recipients;

calculating a potential scheduling amount of a region based on the region distribution;
calculating a potential transaction volume of the region based on the potential scheduling amount of the region;
calculating a maximum sum of increment of potential transaction volume based on the potential transaction volume of the region; and
determining the actual scheduling amount of the region based on the maximum sum of increment of potential transaction volume.

16. The system of claim 14, wherein the determining of the actual scheduling amount according to the scheduling related information comprises:

performing a region division based on geographic information;
calculating a current demand amount of service providers related to the region division;
calculating an expected demand amount of the service providers related to the region division; and
determining the actual scheduling amount based on the current demand amount and the expected demand amount.

17. The system of claim 12, wherein the scheduling strategy comprises at least one of a supply and demand density push strategy, a hotspot characteristic push strategy, a statistical characteristic push strategy, an order push strategy, an order adjustment strategy, or a prompt information push strategy.

18. The system of claim 17, wherein the determination of the supply and demand density push strategy comprises:

acquiring a number of predictive orders at a specific time and in a specific region;
determining a number of service providers that are likely to receive an order at the specific time and in the specific region; and
determining the supply and demand density of the specific region based on the number of predictive orders and the number of the service providers.

19. The system of claim 17, wherein the determination of the statistical characteristic push strategy comprises:

extracting location information of a service provider according to the scheduling related information;
extracting information of a plurality of orders that are associated with locations near a location of the service provider based on the location information of the service provider;
determining, for each of the plurality of orders, at least one iconic location;
classifying the plurality of orders into a plurality of groups based on the iconic locations and time information of the orders; and
calculating statistical characteristics of the orders in each of the plurality of groups.

20. The system of claim 17, further comprising:

selecting a group of real-time orders corresponding to an iconic location based on the iconic location.

21. The system of claim 17, wherein the determination of the order push strategy comprises:

determining a first region associated with a first ratio of order demand to service ability of a service provider, and a second region associated with a second ratio of order demand to service ability of the service provider, wherein the first ratio is less than a first threshold, and wherein the second ratio is greater than a second threshold;
for each order in the first region, selecting at least a first user for presentation of the order; and
for each user in the second region, selecting at least one order to be presented to at least a second user.

22. The system of claim 17, wherein the determination of the order adjustment strategy comprises:

extracting weather information during a first preset time period in a target region according to the scheduling related information;
extracting order information during a second preset time period in the target region and information of service providers at a current time according to the scheduling related information; and
determining the order adjustment strategy according to the weather information, the order information in the second preset time period, and the information of the service providers.

23. A method for providing services based on location information, comprising:

sending, by a terminal, the location information to a system for scheduling services; and
receiving, by the terminal, a scheduling strategy based on the location information, wherein the scheduling strategy is generated by the system.

24. The method of claim 23, wherein the terminal comprises at least one of a passenger terminal or a driver terminal.

25. The method of claim 23, wherein the scheduling strategy comprises at least one of a supply and demand density push strategy, a hotspot characteristic push strategy, a statistical characteristic push strategy, an order push strategy, an order adjustment strategy, or a prompt information push strategy.

26. The method of claim 23, further comprising displaying, by the terminal, the scheduling strategy, wherein the scheduling strategy is displayed via at least one of voice, text, images, or video content.

27. The method of claim 26, further comprising displaying, by the terminal, the scheduling strategy in a form of image by displaying at least one of different supply and demand densities, densities of orders, numbers of orders, or a number of users based on a map of the terminal.

**100**

FIG. 1

FIG. 2

Acquire scheduling related information                                    311

Determine a scheduling strategy according to the scheduling related information    313

Send the scheduling strategy                                             315

FIG. 3

Receive a scheduling strategy from a server                              421

Display the received scheduling strategy from the server                 423

Receive demand information                                               425

Send the received demand information                                     427

FIG. 4-A

Receive a scheduling strategy from a scheduling engine                   431

Display the received scheduling strategy                                 433

FIG. 4-B

**210**

**570** Claculation Module

Region Information
Calculation Unit
**571**

Characteristic Index
Calculation Unit
**573**

Order Classification
Calculation Unit
**575**

Prediction Model Calculation
Unit
**577**

Scheduling Strategy
Calculation Unit
**579**

......

Order Information
Extraction Module
**510**

User Information
Extraction Module
**520**

Environmental Information
Extraction Module
**530**

Order Assignment Module
**540**

Scheduling Module
**550**

FIG. 5

**210**

**570**

**571**

| Region Division Sub-unit 5711 | Region Affiliation Determination Sub-uint 5715 |
|---|---|

**573**

Region Characteristic Index Calculation Sub-unit 5731

**577**

Region Characteristic-based Prediction Sub-unit 5771

**579**

Scheduling Amount Calculation Sub-unit 5796

Order Information Extraction Module 510

User Information Extraction Module 520

Environmental Information Extraction Module 530

Order Assignment Module 540

Scheduling Module 550

FIG. 6

(116.33, 39.92)      (116.34, 39.92)

(116.33, 39.91)      (116.34, 39.91)

FIG. 7-A

721n

721c

721a

731a

721b          731b

FIG. 7-B

B District

4th Ring Road

Building
A001

A District

Building
C001

Building
C002

Building
C003

C District

FIG. 7-C

| | |
|---|---|
| Divide a region into sub-regions according to a certain region division method | 801 |
| ↓ | |
| Acquire a supply amount of a current service relating to a sub-region | 803 |
| ↓ | |
| Acquire an expected demand amount relating to the sub-region | 805 |
| ↓ | |
| Determine an actual scheduling amount according to the supply amount of the current service and the expected demand amount | 807 |

FIG. 8

**210**

**570**

**577**

Environment Information-based
Prediction Sub-unit
**5773**

**579**

Supply and Demand Adjustment
Strategy Assessment Sub-unit
**5791**

Order Information
Extraction Module
**510**

User Information Extraction
Module
**520**

Environmental Information
Extraction Module
**530**

Order Assignment Module
**540**

Scheduling Module
**550**

FIG. 9

```
Acquire information of an order recipient in a target region at a target
time                                                                      ⟍1010

                              ↓

Acquire environmental information of the target region in a future time
period                                                                    ⟍1020

                              ↓

Acquire order information of the target region in a historical time
period                                                                    ⟍1030

                              ↓

Acquire environmental information of the target region in the historical
time period                                                               ⟍1040

                              ↓

Determine whether to initiate the scheduling strategy according to the
acquired information of the order receiver, the environmental
information and the order information                                     ⟍1050

                              ↓

If implementation of a scheduling strategy is to be initiated, select the
scheduling strategy according to the determination                        ⟍1060
```

FIG. 10

Calculate a baseline value of supply and demand according to the order information and information of order recipient

1101

Calculate a prediction value of supply and demand according to environmental information and the baseline value supply and demand

1103

1105

The prediction value of supply and demand is greater than a preset threshold of short supply?

1109

Y → Initiate a preset scheduling strategy for a short supply situation

N

1107

The prediction value of supply and demand is less than a preset threshold of oversupply?

1111

Y → Initiate a preset scheduling strategy for an oversupply situation

N

Determine not to initiate the preset scheduling strategy

1113

FIG. 11

**210**

**570**

**571**

Region Merging Sub-unit
**5717**

**573**

Supply and Demand Characteristic Calculation Sub-unit **5733**

Hotspot Characteristic Calculation Sub-unit
**5735**

Probability Calculation Sub-unit
**5736**

**579**

Region User Selection Sub-unit
**5793**

High Probability User Selection Sub-unit
**5792**

Region Order Selection Sub-unit
**5795**

High Probability Order Selection Sub-unit
**5794**

Order Information Extraction Module
**510**

User Information Extraction Module
**520**

Environmental Information Extraction Module
**530**

Order Assignment Module
**540**

Scheduling Module
**550**

FIG. 12

1301

Acquire order information and user information in a specific region

1303

Determine a probability that a user may select an order relating to the user in the region

1305

Determine one or more regions of oversupply and regions of short supply

1307

Determine one or more hotspot regions of users and hotspot regions of orders

1308

Determine regions of oversupply and regions of short supply among the hotspot regions of the orders and the hotspot regions of the users respectively

1309

Merge a certain number of the hotspot regions of the orders into a new hotspot region of the orders and merge a certain number of the hotspot regions of the users into a new hotspot region of the users

1310

Determine regions of oversupply and regions of short supply among the new hotspot regions of the orders and the new hotspot regions of the users, respectively

1311

For one order in the regions of oversupply, select users for presentation of the order

1313

For one order in the regions of oversupply, select users relatively high probabilities of selecting the order among users relating to the order

1315

For one user in the regions of short supply, select orders that are presented to the user

1317

For one user in the regions of short supply, select orders with relatively high probabilities of selection by the user among orders relating to the user

FIG. 13

<u>**210**</u>

| | |
|---|---|
| <u>**570**</u> | Order Information Extraction Module <u>510</u> |
| <u>**571**</u> | |
| Region Division Sub-unit <u>5711</u> | User Information Extraction Module <u>520</u> |
| Region Affiliation Determination Sub-uint <u>5715</u> | Environmental Information Extraction Module <u>530</u> |
| <u>**579**</u> | Order Assignment Module <u>540</u> |
| Scheduling Amount Calculation Sub-unit <u>5796</u> | Scheduling Module <u>550</u> |

FIG. 14

Determine a region distribution of multiple users ⟋1510

Calculate a potential scheduling amount of the region based on the region distribution ⟋1520

Calculate an increment of potential transaction volumes of the region based on the potential scheduling amount of the region ⟋1530

Calculate a maximum sum of increments of potential transaction volumes based on the increment of potential transaction volumes of the region ⟋1540

Determine an actual scheduling amount based on the maximum sum of increments of potential transaction volumes ⟋1550

FIG. 15

210

579

| Order Information Extraction Module 510 |

| User Information Extraction Module 520 |

| Environmental Information Extraction Module 530 |

Order-user Matching Sub-unit 5798

| Order Assignment Module 540 |

| Scheduling Module 550 |

FIG. 16

Vehicle Scheduling
Apparatus
1710

Vehicle-mounted
Diagnosis Module
1720-1

...

Vehicle-mounted
Diagnosis Module
1720-n

Terminal
1730-1

...

Terminal
1730-n

FIG. 17

Acquire order information of an order / 1805

Select at least one user that can accept the order based on the order information / 1810

Acquire vehicle state information of the at least one user that can accept the order by a vehicle-mounted diagnosis system / 1820

Match the order information and the vehicle state information of the at least one user that can accept the order to obtain a matching result / 1830

Send a scheduling strategy to a user with a better matching result / 1840

FIG. 18

```
┌─────────────────────────────────────────────┐
│ Calculate a distance between departure       │  1910
│ location and destination location            │
│ according to an order information            │
└─────────────────────────────────────────────┘
                      │
                      ▼
┌─────────────────────────────────────────────┐
│ Calculate an amount of required energy       │  1920
│ according to the distance and a aquired      │
│ vehicle state information of a vehicle       │
└─────────────────────────────────────────────┘
```

Whether the amount of remaining energy of the vehicle is no less than the amount of required energy — 1930

N → Remove the user corresponding to the vehicle from a list of at least one user that can accept the order — 1940

Y

Obtain distance information between the user and the departure location described in the order — 1950

Determine a better matching result according to the distance information — 1960

FIG. 19

**210**

| **570** | | Order Information Extraction Module 510 |
|---|---|---|
| **571** Iconic Location Determination Sub-unit 5713 | | User Information Extraction Module 520 |
| **573** Order Characteristic Calculation Sub-unit 5732 | | Environmental Information Extraction Module 530 |
| **575** Order Classification Calculation Unit | | Order Assignment Module 540 |
| | | Scheduling Module 550 |

FIG. 20

| Acquire information of one or more historical orders with departure locations in a region near a specific location | 2101 |

| Determine iconic locations of the historical orders | 2103 |

| Classify the one or more historical orders into groups based on the iconic locations and characteristics of the orders | 2105 |

| Calculate statistical data of the historical orders in each group | 2107 |

| Send one or more statistical data of the historical orders in one or more groups according to specific conditions | 2109 |

FIG. 21

Acquire information of one or more real-time orders with departure locations in a region near a specific location — 2201

Determine iconic locations of the real-time orders — 2203

Classify the one or more real-time orders into groups based on the iconic locations — 2205

Calculate statistical data of the real-time orders in each group — 2207

Send the real-time orders in one more groups according to specific conditions — 2209

FIG. 22

**210**

570

571

Region Division Sub-unit
5711

573

Order Characteristic Calculation
Sub-unit
5732

User Characteristic Calculation
Sub-unit
5734

Supply and Demand
Characteristic Calculation Sub-
unit 5733

Order Information
Extraction Module
510

User Information Extraction
Module
520

Environmental Information
Extraction Module
530

Order Assignment Module
540

Scheduling Module
550

FIG. 23

Perform a region division according to a certain region division method /2405

↓

Acquire order demand information in a specific region /2410

↓

Calculate characteristic parameters of potential order demand based on the order demand information /2415

↓

Acquire information of order recipients in the specific region /2420

↓

Calculate characteristic parameters of potential order recipients based on the information of the order recipients /2425

↓

Determine a supply and demand density of orders of the region according to the characteristic parameters of order demand and the characteristic parameters of order recipients /2430

↓

Send the supply and demand density of the orders /2435

FIG. 24

**210**

| 570 | | Order Information Extraction Module 510 |
| --- | --- | --- |

**571**

Region Affiliation Determination Sub-uint
5715

User Information Extraction Module
520

Environmental Information Extraction Module
530

**579**

Scheduling Information Search Sub-unit
5797

Order Assignment Module
540

Scheduling Module
550

FIG. 25

Acquire location information sent by a user    2610

Determine a region that the location information belongs to based on the location information    2620

Search a scheduling strategy of the region during a preset time period    2630

Send the scheduling strategy to a user terminal    2640

FIG. 26

**210**

**570**

**573**

Supply and Demand Characteristic Calculation Sub-unit **5733**

Environment Characteristic Calculation Sub-unit **5737**

**577**

Order Recipient Prediction Sub-unit **5775**

Order quantity Prediction Sub-unit **5777**

**575**
Order Classification Calculation Uint

Order Information Extraction Module **510**

User Information Extraction Module **520**

Environmental Information Extraction Module **530**

Order Assignment Module **540**

Scheduling Module **550**

FIG. 27

Predict the number of orders at a specific time in a specific region ⌇2810

Calculate the number of potential order recipients at the specific time in the specific region ⌇2820

Determine supply and demand characteristics of the specific region based on the number of orders and the number of potential order recipients ⌇2830

FIG. 28

**2900**

2910

Display Unit
2920

Graphical
Processing Unit
2930

Memory **2960**

Operating
System
2970

CPU
2940

Application
2980

Input/Output
Unit
2950

Storage Unit
2990

FIG. 29

**3000**

3080

3070

3060

3050

from/to Network

Hardware

Input/Output

Communication
port

3010

3020

3030

3040

CPU

ROM

RAM

FIG. 30

# INTERNATIONAL SEARCH REPORT

| International application No. |
| --- |
| PCT/CN2016/073559 |

## A. CLASSIFICATION OF SUBJECT MATTER

G06Q 10/06 (2012.01) i

According to International Patent Classification (IPC) or to both national classification and IPC

## B. FIELDS SEARCHED

Minimum documentation searched (classification system followed by classification symbols)

G06Q, H04L, G08G

Documentation searched other than minimum documentation to the extent that such documents are included in the fields searched

Electronic data base consulted during the international search (name of data base and, where practicable, search terms used)

CNPAT, CNKI, WPI, EPODOC: DIDI; UBER; ask for a taxi, supply and demand, heating power, taxi, uber, didi, order, dispatch+, request, density, distribution, attemper, adjust, map

## C. DOCUMENTS CONSIDERED TO BE RELEVANT

| Category* | Citation of document, with indication, where appropriate, of the relevant passages | Relevant to claim No. |
| --- | --- | --- |
| PX | CN 104599088 A (BEIJING DIDI INFINITY TECHNOLOGY AND DEVELOPMENT CO., LTD.), 06 May 2015 (06.05.2015), description, paragraphs [0034]-[0057] | 1-27 |
| PX | CN 104616119 A (BEIJING DIDI INFINITY TECHNOLOGY AND DEVELOPMENT CO., LTD.), 13 May 2015 (13.05.2015), description, paragraphs [0004]-[0035] | 1-27 |
| PX | CN 104657933 A (BEIJING DIDI INFINITY TECHNOLOGY AND DEVELOPMENT CO., LTD.), 27 May 2015 (27.05.2015), description, paragraphs [0004]-[0022] | 1-27 |
| PX | CN 104867065 A (BEIJING DIDI INFINITY TECHNOLOGY AND DEVELOPMENT CO., LTD.), 26 August 2015 (26.08.2015), description, paragraphs [0028]-[0066] | 1-27 |
| PX | CN 105096588 A (BEIJING DIDI INFINITY TECHNOLOGY AND DEVELOPMENT CO., LTD.), 25 November 2015 (25.11.2015), description, paragraphs [0005]-[0051] | 1-27 |
| PX | CN 105139089 A (BEIJING DIDI INFINITY TECHNOLOGY AND DEVELOPMENT CO., LTD.), 09 December 2015 (09.12.2015), description, paragraphs [0051]-[0089] | 1-27 |
| X | CN 103985247 A (BEIJING DIDI INFINITY TECHNOLOGY AND DEVELOPMENT CO., LTD.), 13 August 2014 (13.08.2014), description, paragraphs [0037]-[0079] | 1-27 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20 April 2016 (20.04.2016) | 05 May 2016 (05.05.2016) |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer FANG, Ting Telephone No.: (86-10) 62413316 |
| --- | --- |

Form PCT/ISA/210 (second sheet) (July 2009)

## INTERNATIONAL SEARCH REPORT

International application No.

**PCT/CN2016/073559**

**C (Continuation).    DOCUMENTS CONSIDERED TO BE RELEVANT**

| Category* | Citation of document, with indication, where appropriate, of the relevant passages | Relevant to claim No. |
|---|---|---|
| X | CN 102063691 A (BEIJING DONGFANGCHEYUN INFORMATION TECHNOLOGY CO., LTD.), 18 May 2011 (18.05.2011), description, paragraphs [0031]-[0060] | 1-27 |
| A | WO 2011014076 A1 (PAULSEN, T.), 03 February 2011 (03.02.2011), the whole document | 1-27 |

Form PCT/ISA/210 (continuation of second sheet) (July 2009)

## INTERNATIONAL SEARCH REPORT
### Information on patent family members

International application No.

**PCT/CN2016/073559**

| Patent Documents referred in the Report | Publication Date | Patent Family | Publication Date |
|---|---|---|---|
| CN 104599088 A | 06 May 2015 | None | |
| CN 104616119 A | 13 May 2015 | None | |
| CN 104657933 A | 27 May 2015 | None | |
| CN 105096588 A | 25 November 2015 | None | |
| CN 105139089 A | 09 December 2015 | None | |
| CN 103985247 A | 13 August 2014 | WO 2015161828 A1 | 29 October 2015 |
| CN 102063691 A | 18 May 2011 | None | |
| WO 2011014076 A1 | 03 February 2011 | NO 20092789 A | 01 February 2011 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510079087
- CN 201510097280
- CN 201510303334
- CN 201510516164
- CN 201510088837
- CN 201510428931
- CN 201510737743
- CN 201510990222
- CN 201610046769